(19) Europäisches Patentamt
European Patent Office
Office européen des brevets

(11) EP 4 001 322 B1

(12) EUROPEAN PATENT SPECIFICATION

(45) Date of publication and mention of the grant of the patent:
**24.12.2025 Bulletin 2025/52**

(21) Application number: **20840402.0**

(22) Date of filing: **16.07.2020**

(51) International Patent Classification (IPC):
***C08F 14/18*** (2006.01) ***C08F 14/22*** (2006.01)
***C08F 4/40*** (2006.01) ***C08F 214/22*** (2006.01)
***C08F 2/24*** (2006.01) ***C08K 5/00*** (2006.01)
*C08F 214/18* (2006.01) *C08F 216/14* (2006.01)
*C08K 5/14* (2006.01) *C08K 5/34* (2006.01)

(52) Cooperative Patent Classification (CPC):
(C-Sets available)
**C08F 2/26; C08F 2/24; C08F 2/38; C08F 4/40; C08F 14/22; C08F 214/22; C08K 5/0025;**
C08F 14/18; C08F 214/182; C08F 216/1416; C08K 3/04; C08K 5/14; C08K 5/34924 (Cont.)

(86) International application number:
**PCT/JP2020/027711**

(87) International publication number:
**WO 2021/010443 (21.01.2021 Gazette 2021/03)**

# (54) METHOD FOR PRODUCING FLUORINE-CONTAINING ELASTOMER, AND COMPOSITION

VERFAHREN ZUR HERSTELLUNG EINES FLUORHALTIGEN ELASTOMERS UND ZUSAMMENSETZUNG

PROCÉDÉ DE PRODUCTION D'UN ÉLASTOMÈRE CONTENANT DU FLUOR, ET COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2019 JP 2019131327**
**11.09.2019 JP 2019165537**

(43) Date of publication of application:
**25.05.2022 Bulletin 2022/21**

(73) Proprietor: **Daikin Industries, Ltd.**
**Osaka-shi, Osaka 530-0001 (JP)**

(72) Inventors:
- **TAMAI, Rina**
**Osaka-shi, Osaka 530-8323 (JP)**
- **MORIKAWA, Tatsuya**
**Osaka-shi, Osaka 530-8323 (JP)**
- **KAWASAKI, Kazuyoshi**
**Osaka-shi, Osaka 530-8323 (JP)**
- **IRIE, Masaki**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 039 706**
**EP-A1- 3 031 856**
**WO-A1-03/002660**
**WO-A1-2008/001895**
**WO-A1-2019/031617**
**WO-A1-2020/071503**
**JP-A- 2007 045 970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 001 322 B1

(52) Cooperative Patent Classification (CPC): (Cont.)

C-Sets
**C08F 14/22, C08F 2/26;**
**C08F 14/22, C08F 2/38;**
**C08F 214/22, C08F 214/26, C08F 214/28;**
**C08K 5/0025, C08L 27/16**

## Description

TECHNICAL FIELD

The present disclosure relates to a method for producing a fluorine-containing elastomer, and to a composition.

BACKGROUND ART

Fluorine-containing elastomers exhibit excellent chemical resistance, solvent resistance, and heat resistance, and are thus used in a broad range of industrial fields such as automobile industry, semiconductor industry, and chemical industry as raw materials of e.g. sealing materials that are used under severe conditions.

Such fluorine-containing elastomers are produced by emulsion polymerization of fluorine-containing monomers.

For example, WO 2008/001895 discloses a method for producing a fluorine-containing elastomer, comprising carrying out an emulsion polymerization of a fluorine-containing monomer by adding a water-soluble radical polymerization initiator, wherein the emulsion polymerization is carried out in the presence of (1) a compound having a functional group capable of reaction by radical polymerization and a hydrophilic group and (2) a fluorine-containing compound having a hydrophilic group and a fluorocarbon group in which 1-6 carbon atoms having a directly bonded fluorine atom are continuously bonded.

JP-A-2005-320499 discloses a method for producing a fluorine-containing elastomer polymer, comprising polymerizing a fluorine-containing monomer in an aqueous medium in the presence of a fluorovinyl group-containing emulsifier and (b1) a cure site monomer and/or (b2) a saturated aliphatic compound having a bromine atom and/or an iodine atom, wherein the fluorovinyl group-containing emulsifier is composed of a compound having a radically polymerizable unsaturated bond and a hydrophilic group within the molecule.

JP-A-2005-320500 discloses a method for producing a fluorine-containing elastomer polymer, comprising polymerizing a fluorine-containing monomer in an aqueous medium in the presence of a fluorovinyl group-containing emulsifier and a chain transfer agent, wherein the fluorovinyl group-containing emulsifier is composed of a compound having a radically polymerizable unsaturated bond and a hydrophilic group within the molecule.

WO 2012/111770 discloses a method for producing a latex of a fluorine-containing copolymer, comprising carrying out an emulsion polymerization of a monomer mixture containing tetrafluoroethylene and propylene in the presence of an aqueous medium, an anionic emulsifier, and a thermally decomposable radical polymerization initiator at a polymerization temperature ranging 50-100°C, wherein the aqueous medium is composed solely of water or composed of water and a water-soluble organic solvent, the content of the water-soluble organic solvent is less than 1 part by mass based on 100 parts by mass (pbm) of water, and the amount of the anionic emulsifier used is 1.5-5.0 pbm based on 100 pbm of the fluorine-containing copolymer to be produced.

EP-A-3 031 856 relates to a crosslinkable fluorinated elastomer composition comprising a fluorinated elastomer (e.g. a TFE/PAVE copolymer) and an aromatic compound having at least two crosslinkable unsaturated double bonds.

SUMMARY OF THE INVENTION

PROBLEM TO BE SOLVED BY THE INVENTION

An object of the present disclosure is to provide a method for producing a fluorine-containing elastomer using a hydrocarbon surfactant, the method being capable of producing the desired amount of the fluorine-containing elastomer in a short period of time while suppressing adhesion of a polymer to a polymerization tank despite the use of the hydrocarbon surfactant.

MEANS FOR SOLVING THE PROBLEM

The present disclosure provides a method for producing a fluorine-containing elastomer, comprising emulsion polymerizing a fluorine-containing monomer in an aqueous medium in the presence of

- a fluorine-containing compound (A) containing (i) a functional group capable of reaction by radical polymerization, preferably a group containing a radically polymerizable unsaturated bond, and (ii) a hydrophilic group, and
- 3-200 ppm, based on the aqueous medium, of a hydrocarbon surfactant (B), and in the absence of a fluorine-containing surfactant.

The present disclosure also provides a composition comprising

- a fluorine-containing elastomer containing a structural unit derived from a fluorine-containing compound (A) containing a functional group capable of reaction by radical polymerization and a hydrophilic group, wherein the fluorine-containing elastomer contains a $-CH_2I$ structure, preferably a $-CF_2CH_2I$ structure, and more preferably a $-CF_2CH_2I$ structure in an amount of 0.05-1.50 mol% based on 100 mol% of the $-CH_2$-structure; and
- 1-700 ppm, based on the fluorine-containing elastomer, of a hydrocarbon surfactant (B),

and which contains ≤ 10 ppm, based on the fluorine-containing elastomer, of a fluorine-containing surfactant, measured by the method defined in the description.

Preferred embodiments of the invention are as defined in the appended dependent claims and/or in the following detailed description.

EFFECTS OF INVENTION

According to the present disclosure, provided is a method for producing a fluorine-containing elastomer using a hydrocarbon surfactant, the method being capable of producing the desired amount of the fluorine-containing elastomer in a short period of time while suppressing adhesion of a polymer to a polymerization tank despite the use of the hydrocarbon surfactant.

DESCRIPTION OF EMBODIMENTS

Before specifically describing the production method of the present disclosure, some terms used herein will now be defined or described.

Herein, unless specified otherwise, the "organic group" means a group containing one or more carbon atoms or a group formed by removing one hydrogen atom from an organic compound.

Examples of the "organic group" include alkyl, alkenyl, alkynyl, cycloalkyl, cycloalkenyl, cycloalkadienyl, aryl, aralkyl, a non-aromatic heterocyclic group, and heteroaryl, each optionally having one or more substituents,

cyano,
formyl,

RaO-,

RaCO-,

$RaSO_2$-,

RaCOO-,

RaNRaCO-,

RaCONRa-,

RaOCO-,

and

$RaOSO_2$-

wherein Ra is independently alkyl, alkenyl, alkynyl, cycloalkyl, cycloalkenyl, cycloalkadienyl, aryl, aralkyl, a non-aromatic heterocyclic group or heteroaryl , each optionally having one or more substituents.

The organic group is preferably alkyl optionally having one or more substituents.

Herein, unless specified otherwise, the "substituent" means a group that can be substituted. Examples of the "substituent" include an aliphatic group, an aromatic group, a heterocyclic group, acyl, acyloxy, acylamino, aliphatic oxy, aromatic oxy, heterocyclic oxy, aliphatic oxycarbonyl, aromatic oxycarbonyl, heterocyclic oxycarbonyl, carbamoyl, aliphatic sulfonyl, aromatic sulfonyl, heterocyclic sulfonyl, aliphatic sulfonyloxy, aromatic sulfonyloxy, heterocyclic sulfonyloxy, sulfamoyl, aliphatic sulfonamide, aromatic sulfonamide, heterocyclic sulfonamide, amino, aliphatic amino, aromatic amino, heterocyclic amino, aliphatic oxycarbonylamino, aromatic oxycarbonylamino, heterocyclic oxycarbonylamino, aliphatic sulfinyl, aromatic sulfinyl, aliphatic thio, aromatic thio, hydroxy, cyano, sulfo, carboxy, aliphatic oxyamino, aromatic oxyamino, carbamoylamino, sulfamoylamino, halogen atom, sulfamoylcarbamoyl, carbamoylsulfamoyl, dialiphatic oxyphosphinyl, and diaromatic oxyphosphinyl.

The aliphatic group may be saturated or unsaturated, and may have a group selected from e.g. hydroxyl, aliphatic oxy, carbamoyl, aliphatic oxycarbonyl, aliphatic thio, amino, aliphatic amino, acylamino, or carbamoylamino. Examples of the aliphatic group include alkyl s having 1-8 and preferably 1-4 carbon atoms in total, such as methyl, ethyl, vinyl, cyclohexyl, and carbamoylmethyl.

The aromatic group may have, for example, a group selected from nitro, halogen, aliphatic oxy, carbamoyl, aliphatic oxycarbonyl, aliphatic thio, amino, aliphatic amino, acylamino, or carbamoylamino. Examples of the aromatic group include aryl having 6-12 carbon atoms and preferably 6-10 carbon atoms in total, such as phenyl, 4-nitrophenyl, 4-acetylaminophenyl, and 4-methanesulfonylphenyl.

The heterocyclic group may have a group selected from e.g. halogen, hydroxy, aliphatic oxy, carbamoyl, aliphatic oxycarbonyl, aliphatic thio, amino, aliphatic amino, acylamino, or carbamoylamino. Examples of the heterocyclic group include 5 to 6-membered hetero rings having 2-12 and preferably 2-10 carbon atoms in total, such as 2-tetrahydrofuryl and 2-pyrimidyl.

The acyl group may have a group selected from e.g. aliphatic carbonyl, arylcarbonyl, heterocyclic carbonyl, hydroxy, halogen, an aromatic group, aliphatic oxy, carbamoyl, aliphatic oxycarbonyl, aliphatic thio, amino, aliphatic amino, acylamino, or carbamoylamino. Examples of the acyl group include acyl having 2-8 and preferably 2-4 carbon atoms in total, such as acetyl, propanoyl, benzoyl, and 3-pyridinecarbonyl.

The acylamino group may have e.g. an aliphatic, aromatic or heterocyclic group, and may have, for example, a group selected from acetylamino, benzoylamino, 2-pyridinecarbonylamino or propanoylamino group. Examples of the acylamino group include acylamino having 2-12 and preferably 2-8 carbon atoms in total and alkylcarbonylamino having 2-8 carbon atoms in total, such as acetylamino, benzoylamino, 2-pyridinecarbonylamino, and propanoylamino.

The aliphatic oxycarbonyl group may be saturated or unsaturated, and may have a group selected from e.g. hydroxyl, aliphatic oxy, carbamoyl, aliphatic oxycarbonyl, aliphatic thio, amino, aliphatic amino, acylamino, or carbamoylamino. Examples of the aliphatic oxycarbonyl group include alkoxycarbonyl having 2-8 and preferably 2-4 carbon atoms in total, such as methoxycarbonyl, ethoxycarbonyl, and (t)-butoxycarbonyl.

The carbamoyl group may have e.g. an aliphatic, aromatic or heterocyclic group. Examples of the carbamoyl group include an unsubstituted carbamoyl and alkylcarbamoyl having 2-9 carbon atoms in total, and preferably unsubstituted carbamoyl and alkylcarbamoyl having 2-5 carbon atoms in total, such as N-methylcarbamoyl, N,N-dimethylcarbamoyl group, and N-phenylcarbamoyl.

The aliphatic sulfonyl group may be saturated or unsaturated, and may have a group selected from e.g. hydroxyl, an aromatic group, aliphatic oxy, carbamoyl, aliphatic oxycarbonyl, aliphatic thio, amino, aliphatic amino, acylamino, or carbamoylamino. Examples of the aliphatic sulfonyl include alkylsulfonyl having 1-6 carbon atoms in total and preferably 1-4 carbon atoms in total, such methanesulfonyl.

The aromatic sulfonyl group may have a group selected from e.g. hydroxy, an aliphatic group, aliphatic oxy, carbamoyl, aliphatic oxycarbonyl, aliphatic thio, amino, aliphatic amino, acylamino or a carbamoylamino. Examples of the aromatic sulfonyl include arylsulfonyl having 6-10 carbon atoms in total, such as benzenesulfonyl.

The amino group may have e.g. an aliphatic, aromatic or heterocyclic group.

The acylamino group may have, for example, a group selected from acetyl amino, benzoyl amino, 2-pyridinecarbonylamino, or propanoylamino. Examples of the acylamino group include acylamino having 2-12 carbon atoms in total and preferably 2-8 carbon atoms in total, and more preferably alkylcarbonylamino having 2-8 carbon atoms in total, such as acetylamino, benzoylamino, 2-pyridinecarbonylamino, and propanoylamino.

The aliphatic, the aromatic and the heterocyclic sulfonamide group may be, for example, methanesulfonamide, benzenesulfonamide, and 2-pyridinesulfonamide.

The sulfamoyl group may have e.g. an aliphatic, aromaticor heterocyclic group. Examples of the sulfamoyl group include sulfamoyl, alkylsulfamoyl having 1-9 carbon atoms in total, dialkylsulfamoyl having 2-10 carbon atoms in total, arylsulfamoyl having 7-13 carbon atoms in total, and heterocyclic sulfamoyl having 2-12 carbon atoms in total, and more preferably sulfamoyl, alkylsulfamoyl having 1-7 carbon atoms in total, dialkylsulfamoyl having 3-6 carbon atoms in total, arylsulfamoyl having 6-11 carbon atoms in total, and heterocyclic sulfamoyl having 2-10 carbon atoms in total, such as sulfamoyl, methylsulfamoyl, N,N-dimethylsulfamoyl, phenylsulfamoyl, and 4-pyridinesulfamoyl.

The aliphatic oxy group may be saturated or unsaturated, and may have a group selected from e.g. methoxy, ethoxy, i-propyloxy, cyclohexyloxy, ormethoxyethoxy. Examples of the aliphatic oxy group include alkoxy having 1-8 and preferably 1-6 carbon atoms in total, such as methoxy, ethoxy, i-propyloxy, cyclohexyloxy, and methoxyethoxy.

The aromatic and the heterocyclic amino group may have a group selected from an aliphatic group, aliphatic oxy, halogen, carbamoyl, a heterocyclic group having a ring condensed with the aryl group, or aliphatic oxycarbonyl, and preferably an aliphatic group having 1-4 carbon atoms in total, aliphatic oxy having 1-4 carbon atoms in total, halogen, carbamoyl having 1-4 carbon atoms in total, nitro, or aliphatic oxycarbonyl having 2-4 carbon atoms in total.

The aliphatic thio group may be saturated or unsaturated, and examples include alkylthio having 1-8 carbon atoms in total and more preferably 1-6 carbon atoms in total, such as methylthio, ethylthio, carbamoylmethylthio, and t-butylthio.

The carbamoylamino group may have e.g. an aliphatic group, an aryl group, or a heterocyclic group. Examples of the carbamoylamino group include carbamoylamino, alkylcarbamoylamino having 2-9 carbon atoms in total, dialkylcarbamoylamino having 3-10 carbon atoms in total, arylcarbamoylamino having 7-13 carbon atoms in total, and heterocyclic carbamoylamino having 3-12 carbon atoms in total, and preferably carbamoylamino, alkylcarbamoylamino having 2-7 carbon atoms in total, dialkylcarbamoylamino having 3-6 carbon atoms in total, arylcarbamoylamino having 7-11 carbon atoms in total, and heterocyclic carbamoylamino having 3-10 carbon atoms in total, such as carbamoylamino, methylcarbamoylamino, N,N-dimethylcarbamoylamino, phenylcarbamoylamino, a 4-pyridinecarbamoylamino.

Below, the production method of the present disclosure will now be described in detail.

Conventionally, a fluorine-containing surfactant has been used in emulsion polymerization of a fluorine-containing elastomer, but fluorine-containing surfactants are unlikely decomposed in the natural environment, so research is also being conducted on emulsion polymerization using a hydrocarbon surfactant that is readily decomposed in the natural environment. However, there is room for improvement in polymerization using a hydrocarbon surfactant with respect to the large amount of polymer deposits on a polymerization tank and a long reaction time.

The production method of the present disclosure is based on the finding that, by using a hydrocarbon surfactant and a specific fluorine-containing compound in combination, the desired amount of a fluorine-containing elastomer can be produced in a short period of time with less polymer deposits on a polymerization tank even when a hydrocarbon surfactant that is readily decomposed in the natural environment is used, and is accomplished accordingly.

The method for producing a fluorine-containing elastomer of the present disclosure comprises carrying out an emulsion polymerization of a fluorine-containing monomer in an aqueous medium in the presence of (A) a fluorine-containing compound containing a functional group capable of reaction by radical polymerization and a hydrophilic group and (B) a hydrocarbon surfactant to provide a fluorine-containing elastomer.

Having the above feature, the production method of the present disclosure can result in less polymer deposits on a polymerization tank and, moreover, a short reaction time despite the use of a hydrocarbon surfactant. The number of fluorine-containing elastomer particles in an aqueous dispersion of the fluorine-containing elastomer obtained by polymerization can be increased, and the stability of the aqueous dispersion can be improved.

Despite the use of a hydrocarbon surfactant, a fluorine-containing elastomer having excellent vulcanization properties and a fluorine-containing elastomer molded article (a crosslinked molded article) having excellent ordinary-state properties can be obtained.

The fluorine-containing elastomer obtained by the production method of the present disclosure is not limited, and examples include a copolymer of two or more fluorine-containing monomers and a copolymer of a fluorine-containing monomer and a fluorine-free monomer.

Herein, the fluorine-containing elastomer is an amorphous fluoropolymer. Being "amorphous" means that the size of a melting peak ($\Delta H$) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluorine-containing elastomer exhibits elastomeric characteristics by being crosslinked. Elastomeric characteristics mean such characteristics that the polymer can be stretched, and retain its original length when the force required to stretch the polymer is no longer applied.

Examples of the fluorine-containing monomer include fluorine-containing monomers such as vinylidene fluoride (VdF), tetrafluoroethylene (TFE), hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing vinyl fluoride ether, and fluorine-containing monomers (2) of formula (2):

$$CHX^1=CX^2Rf \qquad (2)$$

wherein one of $X^1$ and $X^2$ is H, the other is F, and Rf is a linear or branched fluoroalkyl group having 1-12 carbon atoms.

PAVE is more preferably perfluoro(methyl vinyl ether) (PMVE), perfluoro(ethyl vinyl ether) (PEVE), or perfluoro(propyl vinyl ether) (PPVE), and particularly preferably PMVE.

PAVE may be perfluorovinyl ether of the formula $CF_2=CFOCF_2ORf^c$ wherein $Rf^c$ is a linear or branched perfluoroalkyl group having 1-6 carbon atoms, a cyclic perfluoroalkyl group having 5-6 carbon atoms, or a linear or branched perfluorooxyalkyl group having 1-3 oxygen atoms and 2-6 carbon atoms. For example, $CF_2=CFOCF_2OCF_3$, $CF_2=CFOCF_2OCF_2CF_3$, or $CF_2=CFOCF_2OCF_2CF_2OCF_3$ is preferably used.

The fluorine-containing monomer of formula (2) is preferably a monomer in which Rf is a linear fluoroalkyl group, and is more preferably a monomer in which Rf is a linear perfluoroalkyl group. Rf preferably has 1-6 carbon atoms.

Examples of the fluorine-containing monomer of formula (2) include $CH_2=CFCF_3$, $CH_2=CFCF_2CF_3$,

$CH_2=CFCF_2CF_2CF_3$, $CH_2=CFCF_2CF_2CF_2CF_3$, and $CHF=CHCF_3$ (1,3,3,3-tetrafluoropropene), and in particular 2,3,3,3-tetrafluoropropylene represented by $CH_2=CFCF_3$ is preferable.

Examples of the fluorine-free monomer include α-olefin monomers having 2-10 carbon atoms, such as ethylene, propylene, butene, and pentene, and alkyl vinyl ethers having an alkyl group having 1-20 carbon atoms, such as methyl vinyl ether, ethyl vinyl ether, propyl vinyl ether, cyclohexyl vinyl ether, hydroxybutyl vinyl ether, and butyl vinyl ether, and one or a combination of two or more of these monomers and compounds can be used.

The fluorine-containing elastomer is preferably a fluorine-containing elastomer containing $-CH_2-$ in the main chain. Examples of the fluorine-containing elastomer containing $-CH_2-$ in the main chain include fluorine-containing elastomers described below. The fluorine-containing elastomer containing $-CH_2-$ in the main chain is not limited as long as it contains a chemical structure represented by $-CH_2-$, examples include elastomers containing a structure such as $-CH_2-CF_2-$, $-CH_2-CH(CH_3)-$, or $-CH_2-CH_2-$, and these can be introduced into the main chain of a fluorine-containing elastomer by polymerizing, for example, vinylidene fluoride, propylene, and ethylene.

The fluorine-containing elastomer preferably contains a structural unit derived from at least one monomer selected from, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) of formula (1):

$$CF_2=CF-Rf^a \qquad (1)$$

wherein $Rf^a$ is $-CF_3$ or $-ORf^b$ ($Rf^b$ is a perfluoroalkyl group having 1-5 carbon atoms).

More specific examples of the fluorine-containing elastomer include a VdF-based fluorine-containing elastomer, a TFE/propylene (Pr)-based fluorine-containing elastomer, a TFE/Pr/VdF-based fluorine-containing elastomer, an ethylene (Et)/HFP-based fluorine-containing elastomer, an Et/HFP/VdF-based fluorine-containing elastomer, an Et/HFP/TFE-based fluorine-containing elastomer, and an Et/TFE/PAVE-based fluorine-containing elastomer. Among these, a VdF-based fluorine-containing elastomer, a TFE/Pr-based fluorine-containing elastomer, a TFE/Pr/VdF-based fluorine-containing elastomer, and an Et/TFE/PAVE-based fluorine-containing elastomer are more suitable in terms of good heat aging resistance and oil resistance.

The VdF-based fluorine-containing elastomer is a fluorine-containing elastomer having a VdF unit. In the VdF-based fluorine-containing elastomer, the VdF unit is preferably 20 mol% or more and 90 mol% or less, more preferably 40 mol% or more and 85 mol% or less, even more preferably 45 mol% or more and 80 mol% or less, and particularly preferably 50 mol% or more and 80 mol% or less based on the total number of moles of the VdF unit and monomer units derived from other monomers.

Other monomers in the VdF-based fluorine-containing elastomer are not limited as long as they are copolymerizable with VdF, and, for example, the above-described fluorine-containing monomers are usable.

The VdF-based fluorine-containing elastomer is preferably at least one copolymer selected from a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF/a fluorine-containing monomer represented by formula (2). The elastomer more preferably has at least one monomer selected from TFE, HFP, and PAVE as another monomer other than VdF.

Among these, at least one copolymer selected from a VdF/HFP copolymer, a VdF/TFE/HFP copolymer, a copolymer of VdF/a fluorine-containing monomer represented by formula (2), a VdF/PAVE copolymer, a VdF/TFE/PAVE copolymer, a VdF/HFP/PAVE copolymer, and a VdF/HFP/TFE/PAVE copolymer is preferable, and at least one copolymer selected from a VdF/HFP copolymer, a VdF/HFP/TFE copolymer, a copolymer of VdF/a fluorine-containing monomer of formula (2), and a VdF/PAVE copolymer is more preferable.

The VdF/PAVE copolymer preferably has a VdF/PAVE composition of (65-90)/(35-10) (mol%).

In one preferable form, the VdF/PAVE composition is (50-78)/(50-22) (mol%).

The VdF/TFE/PAVE copolymer preferably has a VdF/TFE/PAVE composition of (40-80)/(3-40)/(15-35) (mol%).

The VdF/HFP/PAVE copolymer preferably has a VdF/HFP/PAVE composition of (65-90) /(3-25)/(3-25) (mol%).

The VdF/HFP/TFE/PAVE copolymer preferably has a VdF/HFP/TFE/PAVE composition of (40-90)/(0-25)/(0-40)/(3-35) (mol%), and more preferably (40-80)/(3-25)/(3-40)/(3-25) (mol%).

The copolymer of VdF/a fluorine-containing monomer (2) of formula (2) preferably has a VdF/fluorine-containing monomer (2) unit of (85-20)/(15-80) (mol%) and an other-monomer unit other than VdF and the fluorine-containing monomer (2) of 0-50 mol% of all monomer units, and the mol% ratio of the VdF/fluorine-containing monomer (2) unit is more preferably (80-20)/(20-80). It is also one of the preferable forms that the composition of the VdF/fluorine-containing monomer (2) unit is (78-50)/(22-50) (mol%).

A copolymer is also preferable in which the VdF/fluorine-containing monomer (2) unit is (85-50)/(15-50) (mol%), and the other-monomer unit other than VdF and the fluorine-containing monomer (2) is 1-50 mol% of all monomer units. Other monomers other than VdF and the fluorine-containing monomer (2) are preferably monomers exemplified as other

monomers with respect to the VdF-based fluorine-containing elastomer, such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, and a monomer that gives a crosslinkable group, and, in particular, PMVE, CTFE, HFP, and TFE are more preferable.

The TFE/Pr-based fluorine-containing elastomer refers to a fluorine-containing copolymer composed of 45-70 mol% TEF and 55-30 mol% Pr. In addition to these two components, a specific third component may be contained.

The specific third component contained may be, for example, a fluorine-containing monomer such as fluorine-containing olefin other than TFE (such as VdF, HFP, CTFE, or perfluoro(butylethylene)), fluorine-containing vinyl ether (perfluoro(propyl vinyl ether), or perfluoro(methyl vinyl ether); or a hydrocarbon-based monomer such as $\alpha$-olefin (such as ethylene or 1-butene), vinyl ether (such as ethyl vinyl ether, butyl vinyl ether, or hydroxybutyl vinyl ether), or vinyl ester (such as vinyl acetate, vinyl benzoate, vinyl crotonate, or vinyl methacrylate). As for the specific third component, one or a combination of two or more may be used.

The TFE/Pr-based fluorine-containing elastomer preferably contains VdF, and as for the TFE/Pr-based fluorine-containing elastomer, an elastomer composed of TFE, Pr, and VdF is referred to as a TFE/Pr/VdF-based fluorine-containing elastomer.

The TFE/Pr/VdF-based fluorine-containing elastomer may further contain the above specific third component other than VdF. As for the specific third component, one or a combination of two or more may be used.

The total content of the third component in the TFE/Pr-based fluorine-containing elastomer is preferably 35 mol% or less, more preferably 33 mol% or less, and even more preferably 31 mol% or less.

The Et/HFP copolymer preferably has an Et/HFP composition of (35-80)/(65-20) (mol%), and more preferably (40-75)/(60-25) (mol%).

The Et/HFP/TFE copolymer preferably has an Et/HFP/TFE composition of (35-75)/(25-50)/(0-15) (mol%), and more preferably (45-75)/(25-45)/(0-10) (mol%).

The Et/TFE/PAVE copolymer preferably has an Et/TFE/PAVE composition of (10-40)/(32-60)/(20-40) (mol%), and more preferably (20-40)/(40-50)/(20-30) (mol%). PAVE is preferably PMVE.

The fluorine-containing elastomer preferably contains a VdF unit, a VdF/HFP copolymer and a VdF/HFP/TFE copolymer are particularly preferable, and a fluorine-containing elastomer having, for example, a VdF/HFP/TFE composition of (32-85)/(10-34)/(0-34) (mol%) is particularly preferable. The VdF/HFP/TFE composition is more preferably (32-85)/(15-34)/ (0-34) (mol%), and even more preferably (47-81)/(17-29)/(0-26) (mol%).

For example, the VdF/HFP copolymer preferably has a VdF/HFP composition of (45-85)/(15-55) (mol%), more preferably (50-83)/(17-50) (mol%), even more preferably (55-81)/(19-45) (mol%), and yet more preferably (60-80)/(20-40) (mol%).

The VdF/HFP/TFE copolymer preferably has a VdF/HFP/TFE composition of (32-80)/(10-34)/(4-34) (mol%).

In the fluorine-containing elastomer, the structural unit derived from the fluorine-containing compound (A) is preferably 0.001-3.0 mol%, more preferably 0.005-2.0 mol%, and even more preferably 0.01-1.5 mol% of all monomer units.

The content of the structural unit derived from the fluorine-containing compound (A) can be measured by calculation based on a measured value obtained by $^{19}$F-NMR, $^{1}$H-NMR, or elemental analysis.

What is exemplified with respect to the fluorine-containing elastomer is the configuration of main monomers, and a copolymer with a monomer that gives a crosslinkable group may be used as well. The monomer that gives a crosslinkable group is a monomer capable of introducing a crosslinkable group suitable according to the production method and the crosslinking system, and examples include known polymerizable compounds containing a crosslinkable group such as an iodine atom, a bromine atom, a carbon-carbon double bond, a cyano group, a carboxyl group, a hydroxyl group, an amino group, or an ester group.

A preferable monomer that gives a crosslinkable group may be a compound of formula (3):

$$CY^1_2=CY^2R_f^2X^1 \qquad (3)$$

wherein $Y^1$ and $Y^2$ are each independently a fluorine atom, a hydrogen atom, or $-CH_3$; $R_f^2$ is a linear or branched fluorine-containing alkylene group that may have one or more ether-bonding oxygen atoms, that may have an aromatic ring, and in which some or all hydrogen atoms are replaced with fluorine atoms; and $X^1$ is an iodine atom or a bromine atom.

Specific examples of the monomer that gives a crosslinkable group include iodine or bromine-containing monomers of formula (4):

$$CY^1_2=CY^2R_f^3CHR^1\text{-}X^1 \qquad (4)$$

(wherein, $Y^1$, $Y^2$, and $X^1$ are the same as above, $R_f^3$ is a linear or branched fluorine-containing alkylene group that may have one or more ether-bonding oxygen atoms and in which some or all hydrogen atoms are replaced with fluorine atoms, or that is to say, a linear or branched fluorine-containing alkylene group in which some or all hydrogen atoms

are replaced with fluorine atoms, a linear or branched fluorine-containing oxyalkylene group in which some or all hydrogen atoms are replaced with fluorine atoms, or a linear or branched fluorine-containing polyoxyalkylene group in which some or all hydrogen atoms are replaced with fluorine atoms; and $R^1$ is a hydrogen atom or a methyl group), and iodine or bromine-containing monomers of formulae (5)-(22):

$$CY^4_2=CY^4(CF_2)_n-X^1 \quad (5)$$

(wherein $Y^4$, which are the same as or different from each other, are a hydrogen atom or a fluorine atom, and n is an integer of 1-8),

$$CF_2=CFCF_2R_f^4-X^1 \quad (6)$$

(wherein $R^4$ is- $(OCF_2)_n$- or $-(OCF(CF_3))_n-$, and n is an integer of 0-5),

$$CF_2=CFCF_2(OCF(CF_3)CF_2)_m(OCH_2CF_2CF_2)_nOCH_2CF_2-X^1 \quad (7)$$

(wherein m is an integer of 0-5, and n is an integer of 0-5),

$$CF_2=CFCF_2(OCH_2CF_2CF_2)_m(OCF(CF_3)CF_2)_nOCF(CF_3)-X^1 \quad (8)$$

(wherein m is an integer of 0-5, and n is an integer of 0-5),

$$CF_2=CF(OCF_2CF(CF_3))_mO(CF_2)_n-X^1 \quad (9)$$

(wherein m is an integer of 0-5, and n is an integer of 1-8),

$$CF_2=CF(OCF_2CF(CF_3))_m-X^1 \quad (10)$$

(wherein m is an integer of 1-5),

$$CF_2=CFOCF_2(CF(CF_3)OCF_2)_nCF(-X^1)CF_3 \quad (11)$$

(wherein n is an integer of 1-4),

$$CF_2=CFO(CF_2)_nOCF(CF_3)-X^1 \quad (12)$$

(wherein n is an integer of 2-5),

$$CF_2=CFO(CF_2)_n-(C_6H_4)-X^1 \quad (13)$$

(wherein n is an integer of 1-6),

$$CF_2=CF(OCF_2CF(CF_3))_nOCF_2CF(CF_3)-X^1 \quad (14)$$

(wherein n is an integer of 1-2),

$$CH_2=CFCF_2O(CF(CF_3)CF_2O)CF(CF_3)-X^1 \quad (15)$$

(wherein n is an integer of 0-5),

$$CF_2=CFO(CF_2CF(CF_3)O)_m(CF_2)_n-X^1 \quad (16)$$

(wherein m is an integer of 0-5, and n is an integer of 1-3),

$$CH_2=CFCF_2OCF(CF_3)OCF(CF_3)-X^1 \quad (17)$$

$$CH_2=CFCF_2OCH_2CF_2-X^1 \quad (18)$$

$$CF_2=CFO(CF_2CF(CF_3)O)_mCF_2CF(CF_3)\text{-}X^1 \quad (19)$$

(wherein m is an integer of 0 or more),

$$CF_2=CFOCF(CF_3)CF_2O(CF_2)_n\text{-}X^1 \quad (20)$$

(wherein n is an integer of 1 or more),

$$CF_2=CFOCF_2OCF_2CF(CF_3)OCF_2\text{-}X^1 \quad (21)$$

$$CH_2=CH\text{-}(CF_2)_nX^1 \quad (22)$$

(wherein n is an integer of 2-8),
(in general formulae (5)-(22), $X^1$ is the same as above), and
one of these can be used singly, or these can be used in any combination.

The iodine or bromine-containing monomer of formula (4) is preferably iodine-containing fluorinated vinyl ether of formula (23):

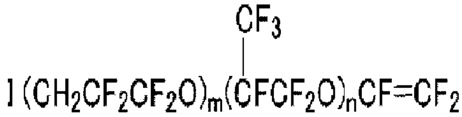 (23)

wherein m is an integer of 1-5, and n is an integer of 0-3, more specifically

$ICH_2CF_2CF_2OCF=CF_2$、$I(CH_2CF_2CF_2O)_2CF=CF_2$、
$I(CH_2CF_2CF_2O)_3CF=CF_2$、

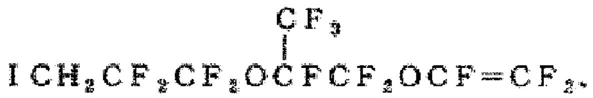

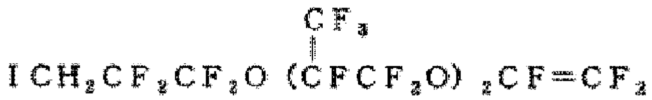

and among these, $ICH_2CF_2CF_2OCF=CF_2$ is preferable.

More specifically, the iodine or bromine-containing monomer of formula (5) is preferably $ICF_2CF_2CF=CH_2$ or $I(CF_2CF_2)_2CF=CH_2$.

More specifically, the iodine or bromine-containing monomer of formula (9) is preferably $I(CF_2CF_2)_2OCF=CF_2$.

More specifically, the iodine or bromine-containing monomer of formula (22) is preferably $CH_2=CHCF_2CF_2I$ or $I(CF_2CF_2)_2CH=CH_2$.

Also, the monomer that gives a crosslinkable group is preferably a bisolefin compound of the formula: $R^2R^3C=CR^4\text{-}Z\text{-}CR^5=CR^6R^7$ wherein $R^2$, $R^3$, $R^4$, $R^5$, $R^6$, and $R^7$ are the same or different and are each independently H or an alkyl group having 1-5 carbon atoms; and Z is a linear or branched alkylene or cycloalkylene group having 1-18 carbon atoms that may contain an oxygen atom and that is preferably at least partially fluorinated, or a (per)fluoropolyoxyalkylene group. Herein, the "(per)fluoropolyoxyalkylene group" means "a fluoropolyoxyalkylene group or a perfluoropolyoxyalkylene group".

Z is preferably a (per)fluoroalkylene group having 4-12 carbon atoms, and $R^2$, $R^3$, $R^4$, $R^5$, $R^6$, and $R^7$ are preferably hydrogen atoms.

Z when being a (per)fluoropolyoxyalkylene group is preferably a (per)fluoropolyoxyalkylene group of the formula:

$$\text{-}(Q)_p\text{-}CF_2O\text{-}(CF_2CF_2O)_m\text{-}(CF_2O)_n\text{-}CF_2\text{-}(Q)_p\text{-}$$

wherein Q is an alkylene group having 1-10 carbon atoms or an oxyalkylene group having 2-10 carbon atoms, p is 0 or 1, and m and n are integers such that the m/n ratio is 0.2-5 and that the molecular weight of the (per)fluoropolyoxyalkylene group is in a range of 500-10,000 and preferably 1,000-4,000. In this formula, Q is preferably selected from - $CH_2OCH_2$-

and $-CH_2O(CH_2CH_2O)_sCH_2-$ (s = 1-3) .

Preferable bisolefin is

$CH_2=CH-(CF_2)_2-CH=CH_2$,

$CH_2=CH-(CF_2)_4-CH=CH_2$,

$CH_2=CH-(CF_2)_6-CH=CH_2$,

and

formula: $CH_2=CH-Z^1-CH=CH_2$

(wherein $Z^1$ is $-CH_2OCH_2-CF_2O-(CF_2CF_2O)_m-(CF_2O)_n-CF_2-CH_2OCH_2-$ (m/n is 0.5), and the molecular weight is preferably 2,000.

In particular, 3,3,4,4,5,5,6,6,7,7,8,8-dodecafluoro-1,9-decadiene represented by $CH_2=CH-(CF_2)_6-CH=CH_2$ is preferable.

The number average molecular weight Mn of the fluorine-containing elastomer is preferably 1,000-1,000,000, more preferably 10,000-500,000, and particularly preferably 20,000-300,000.

The fluorine-containing elastomer preferably has a fluorine content of 50 mass% or more, more preferably 55 mass% or more, and even more preferably 60 mass% or more. The upper limit of the fluorine content is preferably 75 mass% or less, and more preferably 73 mass% or less.

The fluorine content is calculated based on a measured value obtained by $^{19}F$-NMR, $^{1}H$-NMR, or elemental analysis.

The fluorine-containing elastomer preferably has a Mooney viscosity at 100°C of 130 or less. The Mooney viscosity is more preferably 110 or less, and even more preferably 90 or less. Also, the Mooney viscosity is more preferably 10 or more, and even more preferably 20 or more. Here, the Mooney viscosity is a value measured in accordance with JIS K 6300-1.2013.

The fluorine-containing elastomer preferably has a glass transition temperature of -50 to 0°C. The glass transition temperature is more preferably -2°C or lower, and even more preferably -3°C or lower. The glass transition temperature is more preferably -45°C or higher, and even more preferably -40°C or higher. The glass transition temperature may be - 10°C or higher, and may be -9°C or higher. Here, the glass transition temperature can be determined by heating 10 mg of a sample at 20°C/min to give a DSC curve using a differential scanning calorimeter (e.g., X-DSC 7000 manufactured by Hitachi High-Tech Science Corporation) and calculating a glass transition temperature from a DSC differential curve in accordance with JIS K 6240:2011.

The fluorine-containing elastomer preferably has an iodine content of 0.05-1.0 mass%. The iodine content is more preferably 0.08 mass% or more, and even more preferably 0.10 mass% or more, and is more preferably 0.8 mass% or less, and even more preferably 0.60 mass% or less.

The iodine content can be determined by elemental analysis.

Specifically, the iodine content can be measured by mixing 5 mg of $Na_2SO_3$ with 12 mg of a fluorine-containing elastomer, combusting the mixture in oxygen in a quartz flask using an absorbent obtained by dissolving 30 mg of a 1:1 (mass ratio) mixture of $Na_2CO_3$ and $K_2CO_3$ in 20 ml of pure water, leaving the combusted mixture to stand for 30 minutes, and then measuring the iodine content using a Shimadzu 20A ion chromatograph. A calibration curve of a KI standard solution containing 0.5 ppm and 1.0 ppm of iodine ions can be used.

A suitable fluorine-containing monomer in the method for producing a fluorine-containing elastomer of the present disclosure may be the fluorine-containing monomer described above with respect to the fluorine-containing elastomer.

The method for producing a fluorine-containing elastomer of the present disclosure comprises carrying out an emulsion polymerization of a fluorine-containing monomer in an aqueous medium in the presence of (A) a fluorine-containing compound containing a functional group capable of reaction by radical polymerization and a hydrophilic group and (B) a hydrocarbon surfactant to provide a fluorine-containing elastomer.

The fluorine-containing compound (A) is preferably a compound containing an anionic or nonionic hydrophilic group, and more preferably a compound containing an anionic hydrophilic group.

For example, the fluorine-containing compound (A) may solely contain an anionic hydrophilic group or may solely contain a nonionic hydrophilic group.

Also, the fluorine-containing compound (A) may be a compound solely containing an anionic hydrophilic group, may be a compound solely containing a nonionic hydrophilic group, or may be a combination of a compound containing an anionic hydrophilic group and a compound containing a nonionic hydrophilic group.

Examples of the hydrophilic group in the fluorine-containing compound (A) include $-NH_2$, $-PO_3M(-P(O)(OM)_2)$, $-OPO_3M(-OP(O)(OM)_2)$, $-SO_3M$, $-OSO_3M$, -COOM, $-B(OM)_2$, and $-OB(OM)_2$, wherein M is H, a metal atom, $NR^7{}_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring. In particular, the hydrophilic group is preferably $-SO_3M$ or -COOM, and more preferably - COOM. $R^7$ is preferably H or a $C_{1-10}$ organic group, more preferably H or a $C_{1-4}$ organic group, even more preferably H or a $C_{1-4}$ alkyl group, and most preferably H.

When two M are contained in each formula, the two M are the same as or different from each other. The metal atom may be a monovalent or divalent metal atom, such as an alkali metal (Group 1) or an alkaline earth metal (Group 2), and is preferably Na, K, or Li.

The "functional group capable of reaction by radical polymerization" in the fluorine-containing compound (A) may be a group containing a radically polymerizable unsaturated bond.

The group having a radically polymerizable unsaturated bond is, for example, a group having an ethylenically unsaturated bond, such as a vinyl group or an allyl group. The group having an ethylenically unsaturated bond can be represented by the formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. The linking group R may be the linking group $R^a$, which will be described below. Preferable examples include groups having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, $-O-CF=CF_2$, and $-O-CF_2-CF=CF_2$.

The fluorine-containing compound (A) has a functional group capable of reaction by radical polymerization, and it is thus conjectured that when used in the above polymerization, the fluorine-containing compound (A) reacts with a fluorine-containing monomer at the initial stage of the polymerization reaction to form highly stable particles having a hydrophilic group derived from the fluorine-containing compound (A). Therefore, it is considered that when polymerization is carried out in the presence of the fluorine-containing compound (A), the number of particles of the fluorine-containing elastomer produced during polymerization is increased.

In the emulsion polymerization, one fluorine-containing compound (A) may be present, or two or more fluorine-containing compounds (A) may be present.

The fluorine-containing compound (A) is preferably a compound of formula (A):

$$CX^iX^k=CX^jR^a-(CZ^1Z^2)_k-Y^3 \qquad (A)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1, provided that at least one of $X^i$, $X^k$, $X^j$, $R^a$, $Z^1$, and $Z^2$ contains a fluorine atom, and when k is 0, $R^a$ is a linking group other than a single bond.

Examples of the hydrophilic group include $-NH_2$, $-PO_3M(-P(O)(OM)_2)$, $-OPO_3M(-OP(O)(OM)_2)$, $-SO_3M$, $-OSO_3M$, -COOM, $-B(OM)_2$, and $-OB(OM)_2$, wherein M is H, a metal atom, $NR^7{}_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring. In particular, the hydrophilic group is preferably $-SO_3M$ or -COOM, and more preferably -COOM. $R^7$ is preferably H or a $C_{1-10}$ organic group, more preferably H or a $C_{1-4}$ organic group, even more preferably H or a $C_{1-4}$ alkyl group, and most preferably H.

The metal atom may be a monovalent or divalent metal atom, such as an alkali metal (Group 1) or an alkaline earth metal (Group 2), and is preferably Na, K, or Li.

The use of the fluorine-containing compound (A) can result in less polymer deposits on a polymerization tank and also a short reaction time despite the use of a hydrocarbon surfactant. Also, an aqueous dispersion having a smaller average particle size and better stability can be obtained.

$R^a$ is a linking group. Herein, the "linking group" refers to a divalent linking group. The linking group may be a single bond and preferably contains at least one carbon atom. However, when k is 0, $R^a$ is a linking group other than a single bond, and is preferably a group containing at least one carbon atom. The number of carbon atoms may be 2 or more, may be 4 or more, may be 8 or more, may be 10 or more, or may be 20 or more. The upper limit is not limited, and, for example, may be 100 or less, and may be 50 or less.

The linking group may be linear or branched, cyclic or acyclic, saturated or unsaturated, and substituted or unsubstituted, and, as desired, may contain one or more heteroatoms selected from sulfur, oxygen, and nitrogen, and, as

desired, may contain one or more functional groups selected from ester, amide, sulfonamide, carbonyl, carbonate, urethane, urea, and carbamate. The linking group may be a group that does not contain a carbon atom and that is a catenary heteroatom such as oxygen, sulfur, or nitrogen.

$R^a$ is preferably, for example, a catenary heteroatom such as oxygen, sulfur, or nitrogen, or a divalent organic group.

When $R^a$ is a divalent organic group, a hydrogen atom bonded to a carbon atom may be replaced with halogen other than fluorine, such as chlorine, and $R^a$ may or may not contain a double bond. Also, $R^a$ may be linear or branched, and may be cyclic or acyclic. $R^a$ may also contain a functional group (such as ester, ether, ketone, amine, or halide).

$R^a$ may also be a non-fluorinated divalent organic group, or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, -(C=O)-O-, or a hydrocarbon group containing -(C=O)-, and these may contain an oxygen atom, may contain a double bond, and may contain a functional group.

$R^a$ is preferably a hydrocarbon group that has 1-100 carbon atoms, that may contain -(C=O)-, -(C=O)-O-, or an ether bond, and that may contain a carbonyl group, and in the hydrocarbon group, some or all hydrogen atoms bonded to carbon atoms may be replaced with fluorine.

$R^a$ is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, -(C=O)-, -(C=O)-O-, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and a combination thereof.

In the formulae, a, b, c, and d are each independently at least 1 or more. a, b, c, and d may be each independently 2 or more, 3 or more, 4 or more, 10 or more, and 20 or more. The upper limit of a, b, c, and d is, for example, 100.

Suitable specific examples of $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. In particular, specifically $R^a$ is preferably $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, $-(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)(CH_2)_2-O-(CH_2)-$, or $-(C=O)-O-C_6H_4-$.

In the formulae, n is an integer of 1-10.

$-R^a-(CZ^1Z^2)_k$ in formula (A) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)-$, $-(C=O)-[(CH_2)_2-O]_n-(CH_2)-(CH_2)-$, $-(C=O)-[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2$, and more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, -(C=O)-, $-(C=O)-O-(CH_2)-$, $-(C=O)-O-(CH_2)-(CH_2)-$, $-(C=O)-O-[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formulae, n is an integer of 1-10.

Specific examples of the compound of formula (A) include:

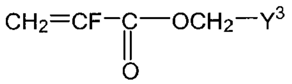
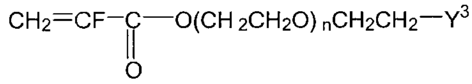

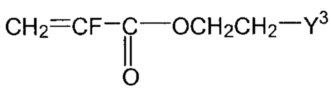
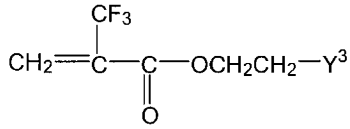

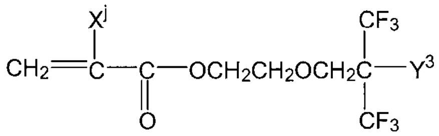

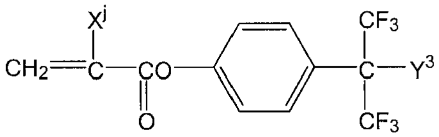

wherein $X^j$ and $Y^3$ are the same as above, and n is an integer of 1-10.

$R^a$ is preferably a divalent group of formula (r1):

$$-(C=O)_h-(O)_i-CF_2-O-(CX^6{}_2)_e-\{O-CF(CF_3)\}_f-(O)_g- \qquad (r1)$$

(wherein $X^6$ is each independently H, F, or $CF_3$, e is an integer of 0-3, f is an integer of 0-3, g is 0 or 1, h is 0 or 1, and i is 0 or 1), and is also preferably a divalent group of formula (r2):

$$-(C=O)_h-(O)_i-CF_2-O-(CX^7{}_2)_e-(O)_g- \qquad (r2)$$

(wherein $X^7$ is each independently H, F, or $CF_3$, e is an integer of 0-3, g is 0 or 1, h is 0 or 1, and i is 0 or 1).

$-R^a-(CZ^1Z^2)_k-$ in formula (A) is also preferably a divalent group of formula (t1):

$$-(C=O)_h-(O)_i-CF_2-O-(CX^6{}_2)_e-\{O-CF(CF_3)\}_f-(O)_g-CZ^1Z^2- \qquad (t1)$$

(wherein $X^6$ is each independently H, F, or $CF_3$, e is an integer of 0-3, f is an integer of 0-3, g is 0 or 1, h is 0 or 1, i is 0 or 1, and $Z^1$ and $Z^2$ are each independently F or $CF_3$), and, more preferably, in formula (t1), one of $Z^1$ and $Z^2$ is F, and the other is $CF_3$. In general formula (A), $-R^a-(CZ^1Z^2)_k-$ is also preferably a divalent group of formula (t2):

$$-(C=O)_h-(O)_i-CF_2-O-(CX^7{}_2)_e-(O)_g-CZ^1Z^2- \qquad (t2)$$

(wherein $X^7$ is each independently H, F, or $CF_3$, e is an integer of 0-3, g is 0 or 1, h is 0 or 1, i is 0 or 1, and $Z^1$ and $Z^2$ are each independently F or $CF_3$), and, more preferably, in formula (t2), one of $Z^1$ and $Z^2$ is F, and the other is $CF_3$.

It is also preferable that the compound of formula (A) has a C-F bond and does not have a C-H bond, excluding the hydrophilic group ($Y^3$). That is to say, in formula (A), it is preferable that $X^i$, $X^j$, and $X^k$ are all F, and that $R^a$ is a perfluoroalkylene group having one or more carbon atoms, and the perfluoroalkylene group may be either linear or branched, may be either cyclic or acyclic, and may contain at least one catenary heteroatom. The number of carbon atoms of the perfluoroalkylene group may be 2-20, and may be 4-18.

The compound of formula (A) may be partially fluorinated. That is to say, in formula (A), it is preferable that the compound of formula (A) has at least one hydrogen atom bonded to a carbon atom and at least one fluorine atom bonded to a carbon atom, excluding the hydrophilic group ($Y^3$).

The compound of formula (A) is also preferably a compound of formula (Aa):

$$CF_2=CF-O-Rf^0-Y^3 \qquad (Aa)$$

(wherein $Y^3$ is a hydrophilic group, and $Rf^0$ is a perfluorinated divalent linking group that is perfluorinated, that may be linear or branched, cyclic or acyclic, saturated or unsaturated, and substituted or unsubstituted, and that optionally and additionally contains one or more heteroatoms selected from sulfur, oxygen, and nitrogen).

The compound of formula (A) is also preferably a compound of formula (Ab):

$CH_2=CH-O-Rf^0-Y^3$ (Ab)

wherein $Y^3$ is a hydrophilic group, and $Rf^0$ is a perfluorinated divalent linking group as defined with respect to formula (Aa).

In one preferable form of formula (A), $Y^3$ is $-OSO_3M$. When $Y^3$ is $-OSO_3M$, examples of the compound represented by general formula (A) include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CH_2OSO_3M)$. In the formulae, M is the same as above.

In one preferable form of formula (A), $Y^3$ is $-SO_3M$. When $Y^3$ is $- SO_3M$, examples of the compound of formula (A) include $CF_2=CF(OCF_2CF_2SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, and $CH_2=CH((CF_2)_3SO_3M)$. In the above formulae, M is the same as above.

In one preferable form of formula (A), $Y^3$ is -COOM. When $Y^3$ is - COOM, examples of the compound of formula (A) include $CF_2=CF(OCF_2CF_2COOM)$, $CF_2=CF(OCF_2CF_2CF_2COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(CF_2CF_2COCM)$, $CH_2=CH((CF_2)_4COCM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COCM)$, $CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the above formulae, R' is an H or a $C_{1-4}$ alkyl group, and M is the same as above.

It is also one preferable form of formula (A) that $Y^3$ is $-OPO_3M$ ($-OP(O)(OM)_2$). When $Y^3$ is $-OPO_3M$, examples of the compound of formula (A) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2$, $CH_2=CH((CF_3)_4CH_2OP(O)(OM)_2)$, and $CH_2=CH((CF_2)_3CH_2OP(O)(OM)_2)$. In the above formulae, M is the same as above.

It is also one preferable form of formula (A) that $Y^3$ is $-PO_3M$ ($-P(O)(OM)_2$). When $Y^3$ is $-PO_3M$, examples of the compound of formula (A) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, and $CH_2=CH((CF_2)_3P(O)(OM)_2)$, and in the formulae, M is the same as above.

The compound of formula (4) is preferably at least one selected from a monomer of formula (5):

$CX_2=CY(-CZ_2-O-Rf-Y^3)$ (5)

(wherein X, which are the same as or different from each other, are -H or -F, Y is -H, -F, an alkyl group, or a fluorine-containing alkyl group, and Z, which are the same as or different from each other, are -H, -F, an alkyl group, or a fluorine-containing alkyl group, Rf is a fluorine-containing alkylene group having 1-40 carbon atoms or a fluorine-containing alkylene group having an ether bond and having 2-100 carbon atoms, and $Y^3$ is the same as above), a monomer of formula (6):

$CX_2=CY(-O-Rf-Y^3)$ (6)

(wherein X, which are the same as or different from each other, are -H or -F, Y is -H, -F, an alkyl group, or a fluorine-containing alkyl group, Rf is a fluorine-containing alkylene group having 1-40 carbon atoms or a fluorine-containing alkylene group having an ether bond and having 2-100 carbon atoms, and $Y^3$ is the same as above), and a monomer of formula (7) :

$CX_2=CY(-Rf-Y^3)$ (7)

(wherein X, which are the same as or different from each other, are -H or -F, Y is -H, -F, an alkyl group, or a fluorine-containing alkyl group, Rf is a fluorine-containing alkylene group having 1-40 carbon atoms or a fluorine-containing alkylene group having an ether bond and having 2-100 carbon atoms, and $Y^3$ is the same as above).

The fluorine-containing alkylene group having an ether bond and having 2-100 carbon atoms is an alkylene group that does not contain a structure having an oxygen atom at a terminal and that contains an ether bond between carbon carbons.

In formula (5), X is -H or -F. X may be both -F, and at least one may be -H. For example, one may be -F and the other

may be -H, or both may be -H.

In formula (5), Y is -H, -F, an alkyl group, or a fluorine-containing alkyl group.

The alkyl group is an alkyl group that does not contain a fluorine atom and that has one or more carbon atoms. The number of carbon atoms of the alkyl group is preferably 6 or less, more preferably 4 or less, and even more preferably 3 or less.

The fluorine-containing alkyl group is an alkyl group that contains at least one fluorine atom and that has one or more carbon atoms. The number of carbon atoms of the fluorine-containing alkyl group is preferably 6 or less, more preferably 4 or less, and even more preferably 3 or less.

Y is preferably -H, -F, or $-CF_3$, and more preferably -F.

In formula (5), Z, which are the same as or different from each other, are -H, -F, an alkyl group, or a fluoroalkyl group.

The alkyl group is an alkyl group that does not contain a fluorine atom and that has one or more carbon atoms. The number of carbon atoms of the alkyl group is preferably 6 or less, more preferably 4 or less, and even more preferably 3 or less.

The fluorine-containing alkyl group is an alkyl group that contains at least one fluorine atom and that has one or more carbon atoms. The number of carbon atoms of the fluorine-containing alkyl group is preferably 6 or less, more preferably 4 or less, and even more preferably 3 or less.

Z is preferably -H, -F, or $-CF_3$, and more preferably -F.

In formula (5), at least one of X, Y, and Z preferably contains a fluorine atom. For example, X may be -H, and Y and Z may be -F.

In formula (5), Rf is a fluorine-containing alkylene group having 1-40 carbon atoms or a fluorine-containing alkylene group having an ether bond and having 2-100 carbon atoms.

The fluorine-containing alkylene group preferably has 2 or more carbon atoms. The number of carbon atoms of the fluorine-containing alkylene group is preferably 30 or less, more preferably 20 or less, and even more preferably 10 or less. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, and even more preferably 12 or less.

The fluorine-containing alkylene group having an ether bond is also preferably a divalent group represented by, for example, the formula:

$$-\left(\underset{\substack{|\\Z^1}}{C}FCF_2O\right)_{p1}\left(CF_2O\right)_{q1}\left(CZ^2{}_2CF_2CF_2O\right)_{r1}\underset{\substack{|\\Z^4}}{C}Z^3\left(CF_2\right)_{s1}\left(CH_2\right)_{t1}-$$

wherein $Z^1$ is F or $CF_3$; $Z^2$ and $Z^3$ are each independently H or F; $Z^4$ is H, F, or $CF_3$; p1+q1+r1 is an integer of 1-10; s1 is 0 or 1; and t1 is an integer of 0-5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1-10), $-CF(CF_3)CF_2-O-CF(CF_3)CH_2-$, $-(CF(CF_3)CF_2-O)_n-CF(CF_3)CH_2-$ (wherein n is an integer of 1-10), $-CH_2CF_2CF_20-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In formula (5), $Y^3$ is preferably -COOM, $-SO_3M$, or $-OSO_3M$ (M is H, a metal atom, $NR^7{}_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring).

The organic group in $R^7$ is preferably an alkyl group. $R^7$ is preferably H or a $C_{1-10}$ organic group, more preferably H or a $C_{1-4}$ organic group, and even more preferably H or a $C_{1-4}$ alkyl group.

The metal atom may be e.g. an alkali metal (Group 1) or an alkaline earth metal (Group 2), and is preferably Na, K, or Li.

M is preferably -H, a metal atom, or $-NR^7{}_4$, more preferably -H, an alkali metal (Group 1), an alkaline earth metal (Group 2), or $-NR^7{}_4$, even more preferably -H, -Na, -K, -Li, or $-NH_4$, yet more preferably -Na, -K, or $-NH_4$, particularly preferably -Na or $-NH_4$, and most preferably $-NH_4$.

$Y^3$ is preferably -COOM or $-SO_3M$, and more preferably -COOM.

The monomer of formula (5) is preferably a monomer (5b) of formula (5b):

$CH_2=CF(-CF_2-O-Rf-Y^3)$ (5b)

wherein Rf and $Y^3$ are the same as above.

Specific examples of the monomer of formula (5b) include monomers of the formula:

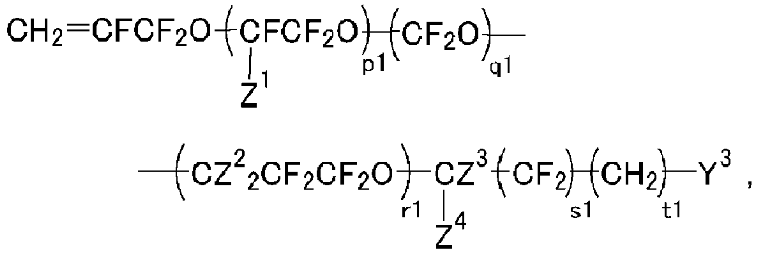

wherein $Z^1$ is F or $CF_3$; $Z^2$ and $Z^3$ are each independently H or F; $Z^4$ is H, F, or $CF_3$; p1+q1+r1 is an integer of 0-10; s1 is 0 or 1; t1 is an integer of 0-5; and $Y^3$ is the same as above, and when $Z^3$ and $Z^4$ are both H, p1+q1+r1+s1 is not 0. More specifically, preferable examples include

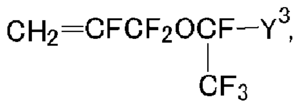 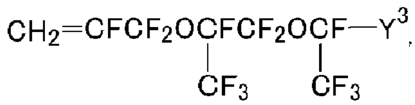

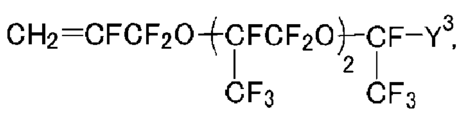 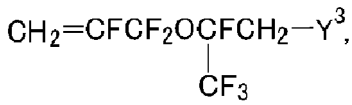

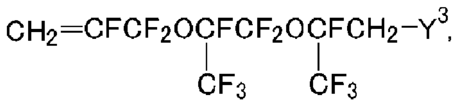 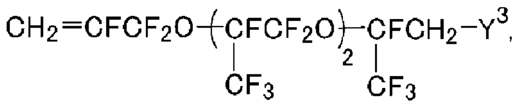

$CH_2=CFCF_2OCH_2CF_2-Y^3$, $CH_2=CFCF_2O(CH_2CF_2CF_2O)CH_2CF_2-Y^3$,

$CH_2=CFCF_2OCH_2CF_2CH_2-Y^3$,

$CH_2=CFCF_2O(CH_2CF_2CF_2O)CH_2CF_2CH_2-Y^3$,

$CH_2=CFCF_2OCF_2CF_2-Y^3$, $CH_2=CFCF_2O(CF_2CF_2CF_2O)CF_2CF_2-Y^3$,

$CH_2=CFCF_2OCF_2CF_2CH_2-Y^3$,

$CH_2=CFCF_2O(CF_2CF_2CF_2O)CF_2CF_2CH_2-Y^3$,

$CH_2=CFCF_2OCF_2-Y^3$, $CH_2=CFCF_2O(CF_2CF_2O)CF_2-Y^3$,

$CH_2=CFCF_2OCF_2CH_2-Y^3$,

$CH_2=CFCF_2O(CF_2CF_2O)CF_2CH_2-Y^3$,

and, in particular,

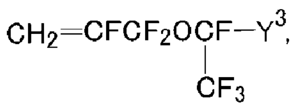 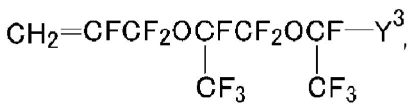

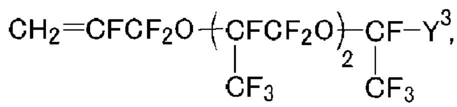
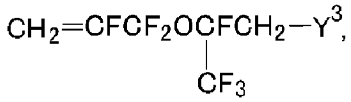

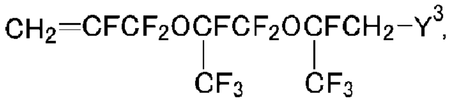
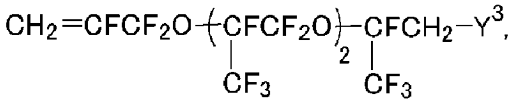

are preferable.

In the monomer of formula (5b), $Y^3$ in formula (5b) is preferably -COOM, and, in particular, at least one selected from $CH_2$=$CFCF_2OCF$ ($CF_3$) COCM and $CH_2$=$CFCF_2OCF(CF_3)CF_2OCF(CF_3)COOM$ (wherein M is as defined above) is preferable.

The monomer of formula (5) is preferably a monomer (5c) of formula (5c):

$$CX^2{}_2=CFCF_2\text{-}O\text{-}(CF(CF_3)CF_2O)_{n5}\text{-}CF(CF_3)\ \text{-}Y^3 \qquad (5c)$$

wherein each $X^2$ is the same and represents F or H, n5 represents an integer of 0 or 1-10, and $Y^3$ is as defined above.

In formula (5c), n5 in terms of the stability of the resulting aqueous dispersion is preferably an integer of 0 or 1-5, more preferably 0, 1, or 2, and even more preferably 0 or 1. $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

Examples of the monomer of formula (5c) include $CH_2$=$CFCF_2OCF$ ($CF_3$) COCM and $CH_2$=$CFCF_2OCF$ ($CF_3$) $CF_2OCF$ ($CF_3$) COOM, wherein M is as defined above.

Also, the monomer of formula (5) may be a monomer of formula (5d) :

$$CF_2=CFCF_2\text{-}O\text{-}Rf\text{-}Y^3 \qquad (5d)$$

wherein Rf and $Y^3$ are the same as above.

More specifically, examples include

$CF_2$=$CFCF_2OCF_2CF_2OF_2$-$Y^3$,

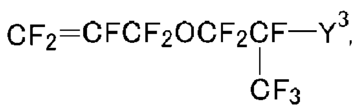

$CF_2$=$CFCF_2OCF_2CF_2CF_2CH_2$-$Y^3$,

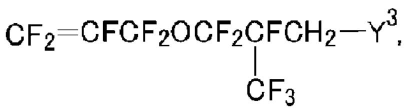

In formula (6), X is -H or -F. X may be both -F, or at least one may be -H. For example, one may be -F and the other may be -H, or both may be -H.

In formula (6), Y is -H, -F, an alkyl group, or a fluorine-containing alkyl group.

The alkyl group is an alkyl group that does not contain a fluorine atom and that has one or more carbon atoms. The number of carbon atoms of the alkyl group is preferably 6 or less, more preferably 4 or less, and even more preferably 3 or less.

The fluorine-containing alkyl group is an alkyl group that contains at least one fluorine atom and that has one or more carbon atoms. The number of carbon atoms of the fluorine-containing alkyl group is preferably 6 or less, more

preferably 4 or less, and even more preferably 3 or less.

Y is preferably -H, -F, or $-CF_3$, and more preferably -F.

In formula (6), $Y^3$ is preferably -COOM, $-SO_3M$, or $-OSO_3M$ (M is H, a metal atom, $NR^7_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring).

The organic group in $R^7$ is preferably an alkyl group. $R^7$ is preferably H or a $C_{1-10}$ organic group, more preferably H or a $C_{1-4}$ organic group, and even more preferably H or a $C_{1-4}$ alkyl group.

The metal atom may be e.g. an alkali metal (Group 1) or an alkaline earth metal (Group 2), and is preferably Na, K, or Li.

M is preferably -H, a metal atom, or $-NR^7_4$, more preferably -H, an alkali metal (Group 1), an alkaline earth metal (Group 2), or $-NR^7_4$, even more preferably -H, -Na, -K, -Li, or $-NH_4$, yet more preferably -Na, -K, or $-NH_4$, particularly preferably -Na or $-NH_4$, and most preferably $-NH_4$.

$Y^3$ is preferably -COOM or $-SO_3M$, and more preferably -COOM.

In formula (6), at least one of X and Y preferably contains a fluorine atom. For example, X may be -H, and Y and Z may be -F.

In formula (6), Rf is a fluorine-containing alkylene group having 1-40 carbon atoms or a fluorine-containing alkylene group having an ether bond and having 2-100 carbon atoms.

The fluorine-containing alkylene group preferably has 2 or more carbon atoms. The number of carbon atoms of the fluorine-containing alkylene group is preferably 30 or less, more preferably 20 or less, and even more preferably 10 or less. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The monomer of formula (6) is preferably at least one selected from monomers of the formulae (6a)-(6f):

$$CF_2=CF-O-(CF_2)_{n1}-Y^3 \qquad (6a)$$

wherein n1 represents an integer of 1-10, and $Y^3$ is as defined above,

$$CF_2=CF-O-(CF_2C(CF_3)F)_{n2}-Y^3 \qquad (6b)$$

wherein n2 represents an integer of 1-5, and $Y^3$ is as defined above,

$$CF_2=CF-O-(CFX^1)_{n3}-Y^3 \qquad (6c)$$

wherein $X^1$ represents F or $CF_3$, n3 represents an integer of 1-10, and $Y^3$ is as defined above,

$$CF_2=CF-O-(CF_2CFX^1O)_{n4}-CF_2CF_2-Y^3 \qquad (6d)$$

wherein n4 represents an integer of 1-10, and $Y^3$ and $X^1$ are as defined above,

$$CF_2=CF-O-(CF_2CF_2CFX^1O)_{n5}-CF_2CF_2CF_2-Y^3 \qquad (6e)$$

wherein n5 represents an integer of 1-10, and $Y^3$ and $X^1$ are as defined above, and

$$CF_2=CF-O(-CF_2)_{n6}-O-CF_2-Y^3 \qquad (6f)$$

wherein n6 represents an integer of 1-6, and $Y^3$ and $X^1$ are as defined above.

In formula (6a), n1 is preferably an integer of 5 or less, and more preferably an integer of 2 or less. $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

Examples of the monomer of formula (6a) include $CF_2=CF-O-CF_2COCM$, $CF_2=CF(OCF_2CF_2COOM)$, and $CF_2=CF(OCF_2CF_2CF_2COOM)$, wherein M is as defined above.

In formula (6b), n2 is preferably an integer of 3 or less in terms of the stability of the resulting aqueous dispersion, $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

In formula (6c), n3 is preferably an integer of 5 or less in terms of water solubility, $Y^3$ is preferably -COOM in terms of that a suitable water solubility and the stability of the aqueous dispersion can be obtained, and M is preferably H or $NH_4$ in terms of an increased dispersion stability.

In formula (6d), $X^1$ is preferably $-CF_3$ in terms of the stability of the aqueous dispersion, n4 is preferably an integer of 5 or less in terms of water solubility, $Y^3$ is preferably -COOM in terms of that a suitable water solubility and the stability of the aqueous dispersion can be obtained, and M is preferably H or $NH_4$.

Examples of the monomer of formula (6d) include $CF_2=CFOCF_2CF(CF_3)OCF_2CF_2COOM$, $CF_2=CFOCF_2CF(CF_3)OCF_2COCM$, and $CF_2=CFOCF_2CF(CF_3)OCF_2CF_2CF_2OOM$, wherein M represents H, $NH_4$, or an alkali metal.

In formula (6e), n5 is preferably an integer of 5 or less in terms of water solubility, $Y^3$ is preferably -COOM in terms of that a suitable water solubility and the stability of the aqueous dispersion can be obtained, and M is preferably H or $NH_4$.

Examples of the monomer of formula (6e) include $CF_2=CFOCF_2CF_2CF_2COOM$, wherein M represents H, $NH_4$, or an alkali metal.

Examples of the compound of formula (6f) include $CF_2=CFOCF_2CF_2CF_2OCF_2COCM$, wherein M represents H, $NH_4$, or an alkali metal.

In formula (7), Rf is preferably a fluorine-containing alkylene group having 1-40 carbon atoms. In formula (7), at least one of X and Y preferably contains a fluorine atom.

The monomer of formula (7) is preferably at least one selected from a monomer of formula (7a):

$$CF_2=CF-(CF_2)_{n1}-Y^3 \qquad (7a)$$

(wherein n1 represents an integer of 1-10, and $Y^3$ is as defined above) and a monomer of formula (7b):

$$CF_2=CF-(CF_2C(CF_3)F)_{n2}-Y^3 \qquad (7b)$$

(wherein n2 represents an integer of 1-5, and $Y^3$ is as defined above) .

$Y^3$ is preferably $-SO_3M$ or -COOM, and M is preferably H, a metal atom, $NR^7_4$, imidazolium optionally having a substituent, pyridinium optionally having a substituent, or phosphonium optionally having a substituent. $R^7$ represents H or an organic group.

In formula (7a), n1 is preferably an integer of 5 or less, and more preferably an integer of 2 or less. $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

The monomer of formula (7a) is, for example, $CF_2=CFCF_2COOM$, wherein M is as defined above.

In formula (7b), n2 is preferably an integer of 3 or less in terms of the stability of the resulting aqueous dispersion, $Y^3$ is preferably -COOM in terms of that a suitable water solubility and the stability of the aqueous dispersion can be obtained, and M is preferably H or $NH_4$ in terms of that M unlikely remains as an impurity, and that the heat resistance of the resulting molded article is increased.

The fluorine-containing compound (A) is preferably at least one selected from a monomer of formula (5), a monomer of formula (6), and a monomer of formula (7), and more preferably at least one selected from a monomer of formula (5) and a monomer of formula (6), and even more preferably a monomer of formula (5).

The monomer of formula (5) is preferably at least one selected from a monomer of formula (5b), a monomer of formula (5c), and a monomer of formula (5d). In particular, at least one selected from a monomer of formula (5b) and a monomer of formula (5c) is more preferable, and a monomer of formula (5b) is even more preferable.

The hydrocarbon surfactant (B) may be what is described in WO 2013/542308, WO 2013/542309, or WO 2013/542310.

The hydrocarbon surfactant (B) may be a surfactant having a hydrophilic group and a hydrophobic group on the same molecule. These may be cationic, nonionic, or anionic.

A cationic hydrocarbon surfactant usually has a positively charged hydrophilic group such as alkylated ammonium halide such as alkylated ammonium bromide and a hydrophobic group such as long-chain fatty acid.

An anionic hydrocarbon surfactant usually has a hydrophilic group such as a carboxylic acid salt, a sulfonic acid salt, or a sulfuric acid salt, and a hydrophobic group that is a long-chain hydrocarbon moiety such as alkyl.

A nonionic hydrocarbon surfactant usually does not contain a charged group and has a hydrophobic group that is a long-chain hydrocarbon. The hydrophilic group of the nonionic hydrocarbon surfactant includes a water-soluble functional group such as an ethylene ether chain derived from polymerization with ethylene oxide.

Examples of nonionic hydrocarbon surfactants

Polyoxyethylene alkyl ether, polyoxyethylene alkylphenyl ether, polyoxyethylene alkyl ester, sorbitan alkyl ester, polyoxyethylene sorbitan alkyl ester, glycerol ester, and derivatives thereof.

Specific examples of polyoxyethylene alkyl ether: polyoxyethylene lauryl ether, polyoxyethylene cetyl ether, polyoxyethylene stearyl ether, polyoxyethylene oleyl ether, and polyoxyethylene behenyl ether.

Specific examples of polyoxyethylene alkylphenyl ether: polyoxyethylene nonylphenyl ether and polyoxyethylene octylphenyl ether.

Specific examples of polyoxyethylene alkyl ester: polyethylene glycol monolaurate, polyethylene glycol monooleate, and polyethylene glycol monostearate.

Specific examples of sorbitan alkyl ester: polyoxyethylene sorbitan monolaurate, polyoxyethylene sorbitan monopalmitate, polyoxyethylene sorbitan monostearate, and polyoxyethylene sorbitan monooleate.

Specific examples of polyoxyethylene sorbitan alkyl ester: polyoxyethylene sorbitan monolaurate, polyoxyethylene sorbitan monopalmitate, and polyoxyethylene sorbitan monostearate.

Specific examples of glycerol ester: glycerol monomyristate, glycerol monostearate, and glycerol monooleate.

Specific examples of derivatives: polyoxyethylene alkylamine, polyoxyethylene alkylphenyl-formaldehyde condensates, and polyoxyethylene alkyl ether phosphate.

The above ethers and esters may have an HLB value of 10-18.

Examples of nonionic hydrocarbon surfactants include Triton(R) X series (such as X15, X45, and X100), Tergitol(R) 15-S series, Tergitol(R) TMN series (such as TMN-6, TMN-10, and TMN-100), and Tergitol(R) L series manufactured by Dow Chemical Company, and Pluronic(R) R series (31R1, 17R2, 10R5, 25R4 (m ~22, n ~23) and Iconol(R) TDA series (TDA-6, TDA-9, TDA-10) manufactured by BASF.

Examples of the anionic hydrocarbon surfactant include Versatic(R) 10 of Resolution Performance Products, and Avanel S series (such as S-70 and S-74) manufactured by BASF.

The hydrocarbon surfactant (B) is preferably a compound containing an anionic and/or nonionic hydrophilic group, and more preferably a compound containing an anionic hydrophilic group. The hydrocarbon surfactant (B), for example, may solely contain an anionic hydrophilic group, may solely contain a nonionic hydrophilic group, or may contain both an anionic hydrophilic group and a nonionic hydrophilic group.

Also, the hydrocarbon surfactant (B) may be a compound solely containing an anionic hydrophilic group, may be a compound solely containing a nonionic hydrophilic group, or may be a combination of a compound containing an anionic hydrophilic group and a compound containing a nonionic hydrophilic group.

The hydrocarbon surfactant (B) preferably does not contain a functional group capable of reaction by radical polymerization.

The hydrocarbon surfactant may also be an anionic surfactant represented by R-L-M, wherein R is a linear or branched alkyl group having 1 or more carbon atoms and optionally having a substituent or is a cyclic alkyl group having 3 or more carbon atoms and optionally having a substituent and, when the number of carbon atoms is 3 or more, may contain a monovalent or divalent heterocyclic ring or may form a ring, L is $-ArSO_3^-$, $-SO_3^-$, $-SO_4-$, $-PO_3^-$, or $-COO^-$, M is H, a metal atom, $NR^5_4$, imidazolium optionally having a substituent, pyridinium optionally having a substituent, or phosphonium optionally having a substituent, $R^5$ is H or an organic group, and $-ArSO_3^-$ is an arylsulfonic acid salt. $R^5$ is preferably H or an organic group having 1-10 carbon atoms, and more preferably H or an organic group having 1-4 carbon atoms.

Specific examples include those represented by $CH3-(CH_2)_n-L-M$ as represented by lauric acid or lauryl sulfate (dodecyl sulfate), wherein n is an integer of 6-17, and L and M are the same as above.

A mixture of a compound wherein R is an alkyl group having 12-16 carbon atoms, and L-M is a sulfuric acid salt can also be used.

The hydrocarbon surfactant may also be an anionic surfactant represented by $R^6(-L-M)_2$, wherein $R^6$ is a linear or branched alkylene group having 1 or more carbon atoms and optionally having a substituent or is a cyclic alkylene group having 3 or more carbon atoms and optionally having a substituent and, when the number of carbon atoms is 3 or more, may contain a monovalent or divalent heterocyclic ring or may form a ring, L is $-ArSO_3^-$, $-SO_3^-$, $-SO_4-$, $-PO_3^-$, or $-COO^-$, M is H, a metal atom, $NR^5_4$, imidazolium optionally having a substituent, pyridinium optionally having a substituent, or phosphonium optionally having a substituent, $R^5$ is H or an organic group, and $-ArSO3^-$ is an arylsulfonic acid salt.

The hydrocarbon surfactant may also be an anionic surfactant represented by $R^7(-L-M)_3$, wherein $R^7$ is a linear or branched alkylidyne group having 1 or more carbon atoms and optionally having a substituent or is a cyclic alkylidyne group having 3 or more carbon atoms and optionally having a substituent and, when the number of carbon atoms is 3 or more, may contain a monovalent or divalent heterocyclic ring or may form a ring, L is $-ArSO_3^-$, $-SO_3^-$, $-SO_4-$, $-PO_3^-$, or $-COO^-$, M is H, a metal atom, $NR^5_4$, imidazolium optionally having a substituent, pyridinium optionally having a substituent, or phosphonium optionally having a substituent, $R^5$ is H or an organic group, and $-ArSO_3^-$ is an arylsulfonic acid salt.

$R^5$ is preferably H or an alkyl group, more preferably H or an alkyl group having 1-10 carbon atoms, and even more preferably H or an alkyl group having 1-4 carbon atoms.

Herein, unless specified otherwise, the "substituent" means a group that can be substituted. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.

The hydrocarbon surfactant (B) may also be a siloxane hydrocarbon surfactant. Examples of the siloxane hydrocarbon surfactant include those described in Silicone Surfactants, R.M. Hill, Marcel Dekker, Inc., ISBN: 0-8247-00104. The structure of the siloxane hydrocarbon surfactant contains a distinct hydrophobic group and hydrophilic group. The hydrophobic group contains one or more dihydrocarbylsiloxane units wherein the substituent on the silicone atom is completely a hydrocarbon.

When the carbon atom of the hydrocarbyl group is possibly substituted with halogen such as fluorine, such siloxane hydrocarbon surfactants are also regarded as hydrocarbon surfactants in the sense that the carbon atom is completely substituted with a hydrogen atom, or that is to say, the monovalent substituent on the carbon atom of the hydrocarbyl group is hydrogen.

The hydrophilic group of the siloxane hydrocarbon surfactant may contain one or more polar moieties containing an ionic group such as sulfate, sulfonate, phosphonate, phosphoric acid ester, carboxylate, carbonate, sulfosuccinate, taurate (as a free acid, salt, or ester), phosphine oxide, betaine, betaine copolyol, and a quaternary ammonium salt. The ionic hydrophobic group may also contain an ionically functionalized siloxane graft. Examples of such siloxane hydrocarbon surfactants include polydimethylsiloxane-graft-(meth)acrylic acid salts, polydimethylsiloxane-graft-polyacrylate salts, and polydimethylsiloxane graft quaternary amines.

The polar moiety of the hydrophilic group of the siloxane hydrocarbon surfactant may include a nonionic group formed of polyether such as polyethylene oxide (PEO) and mixed polyethylene oxide/propylene oxide polyether (PEO/PPO); a monosaccharide and a disaccharide; and a water-soluble heterocyclic ring such as pyrrolidinone. The ratio of ethylene oxide to propylene oxide (EO/PO) can be varied in the mixed polyethylene oxide/propylene oxide polyether.

The hydrophilic group of the siloxane hydrocarbon surfactant may also include a combination of an ionic moiety and a nonionic moiety. Examples of such moieties include polyether or polyol ionically terminal-functionalized or randomly functionalized. The preferable present disclosure to practice is siloxane having a nonionic moiety, i.e., a nonionic siloxane hydrocarbon surfactant.

The arrangement of the hydrophobic group and the hydrophilic group in the structure of the siloxane hydrocarbon surfactant may be in the form of a diblock polymer (AB), a triblock polymer (ABA) (wherein "B" represents the siloxane moiety of the molecule), or a multi-block polymer. Alternatively, the siloxane surfactant may contain a graft polymer.

The siloxane hydrocarbon surfactant is also disclosed in US 6,841,616.

Examples of siloxane-based anionic hydrocarbon surfactants include Noveon(R) of Lubrizol Advanced Materials, Inc., and SilSense(TM) PE-100 Silicone and SilSense(TM) CA-1 Silicone available from Consumer Specialties.

Examples of anionic hydrocarbon surfactants include sulfosuccinate surfactant Lankropol(R) K8300 of Akzo Nobel Surface Chemistry LLC.

Examples of sulfosuccinate surfactants include a diisodecyl sulfosuccinate Na salt (Emulsogen(R) SB10 of Clariant) and a diisotridecyl sulfosuccinate Na salt (Polirol(R) TR/LNA of Cesapinia Chemicals).

Examples of the hydrocarbon surfactant include PolyFox(R) surfactants (such as PolyFox(TM) PF-156A and PolyFox(TM) PF-136A) of Omnova Solutions, Inc.

The hydrocarbon surfactant is preferably an anionic hydrocarbon surfactant. As for the anionic hydrocarbon surfactant, those described above can be employed while the following hydrocarbon surfactants can be preferably employed.

The hydrocarbon surfactant may be a hydrocarbon surfactant having one or more carbonyl groups (excluding the carbonyl group in a carboxyl group).

The hydrocarbon surfactant having one or more carbonyl groups (excluding the carbonyl group in a carboxyl group) is preferably a surfactant of formula $R^x$-X (wherein $R^x$ is a fluorine-free organic group having one or more carbonyl groups (excluding the carbonyl group in a carboxyl group) and having 1-2,000 carbon atoms, and X is $-OSO_3X^1$, $-COOX^1$, or $-SO_3X^1$ ($X^1$ is H, a metal atom, $NR^{1\times}{}_4$, an imidazolium optionally having a substituent, pyridinium optionally having a substituent, or phosphonium optionally having a substituent, and $R^{1\times}$ is H or an organic group and are the same as or

different from one another)). The number of carbon atoms of $R^x$ is preferably 500 or less, more preferably 100 or less, even more preferably 50 or less, and yet more preferably 30 or less.

The hydrocarbon surfactant is more preferably at least one selected from a surfactant (a) of formula (a):

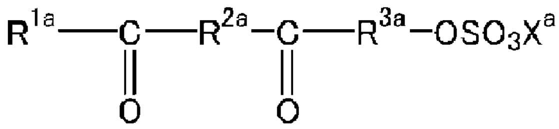

(wherein $R^{1a}$ is a linear or branched alkyl group having 1 or more carbon atoms or a cyclic alkyl group having 3 or more carbon atoms, a hydrogen atom bonded to a carbon atom may be replaced with a hydroxy group or a monovalent organic group containing an ester bond, when the number of carbon atoms is 2 or more, it may contain a carbonyl group, and when the number of carbon atoms is 3 or more, it may contain a monovalent or divalent heterocyclic ring or may form a ring; $R^{2a}$ and $R^{3a}$ are each independently a single bond or a divalent linking group; the total number of carbon atoms of $R^{1a}$, $R^{2a}$, and $R^{3a}$ is 6 or more; $X^a$ is H, a metal atom, $NR^{4a}{}_4$, imidazolium optionally having a substituent, pyridinium optionally having a substituent, or phosphonium optionally having a substituent, and $R^{4a}$ is H or an organic group and are the same as or different from one another; and any two of $R^{1a}$, $R^{2a}$, and $R^{3a}$ may be bonded to each other to form a ring), a surfactant (b) of formula (b):

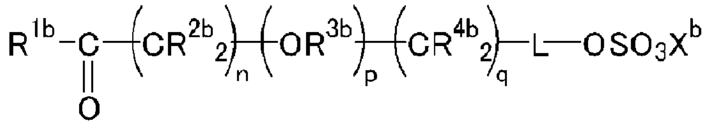

(wherein $R^{1b}$ is a linear or branched alkyl group having 1 or more carbon atoms and optionally having a substituent or is a cyclic alkyl group having 3 or more carbon atoms and optionally having a substituent and, when the number of carbon atoms is 3 or more, may contain a monovalent or divalent heterocyclic ring or may form a ring; $R^{2b}$ and $R^{4b}$ are each independently H or a substituent; $R^{3b}$ is a alkylene group having 1-10 carbon atoms and optionally having a substituent; n is an integer of 1 or more; p and q are each independently an integer of 0 or more; $X^b$ is H, a metal atom, $NR^{5b}{}_4$, imidazolium optionally having a substituent, pyridinium optionally having a substituent, or phosphonium optionally having a substituent, and $R^{5b}$ is H or an organic group and are the same as or different from one another; any two of $R^{1b}$, $R^{2b}$, $R^{3b}$, and $R^{4b}$ may be bonded to each other to form a ring; L is a single bond, $-CO_2$-B-*, -OCO-B-*, - $CONR^{6b}$-B-*, $-NR^{6b}$CO-B-*, or -CO- (provided that the carbonyl group contained in $-CO_2$-B-, -OCO-B-, $-CONR^{6b}$-B-, and $-NR^6$CO-B- is excluded), B is a single bond or an alkylene group having 1-10 carbon atoms and optionally having a substituent, and $R^{6b}$ is H or an alkyl group having 1-4 carbon atoms and optionally having a substituent; and * indicates the side bonded to $-OSO_3X^b$ in the formula), a surfactant (c) of

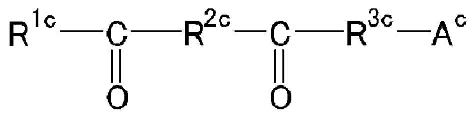

(wherein $R^{1c}$ is a linear or branched alkyl group having 1 or more carbon atoms or a cyclic alkyl group having 3 or more carbon atoms, a hydrogen atom bonded to a carbon atom may be replaced with a hydroxy group or a monovalent organic group containing an ester bond, when the number of carbon atoms is 2 or more, it may contain a carbonyl group, and when the number of carbon atoms is 3 or more, it may contain a monovalent or divalent heterocyclic ring or may form a ring; $R^{2c}$ and $R^{3c}$ are each independently a single bond or a divalent linking group; the total number of carbon atoms of $R^{1c}$, $R^{2c}$, and $R^{3c}$ is 5 or more; $A^c$ is $-COOX^c$ or $-SO_3X^c$ ($X^c$ is H, a metal atom, $NR^{4c}{}_4$, imidazolium optionally having a substituent, pyridinium optionally having a substituent, or phosphonium optionally having a substituent, and $R^{4c}$ is H or an organic group and are the same as or different from one another); and any two of $R^{1c}$, $R^{2c}$, and $R^{3c}$ may be bonded to each other to form a ring), and a surfactant (d) of formula (d):

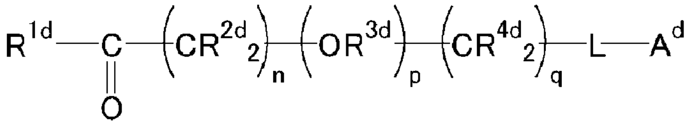

(wherein $R^{1d}$ is a linear or branched alkyl group having 1 or more carbon atoms and optionally having a substituent or is a

cyclic alkyl group having 3 or more carbon atoms and optionally having a substituent and, when the number of carbon atoms is 3 or more, may contain a monovalent or divalent heterocyclic ring or may form a ring; $R^{2d}$ and $R^{4d}$ are each independently H or a substituent; $R^{3d}$ is an alkylene group having 1-10 carbon atoms and optionally having a substituent; n is an integer of 1 or more; p and q are each independently an integer of 0 or more; $A^d$ is $-SO_3X^d$ or $-COOX^d$ ($X^d$ is H, a metal atom, $NR^{5d}_4$, imidazolium optionally having a substituent, pyridinium optionally having a substituent, or phosphonium optionally having a substituent, and $R^{5d}$ is H or an organic group and are the same as or different from one another); any two of $R^{1d}$, $R^{2d}$, $R^{3d}$, and $R^{4d}$ may be bonded to each other to form a ring; L is a single bond, $-CO_2$-B-*, -OCO-B-*, $-CONR^{6d}$-B-*, $-NR^{6d}$CO-B-*, or -CO- (provided that the carbonyl group contained in $-CO_2$-B-, -OCO-B-, $-CONR^{6d}$-B-, and $-NR^{6d}$CO-B- is excluded), B is a single bond or an alkylene group having 1-10 carbon atoms and optionally having a substituent, and $R^{6d}$ is H or an alkyl group having 1-4 carbon atoms and optionally having a substituent; and * indicates the side bonded to $A^d$ in the formula).

The surfactant (a) will now be described.

In formula (a), $R^{1a}$ is a linear or branched alkyl group having 1 or more carbon atoms or a cyclic alkyl group having 3 or more carbon atoms.

When having 3 or more carbon atoms, the alkyl group may contain a carbonyl group (-C(=O)-) between 2 carbon atoms. When having 2 or more carbon atoms, the alkyl group can contain the carbonyl group at a terminal of the alkyl group. That is to say, an acyl group such as an acetyl group represented by $CH_3$-C(=O)- is also included in the alkyl group.

When having 3 or more carbon atoms, the alkyl group can contain a monovalent or divalent heterocyclic ring and can form a ring. The heterocyclic ring is preferably an unsaturated heterocyclic ring, and more preferably an oxygen-containing unsaturated heterocyclic ring, such as a furan ring. In $R^{1a}$, a divalent heterocyclic ring may be placed between 2 carbon atoms, a divalent heterocyclic ring may be placed at a terminal and bonded to -C(=O)-, or a monovalent heterocyclic ring may be placed at a terminal of the alkyl group.

Herein, the "number of carbon atoms" of the alkyl group includes the number of carbon atoms constituting the carbonyl group as well as the number of carbon atoms constituting the heterocyclic ring. For example, the group represented by $CH_3$-C(=O)-$CH_2$- has 3 carbon atoms, the group represented by $CH_3$-C(=O)-$C_2H_4$-C(=O)-$C_2H_4$- has 7 carbon atoms, and the group represented by $CH_3$-C(=O)- has 2 carbon atoms.

In the alkyl group, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula -O-C(=O)-$R^{101a}$, wherein $R^{101a}$ is an alkyl group.

In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

In the formula, $R^{2a}$ and $R^{3a}$ are each independently a single bond or a divalent linking group.

$R^{2a}$ and $R^{3a}$ are, each independently, preferably a single bond or a linear or branched alkylene group having 1 or more carbon atoms or a cyclic alkylene group having 3 or more carbon atoms.

Preferably, the alkylene group constituting $R^{2a}$ and $R^{3a}$ does not contain a carbonyl group.

In the alkylene group, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula -O-C(=O)-$R^{102a}$, wherein $R^{102a}$ is an alkyl group.

In the alkylene group, 75% or less of the hydrogen atoms bonded to carbon atoms may be replaced with halogen atoms, 50% or less may be replaced with halogen atoms, or 25% or less may be replaced with halogen atoms, and the alkylene group is preferably a non-halogenated alkyl group that does not contain a halogen atom such as a fluorine atom or a chlorine atom.

The total number of carbon atoms of $R^{1a}$, $R^{2a}$, and $R^{3a}$ is 6 or more. The total number of carbon atoms is preferably 8 or more, more preferably 9 or more, and even more preferably 10 or more, and is preferably 20 or less, more preferably 18 or less, and even more preferably 15 or less.

Any two of $R^{1a}$, $R^{2a}$, and $R^{3a}$ may be bonded to each other to form a ring.

In formula (a), $X^a$ is H, a metal atom, $NR^{4a}_4$, imidazolium optionally having a substituent, pyridinium optionally having a substituent, or phosphonium optionally having a substituent, and $R^{4a}$ is H or an organic group. Four $R^{4a}$ are the same as or different from one another. $R^{4a}$ is preferably H or an organic group having 1-10 carbon atoms, and more preferably H or an organic group having 1-4 carbon atoms. The metal atom may be a monovalent or divalent metal atom, such as an alkali metal (Group 1) or an alkaline earth metal (Group 2), and is preferably Na, K, or Li. $X^a$ is preferably H, an alkali metal (Group 1), an alkaline earth metal (Group 2), or $NR^{4a}_4$, with H, Na, K, Li, or $NH_4$ being more preferable because

of being easily soluble in water, Na, K, or $NH_4$ being more preferable because of being more easily soluble in water, Na or $NH_4$ being particularly preferable, and $NH_4$ being most preferable because of being easily removable. When $X^a$ is $NH_4$, the surfactant has excellent solubility in an aqueous medium, and the metal component unlikely remains in the fluorine-containing elastomer or in the final product.

$R^{1a}$ is preferably a linear or branched alkyl group having 1-8 carbon atoms and not containing a carbonyl group, a cyclic alkyl group having 3-8 carbon atoms and not containing a carbonyl group, a linear or branched alkyl group having 2-45 carbon atoms and containing 1-10 carbonyl groups, a cyclic alkyl group having 3-45 carbon atoms and containing a carbonyl group, or an alkyl group containing a monovalent or divalent heterocyclic ring having 3-45 carbon atoms.

$R^{1a}$ is more preferably a group of the formula:

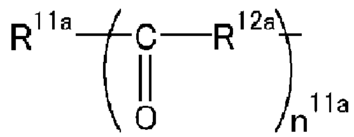

wherein $n^{11a}$ is an integer of 0-10, $R^{11a}$ is a linear or branched alkyl group having 1-5 carbon atoms or a cyclic alkyl group having 3-5 carbon atoms, $R^{12a}$ is an alkylene group having 0-3 carbon atoms, and when $n^{11a}$ is an integer of 2-10, and $R^{12a}$ are the same as or different from each other.

$n^{11a}$ is preferably an integer of 0-5, more preferably an integer of 0-3, and even more preferably an integer of 1-3.

Preferably, the alkyl group as $R^{11a}$ does not contain a carbonyl group.

In the alkyl group as $R^{11a}$, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula -O-C(=O)-$R^{103a}$, wherein $R^{103a}$ is an alkyl group.

In the alkyl group as $R^{11a}$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

$R^{12a}$ is an alkylene group having 0-3 carbon atoms. The number of carbon atoms is preferably 1-3.

The alkylene group as $R^{12a}$ may be linear or branched.

Preferably, the alkylene group as $R^{12a}$ does not contain a carbonyl group. $R^{12a}$ is more preferably an ethylene group ($-C_2H_4-$) or a propylene group ($-C_3H_6-$).

In the alkylene group as $R^{12a}$, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula -O-C(=O)-$R^{104a}$, wherein $R^{104a}$ is an alkyl group.

In the alkylene group as $R^{12a}$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkylene group that does not contain a halogen atom such as a fluorine atom or a chlorine atom.

$R^{2a}$ and $R^{3a}$ are, each independently, preferably an alkylene group having 1 or more carbon atoms and not containing a carbonyl group, more preferably an alkylene group having 1-3 carbon atoms and not containing a carbonyl group, and even more preferably an ethylene group ($-C_2H_4-$) or a propylene group ($-C_3H_6-$).

The surfactant (b) will now be described.

In formula (b), $R^{1b}$ is a linear or branched alkyl group having 1 or more carbon atoms and optionally having a substituent or a cyclic alkyl group having 3 or more carbon atoms and optionally having a substituent.

When having 3 or more carbon atoms, the alkyl group can contain a monovalent or divalent heterocyclic ring and can form a ring. The heterocyclic ring is preferably an unsaturated heterocyclic ring, and more preferably an oxygen-containing unsaturated heterocyclic ring, such as a furan ring. In $R^{1b}$, a divalent heterocyclic ring may be placed between 2 carbon atoms, a divalent heterocyclic ring may be placed at a terminal and bonded to -C(=O)-, or a monovalent heterocyclic ring may be placed at a terminal of the alkyl group.

Herein, the "number of carbon atoms" of the alkyl group includes the number of carbon atoms constituting the heterocyclic ring.

The substituent that the alkyl group as $R^{1b}$ may have is preferably a halogen atom, a linear or branched alkyl group having 1-10 carbon atoms, a cyclic alkyl group having 3-10 carbon atoms, or a hydroxy group, and is particularly preferably a methyl group or an ethyl group.

Preferably, the alkyl group as $R^{1b}$ does not contain a carbonyl group.

In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

Preferably, the alkyl group does not have any substituent.

$R^{1b}$ is preferably a linear or branched alkyl group having 1-10 carbon atoms and optionally having a substituent or a cyclic alkyl group having 3-10 carbon atoms and optionally having a substituent, more preferably a linear or branched alkyl group having 1-10 carbon atoms and not containing a carbonyl group or a cyclic alkyl group having 3-10 carbon atoms and not containing a carbonyl group, even more preferably a linear or branched alkyl group having 1-10 carbon atoms and not having a substituent, yet more preferably a linear or branched alkyl group having 1-3 carbon atoms and not having a substituent, particularly preferably a methyl group ($-CH_3$) or an ethyl group ($-C_2H_5$), and most preferably a methyl group ($-CH_3$).

In formula (b), $R^{2b}$ and $R^{4b}$ are each independently H or a substituent. A plurality of $R^{2b}$ are the same as or different from each other, and a plurality of $R^{4b}$ are the same as or different from each other.

The substituents as $R^{2b}$ and $R^{4b}$ are, each independently, preferably a halogen atom, a linear or branched alkyl group having 1-10 carbon atoms, a cyclic alkyl group having 3-10 carbon atoms, or a hydroxy group, and particularly preferably a methyl group or an ethyl group.

Preferably, the alkyl group as $R^{2b}$ and $R^{4b}$ does not contain a carbonyl group. In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

Preferably, the alkyl group does not have any substituent.

The alkyl group as $R^{2b}$ and $R^{4b}$ is preferably a linear or branched alkyl group having 1-10 carbon atoms and not containing a carbonyl group or a cyclic alkyl group having 3-10 carbon atoms and not containing a carbonyl group, more preferably a linear or branched alkyl group having 1-10 carbon atoms and not containing a carbonyl group, even more preferably a linear or branched alkyl group having 1-3 carbon atoms and not having a substituent, and particularly preferably a methyl group ($-CH_3$) or an ethyl group ($-C_2H_5$).

$R^{2b}$ and $R^{4b}$ preferably are each independently H or a linear or branched alkyl group having 1-10 carbon atoms and not containing a carbonyl group, more preferably H or a linear or branched alkyl group having 1-3 carbon atom and not having a substituent, even more preferably H, a methyl group ($-CH_3$), or an ethyl group ($-C_2H_5$), and particularly preferably H.

In formula (b), $R^{3b}$ is an alkylene group having 1-10 carbon atoms and optionally having a substituent. When a plurality of $R^{3b}$ groups are present, $R^{3b}$ are the same as or different from each other.

Preferably, the alkylene group does not contain a carbonyl group.

In the alkylene group, 75% or less of the hydrogen atoms bonded to carbon atoms may be replaced with halogen atoms, 50% or less may be replaced with halogen atoms, or 25% or less may be replaced with halogen atoms, and the alkylene group is preferably a non-halogenated alkylene group that does not contain a halogen atom such as a fluorine atom or a chlorine atom.

Preferably, the alkylene group does not have any substituent.

The alkylene group is preferably a linear or branched alkylene group having 1-10 carbon atoms and optionally having a substituent or a cyclic alkylene group having 3-10 carbon atoms and optionally having a substituent, preferably a linear or branched alkylene group having 1-10 carbon atoms and not containing a carbonyl group or a cyclic alkylene group having 3-10 carbon atoms and not containing a carbonyl group, more preferably a linear or branched alkylene group having 1-10 carbon atoms and not having a substituent, and even more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1b}$, $R^{2b}$, $R^{3b}$, and $R^{4b}$ may be bonded to each other to form a ring, while a ring is preferably not formed.

In formula (b), n is an integer of 1 or more. n is preferably an integer of 1-40, more preferably an integer of 1-30, even more preferably an integer of 5-25, and particularly preferably an integer of 5-9, and 11-25.

In formula (b), p and q are each independently an integer of 0 or more. p is preferably an integer of 0-10, and more preferably 0 or 1. q is preferably an integer of 0-10, and more preferably an integer of 0-5.

The total of n, p, and q is preferably an integer of 5 or more. The total of n, p, and q is more preferably an integer of 8 or more. The total of n, p, and q is also preferably an integer of 60 or less, more preferably an integer of 50 or less, and even more preferably an integer of 40 or less.

In formula (b), $X^b$ is H, a metal atom, $NR^{5b}_4$, imidazolium optionally having a substituent, pyridinium optionally having a substituent, or phosphonium optionally having a substituent, and $R^{5b}$ is H or an organic group. Four $R^{5b}$ are the same as or different from one another. $R^{5b}$ is preferably H or an organic group having 1-10 carbon atoms, and more preferably H or an organic group having 1-4 carbon atoms. The metal atom may be a monovalent or divalent metal atom,

such as an alkali metal (Group 1) or an alkaline earth metal (Group 2), and is preferably Na, K, or Li. $X^b$ may be a metal atom or $NR^{5b}_4$ ($R^{5b}$ is as described above) .

$X^b$ is preferably H, an alkali metal (Group 1), an alkaline earth metal (Group 2), or $NR^{5b}_4$, with H, Na, K, Li, or $NH_4$ being more preferable because of being easily soluble in water, Na, K, or $NH_4$ being more preferable because of being more easily soluble in water, Na or $NH_4$ being particularly preferable, and $NH_4$ being most preferable because of being easily removable. When $X^b$ is $NH_4$, the surfactant has excellent solubility in an aqueous medium, and the metal component unlikely remains in the fluorine-containing elastomer or in the final product.

In formula (b), L is a single bond, $-CO_2$-B-*, -OCO-B-*, $-CONR^{6b}$-B-*, $-NR^{6b}$CO-B-*, or -CO- (provided that the carbonyl group contained in - $CO_2$-B-, -OCO-B-, $-CONR^{6b}$-B-, and $-NR^6$CO-B- is excluded), B is a single bond or an alkylene group having 1-10 carbon atoms and optionally having a substituent, and $R^{6b}$ is H or an alkyl group having 1-4 carbon atoms and optionally having a substituent. The alkylene group more preferably has 1-5 carbon atoms. $R^6$ is more preferably H or a methyl group. * indicates the side bonded to $-OSO_3X^b$ in the formula.

L is preferably a single bond.

The surfactant (b) is preferably a compound of the formula:

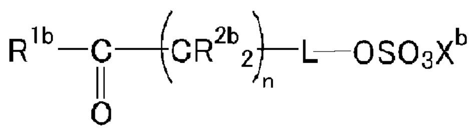

wherein $R^{1b}$, $R^{2b}$, L, n, and $X^b$ are as described above.

In the $^1$H-NMR spectrum of the surfactant (b), the integrated value of all peak intensities observed in a chemical shift region of 2.0-5.0 ppm is preferably 10% or more.

In the $^1$H-NMR spectrum of the surfactant (b), the integrated value of all peak intensities observed in a chemical shift region of 2.0-5.0 ppm is preferably in the above range. In this case, the surfactant preferably has a ketone structure within the molecule.

In the surfactant (b), the integrated value is more preferably 15 or more, and is preferably 95 or less, more preferably 80 or less, and even more preferably 70 or less.

The integrated value is measured in a heavy-water solvent at room temperature. Heavy water is 4.79 ppm.

The surfactant (c) will now be described.

In formula (c), $R^{1c}$ is a linear or branched alkyl group having 1 or more carbon atoms or a cyclic alkyl group having 3 or more carbon atoms.

When having 3 or more carbon atoms, the alkyl group may contain a carbonyl group (-C(=O)-) between 2 carbon atoms. When having 2 or more carbon atoms, the alkyl group can contain the carbonyl group at a terminal of the alkyl group. That is to say, an acyl group such as an acetyl group represented by $CH_3$-C(=O)- is also included in the alkyl group.

When having 3 or more carbon atoms, the alkyl group can contain a monovalent or divalent heterocyclic ring and can form a ring. The heterocyclic ring is preferably an unsaturated heterocyclic ring, and more preferably an oxygen-containing unsaturated heterocyclic ring, such as a furan ring. In $R^{1c}$, a divalent heterocyclic ring may be placed between 2 carbon atoms, a divalent heterocyclic ring may be placed at a terminal and bonded to -C(=O)-, or a monovalent heterocyclic ring may be placed at a terminal of the alkyl group.

Herein, the "number of carbon atoms" of the alkyl group includes the number of carbon atoms constituting the carbonyl group and the number of carbon atoms constituting the heterocyclic ring. For example, the group represented by $CH_3$-C(=O)-$CH_2$- has 3 carbon atoms, the group represented by $CH_3$-C(=O)-$C_2H_4$-C(=O)-$C_2H_4$- has 7 carbon atoms, and the group represented by $CH_3$-C(=O)- has 2 carbon atoms.

In the alkyl group, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula $-O-C(=O)-R^{101c}$, wherein $R^{101c}$ is an alkyl group.

In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

In formula (c), $R^{2c}$ and $R^{3c}$ are each independently a single bond or a divalent linking group.

$R^{2c}$ and $R^{3c}$ are, each independently, preferably a single bond or a linear or branched alkylene group having 1 or more carbon atoms or a cyclic alkylene group having 3 or more carbon atoms.

Preferably, the alkylene group constituting $R^{2c}$ and $R^{3c}$ does not contain a carbonyl group.

In the alkylene group, a hydrogen atom bonded to a carbon atom may be replaced with a functional group and, for

example, may be replaced with a monovalent organic group containing a hydroxy group (-OH) or an ester bond, while it is preferably not replaced with any functional group.

The monovalent organic group containing an ester bond may be a group of the formula -O-C(=O)-$R^{102c}$, wherein $R^{102c}$ is an alkyl group.

In the alkylene group, 75% or less of the hydrogen atoms bonded to carbon atoms may be replaced with halogen atoms, 50% or less may be replaced with halogen atoms, or 25% or less may be replaced with halogen atoms, and the alkylene group is preferably a non-halogenated alkyl group that does not contain a halogen atom such as a fluorine atom or a chlorine atom.

The total number of carbon atoms of $R^{1c}$, $R^{2c}$, and $R^{3c}$ is 5 or more. The total number of carbon atoms is preferably 7 or more, and more preferably 9 or more, and is preferably 20 or less, more preferably 18 or less, and even more preferably 15 or less.

Any two of $R^{1c}$, $R^{2c}$, and $R^{3c}$ may be bonded to each other to form a ring.

In formula (c), $A^c$ is $-COOX^c$ or $-SO_3X^c$ ($X^c$ is H, a metal atom, $NR^{4c}{}_4$, imidazolium optionally having a substituent, pyridinium optionally having a substituent, or phosphonium optionally having a substituent, and $R^{4c}$ is H or an organic group and are the same as or different from one another). $R^{4c}$ is preferably H or an organic group having 1-10 carbon atoms, and more preferably H or an organic group having 1-4 carbon atoms. The metal atom may be a monovalent or divalent metal atom, such as an alkali metal (Group 1) or an alkaline earth metal (Group 2), and is preferably Na, K, or Li.

$X^c$ is preferably H, an alkali metal (Group 1), an alkaline earth metal (Group 2), or $NR^{4c}{}_4$, with H, Na, K, Li, or $NH_4$ being more preferable because of being easily soluble in water, Na, K, or $NH_4$ being more preferable because of being more easily soluble in water, Na or $NH_4$ being particularly preferable, and $NH_4$ being most preferable because of being easily removable. When $X^c$ is $NH_4$, the surfactant has excellent solubility in an aqueous medium, and the metal component unlikely remains in the fluorine-containing elastomer or in the final product.

$R^{1c}$ is preferably a linear or branched alkyl group having 1-8 carbon atoms and not containing a carbonyl group, a cyclic alkyl group having 3-8 carbon atoms and not containing a carbonyl group, a linear or branched alkyl group having 2-45 carbon atoms and containing 1-10 carbonyl groups, a cyclic alkyl group having 3-45 carbon atoms and containing a carbonyl group, or an alkyl group containing a monovalent or divalent heterocyclic ring having 3-45 carbon atoms.

$R^{1c}$ is more preferably a group of the formula:

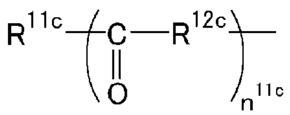

wherein $n^{11c}$ is an integer of 0-10, $R^{11c}$ is a linear or branched alkyl group having 1-5 carbon atoms or a cyclic alkyl group having 3-5 carbon atoms, $R^{12c}$ is an alkylene group having 0-3 carbon atom, and when $n^{11c}$ is an integer of 2-10, $R^{12c}$ are the same as or different from each other.

$n^{11c}$ is preferably an integer of 0-5, more preferably an integer of 0-3, and even more preferably an integer of 1-3.

Preferably, the alkyl group as $R^{11c}$ does not contain a carbonyl group.

In the alkyl group as $R^{11c}$, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula -O-C(=O)-$R^{103c}$, wherein $R^{103c}$ is an alkyl group.

In the alkyl group as $R^{11c}$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

$R^{12c}$ is an alkylene group having 0-3 carbon atoms. The number of carbon atoms is preferably 1-3.

The alkylene group as $R^{12c}$ may be linear or branched.

Preferably, the alkylene group as $R^{12c}$ does not contain a carbonyl group. $R^{12c}$ is more preferably an ethylene group ($-C_2H_4-$) or a propylene group ($-C_3H_6-$).

In the alkylene group as $R^{12c}$, a hydrogen atom bonded to a carbon atom may be replaced with a functional group and, for example, may be replaced with a monovalent organic group containing a hydroxy group (-OH) or an ester bond, while it is preferably not replaced with any functional group.

The monovalent organic group containing an ester bond may be a group of the formula -O-C (=O) -$R^{104c}$, wherein $R^{104c}$ is an alkyl group).

In the alkylene group as $R^{12c}$, 75% or less of the hydrogen atoms bonded to carbon atoms may be replaced with halogen atoms, 50% or less may be replaced with halogen atoms, or 25% or less may be replaced with halogen atoms, and

the alkyl group is preferably a non-halogenated alkylene group that does not contain a halogen atom such as a fluorine atom or a chlorine atom.

$R^{2c}$ and $R^{3c}$ are, each independently, preferably an alkylene group having 1 or more carbon atoms and not containing a carbonyl group, more preferably an alkylene group having 1-3 carbon atoms and not containing a carbonyl group, and even more preferably an ethylene group ($-C_2H_4-$) or a propylene group ($-C_3H_6-$).

The surfactant (d) will now be described.

In formula (d), $R^{1d}$ is a linear or branched alkyl group having 1 or more carbon atoms and optionally having a substituent or a cyclic alkyl group having 3 or more carbon atoms and optionally having a substituent.

When having 3 or more carbon atoms, the alkyl group can contain a monovalent or divalent heterocyclic ring and can form a ring. The heterocyclic ring is preferably an unsaturated heterocyclic ring, and more preferably an oxygen-containing unsaturated heterocyclic ring, such as a furan ring. In $R^{1d}$, a divalent heterocyclic ring may be placed between 2 carbon atoms, a divalent heterocyclic ring may be placed at a terminal and bonded to -C(=O)-, or a monovalent heterocyclic ring may be placed at a terminal of the alkyl group.

Herein, the "number of carbon atoms" of the alkyl group includes the number of carbon atoms constituting the heterocyclic ring.

The substituent that the alkyl group as $R^{1d}$ may have is preferably a halogen atom, a linear or branched alkyl group having 1-10 carbon atoms, a cyclic alkyl group having 3-10 carbon atoms, or a hydroxy group, and is particularly preferably a methyl group or an ethyl group.

Preferably, the alkyl group as $R^{1d}$ does not contain a carbonyl group.

In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

Preferably, the alkyl group does not have any substituent.

$R^{1d}$ is preferably a linear or branched alkyl group having 1-10 carbon atoms and optionally having a substituent or a cyclic alkyl group having 3-10 carbon atoms and optionally having a substituent, more preferably a linear or branched alkyl group having 1-10 carbon atoms and not containing a carbonyl group or a cyclic alkyl group having 3-10 carbon atoms and not containing a carbonyl group, even more preferably a linear or branched alkyl group having 1-10 carbon atoms and not having a substituent, yet more preferably a linear or branched alkyl group having 1-3 carbon atoms and not having a substituent, particularly preferably a methyl group ($-CH_3$) or an ethyl group ($-C_2H_5$), and most preferably a methyl group ($-CH_3$).

In formula (d), $R^{2d}$ and $R^{4d}$ are each independently H or a substituent. A plurality of $R^{2d}$ are the same as or different from each other, and a plurality of $R^{4d}$ are the same as or different from each other.

The substituents as $R^{2d}$ and $R^{4d}$ are, each independently, preferably a halogen atom, a linear or branched alkyl group having 1-10 carbon atoms, a cyclic alkyl group having 3-10 carbon atoms, or a hydroxy group, and particularly preferably a methyl group or an ethyl group.

Preferably, the alkyl group as $R^{2d}$ and $R^{4d}$ does not contain a carbonyl group. In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

Preferably, the alkyl group does not have any substituent.

The alkyl group as $R^{2d}$ and $R^{4d}$ is preferably a linear or branched alkyl group having 1-10 carbon atoms and not containing a carbonyl group or a cyclic alkyl group having 3-10 carbon atoms and not containing a carbonyl group, more preferably a linear or branched alkyl group having 1-10 carbon atoms and not containing a carbonyl group, even more preferably a linear or branched alkyl group having 1-3 carbon atoms and not having a substituent, and particularly preferably a methyl group ($-CH_3$) or an ethyl group ($-C_2H_5$).

$R^{2b}$ and $R^{4b}$ preferably are each independently H or a linear or branched alkyl group having 1-10 carbon atoms and not containing a carbonyl group, more preferably H or a linear or branched alkyl group having 1-3 carbon atom and not having a substituent, even more preferably H, a methyl group ($-CH_3$), or an ethyl group ($-C_2H_5$), and particularly preferably H.

In formula (d), $R^{3d}$ is an alkylene group having 1-10 carbon atoms and optionally having a substituent. When a plurality of $R^{3d}$ are present, $R^{3d}$ are the same as or different from each other.

Preferably, the alkylene group does not contain a carbonyl group.

In the alkylene group, 75% or less of the hydrogen atoms bonded to carbon atoms may be replaced with halogen atoms, 50% or less may be replaced with halogen atoms, or 25% or less may be replaced with halogen atoms, and the alkylene group is preferably a non-halogenated alkylene group that does not contain a halogen atom such as a fluorine atom or a chlorine atom.

Preferably, the alkylene group does not have any substituent.

The alkylene group is preferably a linear or branched alkylene group having 1-10 carbon atoms and optionally having a substituent or a cyclic alkylene group having 3-10 carbon atoms and optionally having a substituent, preferably a linear or branched alkylene group having 1-10 carbon atoms and not containing a carbonyl group or a cyclic alkylene group having 3-10 carbon atoms and not containing a carbonyl group, more preferably a linear or branched alkylene group having 1-10 carbon atoms and not having a substituent, and even more preferably a methylene group ($-CH_2-$), an ethylene group ($-C_2H_4-$), an isopropylene group ($-CH(CH_3)CH_2-$), or a propylene group ($-C_3H_6-$).

Any two of $R^{1d}$, $R^{2d}$, $R^{3d}$, and $R^{4d}$ may be bonded to each other to form a ring.

In formula (d), n is an integer of 1 or more. n is preferably an integer of 1-40, more preferably an integer of 1-30, and even more preferably an integer of 5-25.

In formula (d), p and q are each independently an integer of 0 or more. p is preferably an integer of 0-10, and more preferably 0 or 1. q is preferably an integer of 0-10, and more preferably an integer of 0-5.

The total of n, p, and q is preferably an integer of 6 or more. The total of n, p, and q is more preferably an integer of 8 or more. The total of n, p, and q is also preferably an integer of 60 or less, more preferably an integer of 50 or less, and even more preferably an integer of 40 or less.

In formula (d), $A^d$ is $-SO_3X^d$ or $-COOX^d$ ($X^d$ is H, a metal atom, $NR^{5d}_4$, imidazolium optionally having a substituent, pyridinium optionally having a substituent, or phosphonium optionally having a substituent, and $R^{5d}$ is H or an organic group and are the same as or different from one another). $R^{5d}$ is preferably H or an organic group having 1-10 carbon atoms, and more preferably H or an organic group having 1-4 carbon atoms. The metal atom may be a monovalent or divalent metal atom, such as an alkali metal (Group 1) or an alkaline earth metal (Group 2), and is preferably Na, K, or Li. $X^d$ may be a metal atom or $NR^{5d}_4$ ($R^{5d}$ is as described above) .

$X^d$ is preferably H, an alkali metal (Group 1), an alkaline earth metal (Group 2), or $NR^{5d}_4$, with H, Na, K, Li, or $NH_4$ being more preferable because of being easily soluble in water, Na, K, or $NH_4$ being more preferable because of being more easily soluble in water, Na or $NH_4$ being particularly preferable, and $NH_4$ being most preferable because of being easily removable. When $X^d$ is $NH_4$, the surfactant has excellent solubility in an aqueous medium, and the metal component unlikely remains in the fluorine-containing elastomer or in the final product.

In formula (d), L is a single bond, $-CO_2$-B-*, -OCO-B-*, $-CONR^{6d}$-B-*, $-NR^{6d}$CO-B-*, or -CO- (provided that the carbonyl group contained in - $CO_2$-B-, -OCO-B-, $-CONR^{6d}$-B-, and $-NR^{6d}$CO-B- is excluded), B is a single bond or an alkylene group having 1-10 carbon atoms and optionally having a substituent, and $R^{6d}$ is H or an alkyl group having 1-4 carbon atoms and optionally having a substituent. The alkylene group more preferably has 1-5 carbon atoms. $R^{6d}$ is more preferably H or a methyl group. * indicates the side bonded to $A^d$ in the formula.

L is preferably a single bond.

In the $^1$H-NMR spectrum of the surfactant, the integrated value of all peak intensities observed in a chemical shift region of 2.0-5.0 ppm is preferably 10 or more.

In the $^1$H-NMR spectrum of the surfactant, the integrated value of all peak intensities observed in a chemical shift region of 2.0-5.0 ppm is preferably in the above range. In this case, the surfactant preferably has a ketone structure within the molecule.

In the surfactant, the integrated value is more preferably 15 or more and is preferably 95 or less, more preferably 80 or less, and even more preferably 70 or less.

The integrated value is measured in a heavy-water solvent at room temperature. Heavy water is 4.79 ppm.

The surfactants (a)-(d) may be those described in WO 2018/062448, WO 2018/062449, WO 2018/18906, and WO 2018/18907, and, for example, $CH_3C(O)CH_2CH_2CH_2CH_2CH_2CH_2CH_2CH_2CH_2OSO_3X^b$ ($X^b$ is as described above), and $CH_3C(O)CH_2CH_2CH_2CH_2CH_2CH_2CH_2CH_2CH_2A^d$ ($A^d$ is as described above) can be used.

The anionic hydrocarbon surfactant is, for example, a surfactant ($\alpha$) of formula ($\alpha$):

$$R^{10}\text{-COOM} \qquad (\alpha)$$

wherein $R^{10}$ is a monovalent organic group containing one or more carbon atoms, M is H, a metal atom, $NR^{11}_4$, imidazolium optionally having a substituent, pyridinium optionally having a substituent, or phosphonium optionally having a substituent, and $R^{11}$ is H or an organic group and are the same as or different from one another. $R^{11}$ is preferably H or a $C_{1-10}$ organic group, and more preferably H or a $C_{1-4}$ organic group.

From the viewpoint of surface activity, the number of carbon atoms of $R^{10}$ is preferably 2 or more, and more preferably 3 or more. From the viewpoint of water solubility, the number of carbon atoms of $R^{10}$ is preferably 29 or less, and more preferably 23 or less.

The metal atom of M may be e.g. an alkali metal (Group 1) or an alkaline earth metal (Group 2), and is preferably Na, K, or Li. M is preferably H, a metal atom, or $NR^{11}_4$, more preferably H, an alkali metal (Group 1), an alkaline earth metal (Group 2), or $-NR^{11}_4$, even more preferably H, Na, K, Li, or $NH_4$, yet more preferably Na, K, or $NH_4$, particularly preferably Na or $NH_4$, and most preferably $NH_4$.

The surfactant ($\alpha$) may also be an anionic surfactant represented by $R^{12}$-COOM, wherein $R^{12}$ is a linear or

branched alkyl group, alkenyl group, alkylene group, or alkenylene group having 1 or more carbon atoms and optionally having a substituent, or a cyclic alkyl group, alkenyl group, alkylene group, or alkenylene group having 3 or more carbon atoms and optionally having a substituent, these may contain an ether bond, when the number of carbon atoms is 3 or more, it may contain a monovalent or divalent heterocyclic ring or may form a ring, and M is the same as above. Specifically, the surfactant (α) may be what is represented by $CH_3-(CH_2)_n-COOM$, wherein n is an integer of 2-28, and M is the same as above.

From the viewpoint of emulsion stability, the surfactant (α) may be a surfactant that does not contain a carbonyl group (excluding the carbonyl group in a carboxyl group).

A preferable example of the hydrocarbon surfactant that does not contain a carbonyl group is a compound of formula (α-1):

$$R^{13}\text{-COO-M} \qquad (\alpha\text{-}1)$$

wherein $R^{13}$ is an alkyl group, an alkenyl group, an alkylene group, or an alkenylene group, these may contain an ether bond, M is H, a metal atom, $NR^{11}_4$, imidazolium optionally having a substituent, pyridinium optionally having a substituent, or phosphonium optionally having a substituent, and $R^{11}$, which are the same as or different from one another, are H or an organic group having 1-10 carbon atoms.

In formula (α-1), $R^{13}$ is preferably an alkyl group or an alkenyl group (these may contain an ether group). The alkyl group or the alkenyl group in $R^{13}$ may be linear or branched. The carbon number of $R^{13}$ is not limited, and is, for example, 2-29, and preferably 4-29.

The number of carbon atoms of $R^{13}$ may be 6-17. When the alkyl group is linear, the number of carbon atoms of $R^{13}$ is preferably 3-29, and more preferably 5-23. When the alkyl group is branched, the number of carbon atoms of $R^{13}$ is preferably 5-35, and more preferably 11-23.

When the alkenyl group is linear, the number of carbon atoms of R is preferably 2-29, and more preferably 9-23. When the alkenyl group is branched, the number of carbon atoms of R is preferably 4-29, and more preferably 9-23.

Examples of the alkyl group and the alkenyl group include a methyl group, an ethyl group, an isobutyl group, a t-butyl group, and a vinyl group.

$R^{10}$, $R^{12}$, and $R^{13}$ are, each independently, preferably a hydrocarbon group, more preferably a hydrocarbon group that does not contain an unsaturated bond, even more preferably a linear or branched alkyl group, and particularly preferably a linear alkyl group.

The hydrocarbon group of $R^{10}$, $R^{12}$, and $R^{13}$ may be a group consisting solely of carbon atoms and hydrogen atoms. $R^{10}$, $R^{12}$, and $R^{13}$ may be each independently a hydrocarbon group that does not contain a carbonyl group, and may be an alkyl group that does not contain a carbonyl group.

The number of carbon atoms of the hydrocarbon group of $R^{10}$, $R^{12}$, and $R^{13}$ is preferably 1-2,000, more preferably 1-30, even more preferably 5-24, and particularly preferably 8-18.

The number of carbon atoms of the alkyl group of $R^{10}$, $R^{12}$, and $R^{13}$ is preferably 1-2,000, more preferably 1-30, even more preferably 5-24, and particularly preferably 8-18.

Examples of the surfactant (α) (a carboxylic acid-type hydrocarbon surfactant) include butyric acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)-linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, α-eleostearic acid, β-eleostearic acid, mead acid, dihomo-γ-linolenic acid, eicosatrienoic acid, stearidonic acid, arachidonic acid, eicosatetraenoic acid, adrenic acid, bosseopentaenoic acid, eicosapentaenoic acid, osbondic acid, clupanodonic acid, tetracosapentaenoic acid, docosahexaenoic acid, herring acid, and salts thereof.

In particular, at least one selected from lauric acid, capric acid, myristic acid, pentadecylic acid, palmitic acid, and salts thereof is preferable.

Examples of the salts include those in which the hydrogen of a carboxyl group is M of the above-described formula, i.e., a metal atom, $NR^{11}_4$, imidazolium optionally having a substituent, pyridinium optionally having a substituent, or phosphonium optionally having a substituent.

The surfactant (α) (a carboxylic acid-type hydrocarbon surfactant), in terms of that fluorine-containing elastomer particles having a small average particle size can be obtained by polymerization and also that a large number of fluorine-containing elastomer particles are produced during polymerization to thus enable a fluorine-containing elastomer to be efficiently produced, is preferably at least one selected from lauric acid, capric acid, myristic acid, pentadecylic acid, palmitic acid, and salts thereof, more preferably lauric acid and salts thereof, particularly preferably salts of lauric acid, and most preferably sodium laurate.

A preferable example of the hydrocarbon surfactant is a surfactant of formula (β) (hereinafter, also referred to as surfactant (β)):

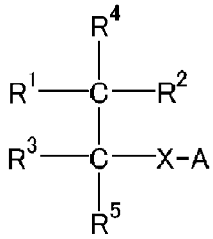

wherein $R^1$-$R^5$ each independently represent H or a monovalent substituent, provided that at least one of $R^1$ and $R^3$ is a group of the formula -Y-$R^6$, and at least one of $R^2$ and $R^5$ represents a group of the formula -X-A, or a group of the formula -Y-$R^6$, and

X is the same or different at each occurrence, and represents a divalent linking group or a bond;
A is the same or different at each occurrence, and represents -COOM, -$SO_3$M, or -$OSO_3$M (M is H, a metal atom, $NR^7_4$, imidazolium optionally having a substituent, pyridinium optionally having a substituent, or phosphonium optionally having a substituent, and $R^7$ represents H or an organic group);
Y is the same or different at each occurrence, and represents a divalent linking group selected from -S(=O)$_2$-, -O-, -COO-, -OCO-, -CONR$^8$- and -NR$^8$CO-, or a bond, and $R^8$ is H or an organic group;
$R^6$ is the same or different at each occurrence, and represents an alkyl group having 1 or more carbon atoms and optionally containing between carbon atoms at least one selected from a carbonyl group, an ester group, an amide group, and a sulfonyl group; and
any two of $R^1$-$R^5$ may be bonded to each other to form a ring.

The surfactant (β) will now be described.
In the formula, $R^1$-$R^5$ each independently represent H or a monovalent substituent, provided that at least one of $R^1$ and $R^3$ is a group of the formula -Y-$R^6$, and at least one of $R^2$ and $R^5$ represents a group of the formula -X-A, or a group of the formula -Y-$R^6$. Any two of $R^1$-$R^5$ may be bonded to each other to form a ring.
The substituent that the alkyl group as $R^1$ may have is preferably a halogen atom, a linear or branched alkyl group having 1-10 carbon atoms, a cyclic alkyl group having 3-10 carbon atoms, or a hydroxy group, and is particularly preferably a methyl group or an ethyl group.
Preferably, the alkyl group as $R^1$ does not contain a carbonyl group.
In the alkyl group, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.
Preferably, the alkyl group does not have any substituent.
$R^1$ is preferably a linear or branched alkyl group having 1-10 carbon atoms and optionally having a substituent or a cyclic alkyl group having 3-10 carbon atoms and optionally having a substituent, more preferably a linear or branched alkyl group having 1-10 carbon atoms and not containing a carbonyl group or a cyclic alkyl group having 3-10 carbon atoms and not containing a carbonyl group, even more preferably a linear or branched alkyl group having 1-10 carbon atoms and not having a substituent, yet more preferably a linear or branched alkyl group having 1-3 carbon atoms and not having a substituent, particularly preferably a methyl group (-$CH_3$) or an ethyl group (-$C_2H_5$), and most preferably a methyl group (-$CH_3$).
The monovalent substituent is preferably a group of the formula -Y-$R^6$, a group of the formula -X-A, -H, a $C_{1-20}$ alkyl group optionally having a substituent, -$NH_2$, -NHR$^9$ ($R^9$ is an organic group), -OH, -COOR$^9$ ($R^9$ is an organic group), or -OR$^9$ ($R^9$ is an organic group). The number of carbon atoms of the alkyl group is preferably 1-10.
$R^9$ is preferably a $C_{1-10}$ alkyl group or a $C_{1-10}$ alkylcarbonyl group, and more preferably a $C_{1-4}$ alkyl group or a $C_{1-4}$ alkylcarbonyl group.
In the formula, X is the same or different at each occurrence, and represents a divalent linking group or a bond. When $R^6$ does not contain any of a carbonyl group, an ester group, an amide group, and a sulfonyl group, X is preferably a divalent linking group containing at least one selected from a carbonyl group, an ester group, an amide group, and a sulfonyl group.
X is preferably a divalent linking group containing at least one bond selected from -CO-, -S(=O)$_2$-, -O-, -COO-, -OCO-, -S(=O)$_2$-O-, -O-S(=O)$_2$-, -CONR$^8$-, and -NR$^8$CO-, a $C_{1-10}$ alkylene group, or a bond. $R^8$ represents H or an organic

group.

$R^8$ is preferably H or a $C_{1-10}$ organic group, more preferably H or a $C_{1-4}$ organic group, and even more preferably H.

In the formula, A is the same or different at each occurrence, and represents -COOM, $-SO_3M$, or $-OSO_3M$ (M is H, a metal atom, $NR^7_4$, imidazolium optionally having a substituent, pyridinium optionally having a substituent, or phosphonium optionally having a substituent, and $R^7$ represents H or an organic group; and four $R^7$ are the same as or different from one another). In one suitable embodiment, A is -COOM in general formula (β).

$R^7$ is preferably H or a $C_{1-10}$ organic group, and more preferably H or a $C_{1-4}$ organic group.

The metal atom may be e.g. an alkali metal (Group 1) or an alkaline earth metal (Group 2), and is preferably Na, K, or Li.

M is preferably H, a metal atom, or $NR^7_4$, more preferably H, an alkali metal (Group 1), an alkaline earth metal (Group 2), or $-NR^7_4$, even more preferably H, Na, K, Li, or $NH_4$, yet more preferably Na, K, or $NH_4$, particularly preferably Na or $NH_4$, and most preferably $NH_4$.

In the formula, Y is the same or different at each occurrence, and represents a divalent linking group selected from $-S(=O)_2-$, -O-, $-COO^-$, -OCO-, $-CONR^8-$ and $-NR^8CO-$, or a bond, and $R^8$ is H or an organic group.

Y is preferably a divalent linking group selected from a bond, -O-, -COO-, -OCO-, $-CONR^8-$, and $-NR^8CO-$, and more preferably a divalent linking group selected from a bond, -COO-, and -OCO-.

$R^8$ is preferably H or a $C_{1-10}$ organic group, more preferably H or a $C_{1-4}$ organic group, and even more preferably H.

In the formula, $R^6$ is the same or different at each occurrence, and represents an alkyl group having 1 or more carbon atoms and optionally containing between carbon atoms at least one selected from a carbonyl group, an ester group, an amide group, and a sulfonyl group. The number of carbon atoms of the organic group of $R^6$ is preferably 2 or more, preferably 20 or less, more preferably 2-20, and even more preferably 2-10.

The alkyl group of $R^6$, when having 2 or more carbon atoms, may contain between carbon atoms 1 or 2 or more units of at least one selected from a carbonyl group, an ester group, an amide group, and a sulfonyl group, but none of these groups is contained at either end of the alkyl group. In the alkyl group of $R^6$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

$R^6$ is preferably

a group represented by $-R^{10}-CO-R^{11}$, $-R^{13}-COO-R^{11}$, $-R^{11}$, $-R^{10}-NR^8CO-R^{11}$, or $-R^{10}-CONR^8-R^{11}$, wherein $R^8$ represents H or an organic group, $R^{10}$ is an alkylene group, and $R^{11}$ is an alkyl group optionally having a substituent.

$R^6$ is more preferably a group represented by $-R^{10}-CO-R^{11}$.

$R^8$ is preferably H or a $C_{1-10}$ organic group, more preferably H or a $C_{1-4}$ organic group, and even more preferably H.

The number of carbon atoms of the alkylene group of $R^{10}$ is preferably 1 or more and more preferably 3 or more, and is preferably 20 or less, more preferably 12 or less, even more preferably 10 or less, and particularly preferably 8 or less. The number of carbon atoms of the alkylene group of $R^{10}$ is preferably 1-20, more preferably 1-10, and even more preferably 3-10.

The number of carbon atoms of the alkyl group of $R^{11}$ may be 1-20, and is preferably 1-15, more preferably 1-12, even more preferably 1-10, yet more preferably 1-8, further preferably 1-6, further more preferably 1-3, particularly preferably 1 or 2, and most preferably 1. The alkyl group of $R^{11}$ is preferably composed solely of primary carbon, secondary carbon, or tertiary carbon, and particularly preferably composed solely of primary carbon or secondary carbon. That is to say, $R^{11}$ is preferably a methyl group, an ethyl group, an n-propyl group, or an isopropyl group, and most preferably a methyl group.

In one suitable embodiment, at least one of $R^2$ and $R^5$ is a group -X-A, and A is -COOM in formula (β).

The surfactant (β) is preferably a compound of formula (β-1), (β-2), or (β-3), and more preferably a compound of formula (β-1) or (β-2).

General formula (β-1):

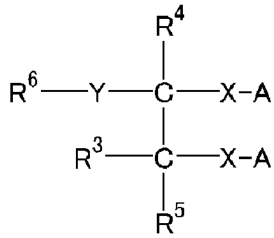

wherein $R^3$-$R^6$, X, A, and Y are as described above.

General formula (β-2):

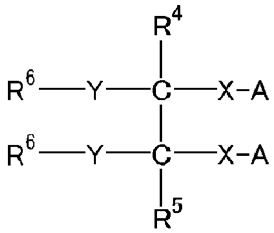

wherein $R^4$-$R^6$, X, A, and Y are as described above.

General formula (β-3):

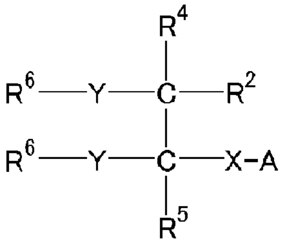

wherein $R^2$, $R^4$-$R^6$, X, A, and Y are as described above.

The group of the formula -X-A is preferably

-COOM,

-$R^{12}$COOM,

-$SO_3$M,

-$OSO_3$M,

-$R^{12}SO_3$M,

-$R^{12}OSO_3$M,

-OCO-$R^{12}$-COOM,

-OCO-$R^{12}$-$SO_3$M,

-OCO-$R^{12}$-$OSO_3$M

-COO-$R^{12}$-COOM,

-COO-$R^{12}$-$SO_3$M,

$-COO-R^{12}-OSO_3M$,

$-CONR^8-R^{12}-COOM$,

$-CONR^8-R^{12}-SO_3M$,

$-CONR^8-R^{12}-OSO_3M$,

$-NR^8CO-R^{12}-COOM$,

$-NR^8CO-R^{12}-SO_3M$,

$-NR^8CO-R^{12}-OSO_3M$,

$-OS(=O)_2-R^{12}-COOM$,

$-OS(=O)_2-R^{12}-SO_3M$,

or

$-OS(=O)_2-R^{12}-OSO_3M$

wherein $R^8$ and M are as described above, and $R^{12}$ is a $C_{1-10}$ alkylene group.

In the alkylene group of $R^{12}$, 75% or less of the hydrogen atoms bonded to carbon atoms may be replaced with halogen atoms, 50% or less may be replaced with halogen atoms, or 25% or less may be replaced with halogen atoms, and the alkylene group is preferably a non-halogenated alkyl group that does not contain a halogen atom such as a fluorine atom or a chlorine atom.

The group of the formula $-Y-R^6$ is preferably a group represented by $-R^{10}-CO-R^{11}$, $-OCO-R^{10}-CO-R^{11}$, $-COO-R^{10}-CO-R^{11}$, $-OCO-R^{10}-COO-R^{11}$, $-COO-R^{11}$, $-NR^BCO-R^{10}-CO-R^{11}$, or $-CONR^B-R^{10}-NR^BCO-R^{11}$, wherein $R^8$, $R^{10}$, and $R^{11}$ are as described above.

In the formula, $R^4$ and $R^5$ are each independently preferably H or a $C_{1-4}$ alkyl group.

In the alkyl group of $R^4$ and $R^5$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

$R^3$ in formula (β-1) is preferably H or a $C_{1-20}$ alkyl group optionally having a substituent, more preferably H or a $C_{1-20}$ alkyl group that does not have a substituent, and even more preferably H.

In the alkyl group of $R^3$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

$R^2$ in formula (β-3) is preferably H, OH, or a $C_{1-20}$ alkyl group optionally having a substituent, more preferably H, OH, or a $C_{1-20}$ alkyl group that does not have a substituent, and even more preferably H or OH.

In the alkyl group of $R^2$, 75% or less of the hydrogen atoms bonded to carbon atoms may be replaced with halogen atoms, 50% or less may be replaced with halogen atoms, or 25% or less may be replaced with halogen atoms, and the alkyl group is preferably a non-halogenated alkyl group that does not contain a halogen atom such as a fluorine atom or a chlorine atom.

The hydrocarbon surfactant (B) is preferably an anionic hydrocarbon among others, and, in particular, a hydrocarbon surfactant having $-PO_3M(-PO(CM)_2)$, $-OPO_3M(-OPO(CM)_2)$, $-SO_3M$, $-OSO_3M$, -COOM, $-B(OM)_2$ or $-OB(OM)_2$ (M is H, a metal atom, $NR^7_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring). A hydrocarbon surfactant having $-SO_3M$, $-OSO_3M$, or -COOM (M is the same as above) is more preferable. When two M are contained in each formula, the two M are the same as or different from each other.

The anionic hydrocarbon surfactant is also, for example, a surfactant (γ) of formula (γ):

$R^{14}-Y^3$ (γ)

wherein $R^{14}$ represents an aliphatic hydrocarbon group optionally containing a carbonyl group, and $Y^3$ is a hydrophilic group.

$Y^3$ of formula ($\gamma$) is preferably $-PO_3M$, $-OPO_3M$, $-SO_3M$, $-OSO_3M$, -COOM, - $B(OM)_2$, or $-OB(OM)_2$, wherein M is H, a metal atom, $NR^7_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring.

The number of carbon atoms of the aliphatic hydrocarbon group of $R^{14}$ is preferably 1-2,000, more preferably 1-100, even more preferably 1-30, particularly preferably 5-24, and most preferably 8-18.

In formula (y), $R^{14}$ is preferably an aliphatic hydrocarbon group containing one or more carbonyl groups. Examples of such a surfactant include the above-described surfactant (a) and surfactant (b).

In formula (y), the aliphatic hydrocarbon group of $R^{14}$ is also preferably a linear or branched alkyl group. The number of carbon atoms of the alkyl group is preferably 1-2,000, more preferably 1-30, even more preferably 5-24, and particularly preferably 8-18. Examples of such surfactants include surfactants represented by $CH_3-(CH_2)_n-OSO_3M$, wherein n is an integer of 7-17, and M is the same as above.

The hydrocarbon surfactant (B) is preferably at least one selected from the surfactant (c), the surfactant (d), the surfactant ($\alpha$), the surfactant ($\beta$), and the surfactant ($\gamma$).

Another example of a surfactant suitable as the hydrocarbon surfactant (B) is a surfactant of the formula:

$$R^{15}-Y^5$$

wherein $R^{15}$ is an aliphatic hydrocarbon group, and $Y^5$ is a hydrophilic group.

The aliphatic hydrocarbon group of $R^{15}$ is preferably a hydrocarbon group that does not contain an unsaturated bond, more preferably a linear or branched alkyl group, and even more preferably a linear alkyl group.

The hydrocarbon group of $R^{15}$ may be a group consisting solely of carbon atoms and hydrogen atoms. $R^{15}$ may be an aliphatic hydrocarbon group that does not contain a carbonyl group, and may be an aliphatic hydrocarbon group that does not contain a carbonyl group.

The number of carbon atoms of the hydrocarbon group of $R^{15}$ is preferably 1-2,000, more preferably 1-30, even more preferably 5-24, and particularly preferably 8-18.

Another example of a surfactant suitable as the hydrocarbon surfactant (B) is a surfactant of the formula:

$$CH_3-(CH_2)_n-Y^5$$

wherein n is an integer of 1-2,000, and $Y^5$ is a hydrophilic group.

$Y^5$ is preferably $-NH_2$, $-PO_3M(-PO(OM)_2)$, $-OPO_3M(-OPO(OM)_2)$, $-SO_3M$, $-OSO_3M$, -COOM, $-B(OM)_2$, or $-OB(OM)_2$ (wherein M is H, a metal atom, $NR^7_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring), more preferably $-PO_3M(-PO(OM)_2)$, $-OPO_3M(-OPO(OM)_2)$, $-SO_3M$, $-OSO_3M$, -COOM, $-B(OM)_2$, or $-OB(OM)_2$, and even more preferably $-SO_3M$, $-OSO_3M$, or -COOM.

M constituting $Y^5$ is preferably H, an alkali metal, or $NH_4$, and more preferably H, Na, K, or $NH_4$.

The hydrocarbon surfactant (B) is preferably at least one selected from enanthic acid, heptanesulfonic acid, heptyl sulfate, octanoic acid, octyl sulfonic acid, octyl sulfate, pelargonic acid, nonanesulfonic acid, nonyl sulfate, decanoic acid, decanesulfonic acid, decyl sulfate, undecenoic acid, undecanesulfonic acid, undecyl sulfate, lauric acid, dodecylsulfonic acid, dodecyl sulfate (lauryl sulfate), tridecanoic acid, tridecanesulfonic acid, tridecyl sulfate, and salts thereof, and more preferably at least one selected from lauryl sulfate, octyl sulfate, lauric acid, dodecyl sulfonic acid, and salts thereof. The salts thereof are preferably sodium salts, potassium salts, and ammonium salts thereof.

In the production method of the present disclosure, two or more of the hydrocarbon surfactants may be used at the same time.

In the production method of the present disclosure, the emulsion polymerization can be carried out by, for example, introducing pure water, the fluorine-containing compound (A), and the hydrocarbon surfactant (B) into a pressure-tight reaction vessel equipped with a stirrer, deoxygenating the reaction container, then introducing a monomer, heating the reaction vessel to a predetermined temperature, and adding a polymerization initiator to start the reaction. Since the pressure decreases as the reaction progresses, an additional monomer is continuously or intermittently fed to maintain the initial pressure, the feeding is stopped when a predetermined amount of the monomer is fed, the monomer in the reaction container is purged, and the temperature is returned to room temperature to terminate the reaction.

In the emulsion polymerization, the amount of the fluorine-containing compound (A) is preferably an amount corresponding to 3-5,000 ppm of the aqueous medium. The amount of the fluorine-containing compound (A) is preferably an amount corresponding to 5 ppm or more, more preferably an amount corresponding to 10 ppm or more, even more

preferably an amount corresponding to 20 ppm or more, and particularly preferably an amount corresponding to 30 ppm of the aqueous medium, and is more preferably an amount corresponding to 1,000 ppm or less, an amount corresponding to 500 ppm or less, even more preferably an amount corresponding to 85 ppm or less, and particularly preferably an amount corresponding to 75 ppm or less.

It is also preferable to regulate the amount of the fluorine-containing compound (A) according to the type of the polymerization initiator used in the polymerization and the polymerization temperature.

When using a non-redox polymerization initiator as the polymerization initiator and performing polymerization at 40-70°C, the amount of the fluorine-containing compound (A) is preferably an amount corresponding to 3-300 ppm, more preferably an amount corresponding to 3-150 ppm, even more preferably an amount corresponding to 5-100 ppm, and most preferably an amount corresponding to 8-80 ppm of the aqueous medium.

When using a non-redox polymerization initiator as the polymerization initiator and performing polymerization at higher than 70°C and 98°C or lower, the amount of the fluorine-containing compound (A) is preferably an amount corresponding to 3-500 ppm, more preferably an amount corresponding to 3-200 ppm, even more preferably an amount corresponding to 5-120 ppm, and most preferably an amount corresponding to 20-110 ppm of the aqueous medium.

When using a redox polymerization initiator as the polymerization initiator and performing polymerization at 10°C or higher and lower than 40°C, the amount of the fluorine-containing compound (A) is preferably an amount corresponding to 3-300 ppm, more preferably an amount corresponding to 3-100 ppm, even more preferably an amount corresponding to 5-80 ppm, and most preferably an amount corresponding to 10-70 ppm of the aqueous medium.

When using a redox polymerization initiator as the polymerization initiator and performing polymerization at 40-70°C, the amount of the fluorine-containing compound (A) is preferably an amount corresponding to 3-500 ppm, more preferably an amount corresponding to 5-300 ppm, even more preferably an amount corresponding to 10-200 ppm, and most preferably an amount corresponding to 15-150 ppm of the aqueous medium.

When using a redox polymerization initiator as the polymerization initiator and performing polymerization at higher than 70°C and 98°C or lower, the amount of the fluorine-containing compound (A) is preferably an amount corresponding to 5-500 ppm, more preferably an amount corresponding to 8-300 ppm, even more preferably an amount corresponding to 15-200 ppm, and most preferably an amount corresponding to 20-150 ppm of the aqueous medium.

With the amount being within the above range, the adhesion rate can be more reduced, and the polymerization time can be shortened.

The fluorine-containing compound (A) is preferably added before the polymerization initiator is added to start the polymerization reaction. Preferably, the fluorine-containing compound (A) is added only before the beginning of the polymerization reaction and not added after the initiation of polymerization.

In the emulsion polymerization, the amount of the hydrocarbon surfactant (B) is an amount corresponding to 3-200 ppm of the aqueous medium. The amount of the hydrocarbon surfactant (B) is preferably an amount corresponding to 5 ppm or more, more preferably an amount corresponding to 10 pm or more, even more preferably an amount corresponding to 20 ppm or more, and particularly preferably an amount corresponding to 30 ppm of the aqueous medium.

It is also preferable to regulate the amount of the hydrocarbon surfactant (B) according to the type of the polymerization initiator used in the polymerization and the polymerization temperature.

When using a non-redox polymerization initiator as the polymerization initiator and performing polymerization at 40-70°C, the amount of the hydrocarbon surfactant (B) is preferably an amount corresponding to 5-200 ppm, more preferably 10-200 ppm, and most preferably 25-120 ppm of the aqueous medium.

When using a non-redox polymerization initiator as the polymerization initiator and performing polymerization at higher than 70°C and 98°C or lower, the amount of the hydrocarbon surfactant (B) is preferably an amount corresponding to 5-100 ppm, more preferably 10-70 ppm of the aqueous medium.

When using a redox polymerization initiator as the polymerization initiator and performing polymerization at 40-70°C, the amount of the hydrocarbon surfactant (B) is preferably an amount corresponding to 5-200 ppm, more preferably 10-200 ppm, and most preferably 20-200 ppm of the aqueous medium.

When using a redox polymerization initiator as the polymerization initiator and performing polymerization at higher than 70°C and 98°C or lower, the amount of the hydrocarbon surfactant (B) is preferably an amount corresponding to 5-200 ppm, more preferably 10-200 ppm, even more preferably 15-200 ppm, and most preferably 25-100 ppm of the aqueous medium.

With the amount being within the above range, the adhesion rate can be more reduced, and the polymerization time can be shortened.

The hydrocarbon surfactant (B) is preferably added before the polymerization initiator is added to start the polymerization reaction. Preferably, the hydrocarbon surfactant (B) is added only before the beginning of the polymerization reaction and not added after the initiation of polymerization.

In the emulsion polymerization, the mass ratio (A/B) of the fluorine-containing compound (A) to the hydrocarbon surfactant (B) is preferably (5/95)-(95/5), more preferably (10/90)-(90/10), even more preferably (15/85)-(65/35), and particularly preferably (20/80)-(60/40).

With the amount being within the above range, the adhesion rate can be more reduced, and the polymerization time can be shortened.

It is also preferable to regulate the mass ratio (A/B) of the fluorine-containing compound (A) to the hydrocarbon surfactant (B) according to the type of the polymerization initiator used in the polymerization and the polymerization temperature.

When using a non-redox polymerization initiator as the polymerization initiator and performing polymerization at 40-70°C, the mass ratio (A/B) of the fluorine-containing compound (A) to the hydrocarbon surfactant (B) is preferably (7/93)-(80/20), more preferably (10/90)-(65/35), and even more preferably (15/85)-(40/60).

When using a non-redox polymerization initiator as the polymerization initiator and performing polymerization at > 70°C to ≤ 98°C, the mass ratio (A/B) of the fluorine-containing compound (A) to the hydrocarbon surfactant (B) is preferably (15/85)-(85/15), more preferably (20/80)-(80/20), and even more preferably (30/70)-(60/40).

When using a redox polymerization initiator as the polymerization initiator and performing polymerization at 10°C or higher and lower than 40°C, the mass ratio (A/B) of the fluorine-containing compound (A) to the hydrocarbon surfactant (B) is preferably (5/95)-(70/30), more preferably (10/90)-(60/40), and even more preferably (15/85)-(35/65).

When using a redox polymerization initiator as the polymerization initiator and performing polymerization at 40 to 70°C, the mass ratio (A/B) of the fluorine-containing compound (A) to the hydrocarbon surfactant (B) is preferably (5/95)-(70/30), more preferably (10/90)-(60/40), and even more preferably (15/85)-(50/50).

When using a redox polymerization initiator as the polymerization initiator and performing polymerization at > 70°C to ≤ 98°C, the mass ratio (A/B) of the fluorine-containing compound (A) to the hydrocarbon surfactant (B) is preferably (5/95)-(70/30), more preferably (10/90)-(60/40), and even more preferably (15/85)-(50/50).

The emulsion polymerization is preferably carried out in the presence of a polymerization initiator such as a radical polymerization initiator. The radical polymerization initiator is not limited as long as it can produce radicals in the above polymerization temperature range, and a known oil-soluble and/or water-soluble polymerization initiator can be used while a water-soluble polymerization initiator is preferable.

Moreover, polymerization can be started with a redox initiator obtained by combining the radical polymerization initiator with e.g. a reducing agent. The concentration of the polymerization initiator is suitably determined according to the type of monomer, the molecular weight of the intended fluorine-containing elastomer, and the reaction rate.

The concentration of the polymerization initiator added is suitably determined according to the molecular weight of the intended fluorine-containing elastomer and the polymerization reaction rate, and is set to an amount of 0.0001-10 mass% and preferably 0.01-5 mass% based on 100 mass% of the total amount of the monomer.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate, peroxyesters such as t-butylperoxyisobutyrate and t-butylperoxypivalate, dialkyl peroxides such as di-t-butyl peroxide, and di[perfluoro (or fluorochloro)acyl] peroxides such as di(ω-hydro-dodecafluorohexanoyl) peroxide, di(ω-hydro-tetradecafluoroheptanoyl) peroxide, di(ω-hydro-hexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl-peroxide, ω-chloro-hexafluorobutyryl-ω-chloro-decafluorohexanoyl-peroxide, ω-u hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorodotoriacontafluorodocosanoyl) peroxide.

The water-soluble radical polymerization initiator may be a known water-soluble peroxide, and examples include ammonium salts, potassium salts, and sodium salts of persulfuric acid, perboric acid, perchloric acid, perphosphoric acid, and percarbonic acid, organic peroxides such as disuccinic acid peroxide and diglutaric acid peroxide, t-butyl permaleate, and t-butyl hydroperoxide. A reducing agent such as a sulfite or a sulfurous acid salt may be contained together, and the amount of the reducing agent used may be 0.1-20 times the amount of the peroxide.

The water-soluble peroxide is preferably a salt of persulfuric acid because the amount of radicals to be produced can be easily regulated, and potassium persulfate ($K_2S_2O_8$) and ammonium persulfate ($(NH_4)_2S_2O_8$) are preferable, and ammonium persulfate is most preferable.

When the polymerization is carried out using a water-soluble peroxide at a polymerization temperature of 45°C or higher, polymerization is carried out without using a reducing agent.

For example, when polymerization is carried out at a low temperature of 60°C or lower, the polymerization initiator is preferably a redox initiator obtained by combining an oxidizing agent and a reducing agent. That is to say, the emulsion polymerization is preferably carried out in the presence of a redox initiator.

Examples of the oxidizing agent include persulfates, organic peroxides, potassium permanganate, manganese

triacetate, ammonium cerium nitrate, and bromic acid salts. Examples of the reducing agent include sulfurous acid salts, bisulfurous acid salts, bromic acid salts, diimine, oxalic acid, and sulfinic acid metal salts. Examples of persulfates include ammonium persulfate and potassium persulfate. Examples of sulfurous acid salts include sodium sulfite and ammonium sulfite. To increase the decomposition rate of the initiator, a copper salt or an iron salt is also preferably added to the redox initiator combination. The copper salt may be copper(II) sulfate, and the iron salt may be iron(II) sulfate. When a copper salt or an iron salt is used, a chelating agent is added particularly preferably. The chelating agent is preferably disodium ethylenediaminetetraacetate dihydrate.

Examples of the redox initiator include potassium permanganate/oxalic acid, ammonium persulfate/a bisulfurous acid salt/iron(II) sulfate, ammonium persulfate/a sulfurous acid salt/iron (II) sulfate, ammonium persulfate/a sulfurous acid salt, ammonium persulfate/iron(II) sulfate, manganese triacetate/oxalic acid, cerium ammonium nitrate/oxalic acid, a bromic acid salt/a sulfurous acid salt, a bromic acid salt/a bisulfurous acid salt, and ammonium persulfate/sodium hydroxymethanesulfinate dihydrate, and ammonium persulfate/sodium hydroxymethanesulfinate dihydrate is preferable.

When using a redox initiator, one of an oxidizing agent and a reducing agent may be introduced into a polymerization tank in advance, and then the other may be added continuously or intermittently to start polymerization. For example, when using ammonium persulfate/sodium hydroxymethanesulfinate dihydrate, preferably ammonium persulfate is introduced into a polymerization tank, and then sodium hydroxymethanesulfinate dihydrate is continuously added thereto.

The amount of persulfate used in the redox initiator is preferably 0.001-2.0 mass%, more preferably 0.01-1.5 mass%, and particularly preferably 0.05-1.0 mass% based on the aqueous medium used in emulsion polymerization.

The amount of the reducing agent used is preferably 1-30 mass%, more preferably 3-25 mass%, and particularly preferably 5-20 mass% based on the aqueous medium used in emulsion polymerization.

The amount of the third component (such as the above copper salt or iron salt) used is preferably 0.001-0.5 mass%, more preferably 0.005-0.4 mass%, and particularly preferably 0.01-0.3 mass% based on the aqueous medium used in emulsion polymerization.

In one preferable embodiment, the emulsion polymerization is carried out in the presence of a water-soluble polymerization initiator, the fluorine-containing compound (A), and the hydrocarbon surfactant (B).

The water-soluble polymerization initiator is distinguished from an oil-soluble polymerization initiator such as oil-soluble peroxide. Examples of the water-soluble polymerization initiator include the above water-soluble radical polymerization initiators such as the persulfuric acid salts described above. A redox initiator in which a water-soluble oxidizing agent and reducing agent are used is also a water-soluble polymerization initiator. For example, the water-soluble polymerization initiator may be a redox initiator in which the oxidizing agent is a persulfate, potassium permanganate, manganese triacetate, ammonium cerium nitrate, or a bromic acid salt, and the reducing agent is a sulfurous acid salt, a bisulfurous acid salt, a bromic acid salt, diimine, oxalic acid, or a sulfinic acid metal salt.

In the above embodiment, it is sufficient that there is a period when the water-soluble polymerization initiator, the fluorine-containing compound (A), and the hydrocarbon-based surfactant (B) are present at the same time during polymerization, and the water-soluble polymerization initiator, the fluorine-containing compound (A), and the hydrocarbon-based surfactant (B) do not need to be present at the same time during the entire period of polymerization.

In the production method of the present disclosure, the fluorine-containing compound (A) is preferably present in the aqueous medium before causing the entirety of the polymerization initiator used in the polymerization step of providing a fluorine-containing elastomer by emulsion polymerization to be present. The hydrocarbon surfactant (B) is also preferably present in the aqueous medium before causing the entirety of the polymerization initiator used in the polymerization of providing a fluorine-containing elastomer by emulsion polymerization step to be present.

In the production method of the present disclosure, the fluorine-containing compound (A) and the hydrocarbon surfactant (B) are preferably present in the aqueous medium before causing the entirety of the polymerization initiator used in the polymerization of providing a fluorine-containing elastomer by emulsion polymerization step to be present.

The expression "the entirety of the polymerization initiator used in the polymerization step of providing a fluorine-containing elastomer" means the entirety of the polymerization initiator added by the end of polymerization.

It is sufficient that "before the entirety of the polymerization initiator is added" is before adding a first portion of the polymerization initiator during polymerization. For example, in the case of adding the polymerization initiator 5 times, it is before the first addition. When polymerization is carried out in a divided manner as in the case of seed polymerization, it is before the addition of the polymerization initiator used at the time of polymerization for producing seed particles.

The method for causing the polymerization initiator to be present may be, for example, a method involving adding the polymerization initiator to a reaction container. As for a method for causing the fluorine-containing compound (A) and the hydrocarbon surfactant (B) to be present in an aqueous medium, for example, the fluorine-containing compound (A) and the hydrocarbon surfactant (B) may be introduced into a reaction container together with an aqueous medium, or may be introduced into a reaction container after adding e.g.an aqueous medium. The same applies below.

In the polymerization step, the hydrocarbon surfactant (B) is preferably present in the aqueous medium when the solid concentration of the fluorine-containing elastomer in the aqueous medium is 1.0 mass% or less. The hydrocarbon

surfactant (B) is more preferably present when the solid concentration is 0.8 mass% or less, even more preferably present when 0.5 mass% or less, yet more preferably present when 0.1 mass% or less, and particularly preferably present when 0.0 mass%. The solid concentration is the concentration of solids relative to the total of the aqueous medium and the fluorine-containing elastomer.

The hydrocarbon surfactant (B) should be present at the time of the above solid content concentration, and the hydrocarbon surfactant (B) may also or may not be added after the above solid content concentration is exceeded.

In the polymerization step, the hydrocarbon surfactant (B) is preferably present in the aqueous medium before causing the polymerization initiator to be present. The hydrocarbon surfactant (B) may also or may not be added after the polymerization initiator is present.

In the polymerization step, the fluorine-containing compound (A) is preferably present in the aqueous medium when the solid concentration of the fluorine-containing elastomer in the aqueous medium is 1.0 mass% or less. The fluorine-containing compound (A) is more preferably present when the solid concentration is 0.8 mass% or less, even more preferably present when 0.5 mass% or less, yet more preferably present when 0.1 mass% or less, and particularly preferably present when 0.0 mass%. The solid concentration is the concentration relative to the total of the aqueous medium and the fluorine-containing elastomer. The fluorine-containing compound (A) may also or may not be added after the solid concentration exceeds 1.0 mass%.

In the polymerization step, the fluorine-containing compound (A) is preferably present in the aqueous medium before causing the polymerization initiator to be present in the aqueous medium. The fluorine-containing compound (A) may also or may not be added after the polymerization initiator is added.

In the polymerization step, the fluorine-containing compound (A) and the hydrocarbon surfactant (B) are preferably present in the aqueous medium when the solid concentration of the fluorine-containing elastomer in the aqueous medium is 1.0 mass% or less. The fluorine-containing compound(A) and the hydrocarbon surfactant (B) are more preferably present when the solid concentration is 0.8 mass% or less, even more preferably present when 0.5 mass% or less, yet more preferably present when 0.1 mass% or less, and particularly preferably present when 0.0 mass%. The solid concentration is the concentration relative to the total of the aqueous medium and the fluorine-containing elastomer. The fluorine-containing compound (A) and the hydrocarbon surfactant (B) may also or may not be added after the solid concentration exceeds 1.0 mass%.

In the polymerization step, the fluorine-containing compound (A) and the hydrocarbon surfactant (B) are preferably present in the aqueous medium before causing the polymerization initiator to be present in the aqueous medium. The fluorine-containing compound (A) and the hydrocarbon surfactant (B) may also or may not be added after the polymerization initiator is added.

The temperature of emulsion polymerization is preferably 10-120°C, and more preferably 20-100°C, because a fluorine-containing elastomer that gives a molded article having excellent physical properties can be obtained.

From the viewpoint of the stability of the aqueous dispersion and reducing the adhesion rate, the temperature of emulsion polymerization is preferably 15-60°C, more preferably 18-55°C, and even more preferably 20-50°C.

The temperature of emulsion polymerization is preferably 60-120°C, more preferably 60-100°C, and even more preferably 70-90°C, because the reaction rate of emulsion polymerization is high and, moreover, a fluorine-containing elastomer that gives a molded article having excellent physical properties can be obtained.

The pressure of emulsion polymerization is usually 0.5-10 MPaG, and preferably 1-7 MPaG.

In the emulsion polymerization, a chain transfer agent may be used at the time of polymerization. A known chain transfer agent can be used, and, for example, hydrocarbon, ester, ether, alcohol, ketone, a halogen-containing compound, and carbonate are usable. In particular, isopentane, diethyl malonate, and ethyl acetate are preferable from the viewpoint that the reaction rate is unlikely decreased, and diiodine compounds such as $I(CF_2)_4I$, $I(CF_2)_6I$, and $ICH_2I$ are preferable from the viewpoint that the polymer terminal can be iodinated, and such a compound can be used as a reactive polymer.

The amount of the chain transfer agent used is usually $0.5\times10^{-3}$ to $5\times10^{-3}$ mol%, and preferably $1.0\times10^{-3}$ to $3.5\times10^{-3}$ mol%, based on the total amount of the monomer used in the emulsion polymerization.

The chain transfer agent is particularly preferably a bromine compound or an iodine compound. The polymerization method using a bromine compound or an iodine compound is, for example, iodine transfer polymerization or bromine transfer polymerization.

The iodine compound and the bromine compound are water-insoluble and are unlikely emulsified. Accordingly, their use is conventionally limited in emulsion polymerization, and there was a tendency that a large amount of surfactant had to be used. According to the production method of the present disclosure, a fluorine-containing elastomer can be obtained even by polymerization using an iodine compound or a bromine compound, such as iodine transfer polymerization or bromine transfer polymerization.

The iodine transfer polymerization is a method using living radical polymerization by a radical chain reactivation mechanism, which is radically active due to a low carbon-iodine bond dissociation energy and occurs due to the involvement of a chain transfer reaction during the course of a radical polymerization reaction. Known reaction conditions can be suitably used, and, for example, the reaction conditions described in "KOBUNSHI RONBUNSHU (Japanese

Journal of Polymer Science and Technology), Vol. 49, No. 10, pp. 765-783, October 1992", JP-A-53-3495 can be suitably adopted. Similar polymerization can be carried out by using a bromine compound in place of an iodine compound, and such polymerization is referred to as bromine transfer polymerization herein.

Among these, iodine transfer polymerization is preferable in terms of e.g. polymerization reactivity and cross-linking reactivity.

Typical examples of the bromine compound and the iodine compound include compounds of the formula:

$$R^8I_xBr_y$$

wherein x and y are each independently an integer of 0-2 and satisfy $1 \leq x+y \leq 2$, and $R^8$ is a saturated or unsaturated fluorohydrocarbon group or chlorofluorohydrocarbon group having 1-16 carbon atoms, or a hydrocarbon group having 1-3 carbon atoms, and may contain an oxygen atom. Iodine or bromine is introduced into a polymer by using a bromine compound or an iodine compound, and functions as a crosslinking point.

Examples of the bromine compound and the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, CFBrClCFClBr, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be mutually combined and used.

Among these, in terms of e.g. polymerization reactivity, crosslinking reactivity, and availability, compounds that do not contain bromine and solely contain iodine are preferable, and 1,4-diiodoperfluorobutane, 1,6-diiodoperfluorohexane, or 2-iodoperfluoropropane is preferably used.

The aqueous medium means a liquid containing water. The aqueous medium is not limited as long as it contains water, and may be a medium that contains water as well as a fluorine-free organic solvent such as alcohol, ether, or ketone and/or a fluorine-containing organic solvent having a boiling point of 40°C or lower.

In the polymerization for the fluorine-containing elastomer, e.g. a phosphoric acid salt, sodium hydroxide, or potassium hydroxide can be preferably used as a pH adjuster.

The emulsion polymerization may be what is not carried out in the presence of fluorine-containing monomer polymerization seed particles, or in other words, what is carried out in the absence of fluorine-containing monomer polymerization seed particles.

The "fluorine-containing monomer polymerization seed particles" are obtained by polymerizing the above-described fluorine-containing monomer in an aqueous medium, and are caused to be present at the time of the second polymerization in which the type and the proportion of existing components such as monomers and additives (e.g., an emulsifier and a polymerization initiator) constituting the polymerization reaction system, and the reaction conditions are different. The fluorine-containing monomer polymerization seed particles act as so-called seed particles during the emulsion polymerization, and constitute so-called seed polymerization in which emulsion polymerization is carried out in the presence of the seed particles. The emulsion polymerization may be what does not involve such seed polymerization. That is to say, the production method of the present disclosure may comprise a polymerization step of carrying out an emulsion polymerization (provided that seed polymerization is excluded) of a fluorine-containing monomer in an aqueous medium in the presence of (A) a fluorine-containing compound containing a functional group capable of reaction by radical polymerization and a hydrophilic group and (B) a hydrocarbon surfactant to provide a fluorine-containing elastomer.

In the emulsion polymerization, the adhesion rate of the polymer (fluorine-containing elastomer) to a polymerization tank is preferably 8 mass% or less. It is more preferably 4 mass% or less, even more preferably 2 mass% or less, and most preferably 1 mass% or less. In the production method of the present disclosure, the adhesion rate can be reduced by carrying out the emulsion polymerization in the presence of the fluorine-containing compound (A) and the hydrocarbon surfactant (B).

The adhesion rate is a ratio (adhesion rate to a polymerization tank) of the mass of polymer deposits adhering to the polymerization tank after completion of polymerization to the total amount of the polymer (fluorine-containing elastomer) after completion of polymerization. Polymer deposits include a polymer adhering to the inside of the polymerization tank such as the inner wall of the polymerization tank and a stirring blade after an aqueous dispersion is removed from the polymerization tank after completion of polymerization, and a polymer that is freed from the aqueous dispersion due to aggregation and is floating or precipitated. The mass of polymer deposits is the mass after water contained in the polymer deposits is dried and removed at 120°C.

$$\text{Adhesion rate (mass\%)} = \text{Mass of polymer deposits} / \text{Mass of resulting polymer (including deposits)} \times 100$$

Mass of resulting polymer = Mass of aqueous dispersion × Solid concentration (mass%) of aqueous dispersion/100 + Mass of deposits

In the production method of the present disclosure, an aqueous dispersion of a fluorine-containing elastomer is obtained. The production method of the present disclosure may be a method for producing an aqueous dispersion of a fluorine-containing elastomer. The resulting aqueous dispersion of a fluorine-containing elastomer preferably has a solid concentration of 10-50 mass% when polymerization is complete, more preferably 15-40 mass%, and even more preferably 20-30 mass%.
The solid concentration of the aqueous dispersion of a fluorine-containing elastomer can be determined by drying 1 g of the aqueous dispersion under 150°C and 60-minute conditions, measuring the mass of the heating residue, and calculating the proportion of the mass of the heating residue to the mass of the aqueous dispersion.
In the aqueous dispersion of a fluorine-containing elastomer obtained by the production method of the present disclosure, the average particle size of fluorine-containing elastomer particles is preferably 10-800 nm, more preferably 80-700 nm, and even more preferably 100-600 nm. The average particle size herein is a cumulant average diameter and can be measured by dynamic light scattering.
In the aqueous dispersion of a fluorine-containing elastomer obtained by the production method of the present disclosure, the number of fluorine-containing elastomer particles is preferably $1.0\times10^{12}$/cc or more. The number of particles is more preferably $5.0\times10^{12}$/cc or more, and even more preferably $1.0\times10^{13}$/cc or more.
The number of particles (the number of polymer particles) is calculated in accordance with the following expression:

$$\text{Number of polymer particles} = \left\{\frac{\text{Solid concentration of aqueous dispersion (mass\%)}}{100 - \mathit{Solid\ concentration\ of\ aqueous\ dispersion\ (mass\%)}}\right\} / \left\{\frac{4}{3}\times 3.14\times\left(\frac{\text{Average particle size (nm)}}{2}\times10^{-9}\right)^{3}\times\text{Specific gravity}\times10^{6}\right\}$$

The number of fluorine-containing elastomer particles obtained by the expression is the number of particles per 1 cc of water. The specific gravity is the specific gravity of the fluorine-containing elastomer.
The specific gravity of the fluorine-containing elastomer is determined in accordance with JIS Z 8807:2012.
The aqueous dispersion of the fluorine-containing elastomer obtained by the production method of the present disclosure is treated by e.g. coagulation, and heating. Each treatment is performed as follows.
The coagulation is carried out by adding an alkaline earth and earth metal salt. Examples of the alkaline earth and earth metal salt include calcium or magnesium, or a sulfuric acid salt, a nitric acid salt, a hydrochloric acid salt, and an acetic acid salt of aluminum.
The coagulated fluorine-containing elastomer is washed with water to remove a small amount of impurities such as a buffer and a salt present in the fluorine-containing elastomer, and then dried.
The drying is preferably performed at 40-200°C, more preferably 60-180°C, and even more preferably 80-150°C.
The fluorine-containing elastomer obtained by the production method of the present disclosure can be formed into a fluorine-containing elastomer composition by adding e..g. a cross-linking agent or a filler. The type and the amount of the cross-linking agent and the filler are not limited, and the cross-linking agent and the filler can be used within a known range.
The method for obtaining the fluorine-containing elastomer composition is not limited as long as the method is capable of uniformly mixing the fluorine-containing elastomer with e.g. a cross-linking agent, and a filler. An example may be a method involving kneading a powder obtained by coagulating the fluorine-containing elastomer alone and, if necessary, another additive or a compounding agent with a kneader such as an open roll.
When the fluorine-containing elastomer is an uncrosslinked elastomer, the crosslinking system therefor may be, for example, a peroxide crosslinking system, a polyol crosslinking system, or a polyamine crosslinking system, and is preferably at least one selected from a peroxide crosslinking system and a polyol crosslinking system. From the viewpoint of chemical resistance, a peroxide crosslinking system is preferable, and from the viewpoint of heat resistance, a polyol crosslinking system is preferable.
Accordingly, the cross-linking agent is preferably at least one cross-linking agent selected from a polyol cross-linking agent and a peroxide cross-linking agent, and more preferably a peroxide cross-linking agent.
The amount of the cross-linking agent contained is suitably selected according to e.g. the type of the cross-linking agent, and is preferably 0.2-5.0 pbm and more preferably 0.3-3.0 pbm based on 100 pbm of the fluorine-containing elastomer composition.

Peroxide crosslinking can be carried out by using an uncrosslinked elastomer capable of peroxide crosslinking as a fluorine-containing elastomer and an organic peroxide as a cross-linking agent.

The uncrosslinked elastomer capable of peroxide crosslinking is not limited, and may be an uncrosslinked elastomer having a site capable of peroxide crosslinking. The site capable of peroxide crosslinking is not limited, and examples include a site having an iodine atom and a site having a bromine atom.

The organic peroxide may be an organic peroxide capable of readily producing peroxy radicals in the presence of heat and a redox system, and examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha,\alpha$-bis(t-butylperoxy)-p-diisopropylbenzene, 2,5-dimethyl-2,5-di(t-butylperoxy) hexane, 2,5-dimethyl-2,5-di(t-butylperoxy)-hexyne-3, benzoyl peroxide, t-butyl peroxybenzene, t-butyl peroxymaleate, t-butyl peroxyisopropyl carbonate, and t-butyl peroxybenzoate. Among these, 2,5-dimethyl-2,5-di(t-butylperoxy)hexane and 2,5-dimethyl-2,5-di(t-butylperoxy)-hexyne-3 are preferable.

The amount of the organic peroxide contained is preferably 0.1-15 pbm and more preferably 0.3-5 pbm based on 100 pbm of the fluorine-containing elastomer.

When the cross-linking agent is an organic peroxide, the fluorine-containing elastomer composition preferably further contains a crosslinking aid. Examples of the crosslinking aid include triallyl cyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, and triallyl phosphite. Among these, triallyl isocyanurate (TAIC) is preferable in terms of excellent crosslinkability, mechanical properties, and flexibility.

The amount of the crosslinking aid contained is preferably 0.01-10 pbm, more preferably 0.01-7.0 pbm, and even more preferably 0.1-5.0 pbm based on 100 pbm of the fluorine-containing elastomer. An amount of the crosslinking aid of less than 0.01 pbm results in poor mechanical properties and poor flexibility. An amount exceeding 10 pbm tends to result in inferior heat resistance and also poor durability of a molded article.

Polyol crosslinking can be carried out by using an uncrosslinked elastomer capable of polyol crosslinking as a fluorine-containing elastomer and a polyhydroxy compound as a cross-linking agent. In the polyol crosslinking system, the amount of the polyhydroxy compound contained is preferably 0.01-10 pbm based on 100 pbm of the uncrosslinked elastomer capable of polyol crosslink. When the amount of the polyhydroxy compound contained is in such a range, polyol crosslinking can be sufficiently promoted. The amount is more preferably 0.02-8 pbm. The amount is even more preferably 0.03-4 pbm.

The uncrosslinked elastomer capable of polyol crosslinking is not limited, and may be an uncrosslinked elastomer having a site where polyol crosslinking is possible. The site where polyol crosslinking is possible is not limited, and may be, for example, a site having a vinylidene fluoride (VdF) unit. The method for introducing the crosslinking site may be a method involving copolymerizing a monomer that gives a crosslinking site at the time of polymerization of an uncrosslinked elastomer.

A suitable polyhydroxy compound may be a polyhydroxy aromatic compound in terms of excellent heat resistance.

The polyhydroxy aromatic compound is not limited, and examples include 2,2-bis(4-hydroxyphenyl)propane (hereinafter referred to as bisphenol A), 2,2-bis(4-hydroxyphenyl)perfluoropropane (hereafter referred to as bisphenol AF, and bisphenol AF is available from, for example, FUJIFILM Wako Pure Chemical Corporation, Central Glass Co., Ltd.), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl) butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be e.g. alkali metal salts, and alkaline earth metal salts, and when the copolymer is coagulated with acid, the metal salts are preferably not used. The amount of the polyhydroxyaromatic compound contained is 0.1-15 pbm and preferably 0.5-5 pbm based on 100 pbm of the uncrosslinked elastomer.

When the cross-linking agent is a polyhydroxy compound, the fluorine-containing elastomer composition preferably further contains a crosslinking accelerator. The crosslinking accelerator promotes formation of an intramolecular double bond in the dehydrofluorination reaction of the polymer main chain and addition of a polyhydroxy compound to the formed double bond.

The crosslinking accelerator may be used in combination with an acid acceptor such as magnesium oxide or with a crosslinking aid.

Examples of the crosslinking accelerator include onium compounds, and among onium compounds, the crosslinking accelerator is preferably at least one selected from ammonium compounds such as a quaternary ammonium salt, phosphonium compounds such as a quaternary phosphonium salt, oxonium compounds, sulfonium compounds,

cyclic amines, and monofunctional amine compounds, and more preferably at least one selected from quaternary ammonium salts and quaternary phosphonium salts.

The quaternary ammonium salt is not limited, and examples include 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0] -7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as DBU-B, and DBU-B is available from, for example, FUJIFILM Wako Pure Chemical Corporation), 8-benzyl-1,8-diazabicyclo[5,4,0]-7-undecenium hydroxide, 8-phenethyl-1,8-diazabicyclo [5,4,0]-7-undecenium chloride, and 8-(3-phenylpropyl)-1,8-diazabicyclo[5,4,0]-7-undecenium chloride. Among these, DBU-B is preferable in terms of crosslinkability, mechanical properties, and flexibility.

The quaternary phosphonium salt is not limited, and examples include tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of crosslinkability, mechanical properties, and flexibility.

The crosslinking accelerator may be a solid solution of a quaternary ammonium salt and bisphenol AF, a solid solution of a quaternary phosphonium salt and bisphenol AF, or a chlorine-free crosslinking accelerator disclosed in JP-A-11-147891.

The amount of the crosslinking accelerator contained is preferably 0.01-8.00 pbm and more preferably 0.02-5.00 pbm based on 100 pbm of the uncrosslinked elastomer. The amount is even more preferably 0.03-3.00 pbm. When the amount of the crosslinking accelerator is less than 0.01 pbm, there is a possibly that the crosslinking of the uncrosslinked elastomer does not sufficiently proceed, and the resulting molded article has poor heat resistance. When the amount exceeds 8.00 pbm, there is a possibility that the fluorine-containing elastomer composition has poor mold processability, and there is a tendency that elongation with respect to mechanical properties is reduced, and flexibility is also reduced.

The acid acceptor is used to neutralize an acidic substance produced during polyol crosslinking, and specific examples include magnesium oxide, calcium hydroxide (such as NICC 5000 (manufactured by Inoue Calcium Corporation), CALDIC #2000, CALDIC #1000 (manufactured by Ohmi Chemical Industry Co., Ltd.)), calcium oxide, litharge (lead oxide), zinc oxide, dibasic lead phosphite, and hydrotalcite, and the acid acceptor is preferably at least one selected from high-activity magnesium oxide and low-activity magnesium.

Polyamine crosslinking can be carried out by using a fluorine-containing elastomer capable of polyamine crosslinking as a fluorine-containing elastomer and a polyamine compound as a cross-linking agent.

The fluorine-containing elastomer capable of polyamine crosslinking is not limited, and may be a fluorine-containing elastomer having a site capable of polyamine crosslinking. The site capable of polyamine crosslinking is not limited, and an example may be a site having a vinylidene fluoride (VdF) unit. The method for introducing the crosslinking site may be a method involving copolymerizing a monomer that gives a crosslinking site at the time of polymerization of a fluorine-containing elastomer.

Examples of the polyamine compound include hexamethylenediamine carbamate, N,N'-dicinnamylidene-1,6-hexamethylenediamine, and 4,4'-bis(aminocyclohexyl)methane carbamate. Among these, N,N'-dicinnamylidene-1,6-hexamethylenediamine is preferable.

The fluorine-containing elastomer composition may contain at least one polyfunctional compound. The polyfunctional compound is a compound having two or more functional groups having the same or different structures within one molecule. The functional group contained in the polyfunctional compound may be a functional group generally known to have reactivity, such as a carbonyl group, a carboxyl group, a haloformyl group, an amide group, an olefin group, an amino group, an isocyanate group, a hydroxy group, and an epoxy group.

The fluorine-containing elastomer composition may contain an ordinary additive that is added to an elastomer as necessary, such as a filler, a processing aid, a plasticizer, a colorant, a stabilizer, an adhesive aid, a mold release agent, an electroconductivity imparting agent, a thermal conductivity imparting agent, a surface non-sticking agent, a flexibility imparting agent, a heat resistance improving agent, and a flame retarder, and such additives are used as long as the effects of the present disclosure are not impaired.

A molded article can be obtained from the fluorine-containing elastomer composition.

The molded article can be obtained by molding and crosslinking the fluorine-containing elastomer composition. The fluorine-containing elastomer composition can be molded by a conventionally known method. The molding and crosslinking methods and conditions are within the scope of known methods and conditions for the adopted molding and crosslinking. The order of molding and crosslinking is not limited, and the composition may be molded and then crosslinked, may be crosslinked and then molded, or simultaneously molded and crosslinked.

Examples of the molding method include a pressure molding method and an injection molding method involving

e.g. a metal mold. The crosslinking method adopted may be e.g. a steam crosslinking method, an ordinary method in which the crosslinking reaction is started by heating, or a radiation crosslinking method, and, in particular, the crosslinking reaction by heating is preferable. Non-limiting specific crosslinking conditions are suitably determined according to the type of a crosslinking agent to be used, usually within a temperature range of 140-250°C and a crosslinking time of 1 min to 24 hr.

The molded article of the present disclosure can be used as various components in various fields such as automobile industry, aircraft industry, and semiconductor industry.

Examples of the fields where the molded article of the present disclosure is used include a semiconductor-related field, an automobile field, an aircraft field, a space/rocket field, a ship field, a chemical product field such as chemical plants, a pharmaceutical field such as drugs, a photography field such as developing machines, a printing field such as printing machines, a painting field such as painting equipment, an analytical/physicochemical machinery field such as analytical instruments and measurement instruments, a food equipment field including food plant equipment and household products, a beverage and food manufacturing apparatus field, a drug manufacturing apparatus field, a medical component field, a chemical-reagent transport equipment field, a nuclear power plant equipment field, a steel field such as steel plate processing equipment, a general industrial field, an electrical field, a fuel cell field, an electronic component field, an optical equipment component field, a space equipment component field, a petrochemical plant equipment field, an energy resource searching and mining equipment component field for oil and gas, a petroleum refining field, and a petroleum transport equipment component field.

Examples of the usage of the molded article of the present disclosure include various sealing materials and packings, such as rings, packings, gaskets, diaphragms, oil seals, bearing seals, lip seals, plunger seals, door seals, lip and face seals, gas delivery plate seals, wafer support seals, and barrel seals. The molded article as a sealing material can be used in applications where excellent non-stickiness and low-friction properties are required.

Also, the molded article can be used as a tube, a hose, a roll, various types of rubber roll, a flexible joint, a rubber plate, a coating, a belt, a damper, a valve, a valve seat, a valve body, a chemical resistant coating material, a laminating material, and a lining material.

The cross-sectional shape of the ring, packing, and seal may be any of various shapes, and, specifically, it may be, for example, a square shape, an O-shape, or a ferrule, or may be an irregular shape such as a D-shape, an L-shape, a T-shape, a V-shape, an X-shape, or a Y-shape.

In the semiconductor-related field, the molded article can be used in, for example, a semiconductor manufacturing apparatus, a liquid crystal panel manufacturing apparatus, a plasma panel manufacturing apparatus, a plasma display panel manufacturing apparatus, a plasma-addressed liquid crystal panel manufacturing apparatus, an organic EL panel manufacturing apparatus, a field emission display panel manufacturing apparatus, a solar cell substrate manufacturing apparatus, and a semiconductor transport apparatus. Examples of such apparatuses include a CVD apparatus, a gas control apparatus such as a semiconductor gas control apparatus, a dry etching apparatus, a wet etching apparatus, a plasma etching apparatus, a reactive ion etching apparatus, a reactive ion beam etching apparatus, a sputter etching apparatus, an ion beam etching apparatus, an oxidation diffusion apparatus, a sputtering apparatus, an ashing apparatus, a plasma ashing apparatus, a cleaning apparatus, an ion injection apparatus, a plasma CVD apparatus, a ventilation apparatus, an exposure apparatus, a polishing apparatus, a film forming apparatus, a dry etching cleaning apparatus, a UV/$O_3$ cleaning apparatus, an ion beam cleaning apparatus, a laser beam cleaning apparatus, a plasma cleaning apparatus, a gas etching cleaning apparatus, an extraction cleaning apparatus, a Soxhlet extraction cleaning apparatus, a high temperature high pressure extraction cleaning apparatus, a microwave extraction cleaning apparatus, a supercritical extraction cleaning apparatus, a cleaning apparatus involving hydrofluoric acid, hydrochloric acid, sulfuric acid, or ozone water, a stepper, a coater/developer, a CMP apparatus, an excimer laser exposure machine, chemical solution piping, gas piping, an apparatus for carrying out plasma treatment such as $NF_3$ plasma treatment, $O_2$ plasma treatment, and fluorine plasma treatment, a heat treatment film forming apparatus, a wafer transport apparatus, a wafer cleaning apparatus, a silicon wafer cleaning apparatus, a silicon wafer treatment apparatus, an apparatus used in LP-CVD process, an apparatus used in lamp annealing process, and an apparatus used in reflow process.

Specific examples of usage in the semiconductor-related field include various sealing materials such as an O-ring and a gasket for a gate valve, a quartz window, a chamber, a chamber lid, a gate, a bell jar, a coupling, and a pump; various sealing materials such as an O-ring for a resist developer and stripper, a hose, and a tube; a lining and a coating for a resist developer tank, a stripper tank, a wafer cleaning solution tank, and a wet etching tank; a diaphragm for a pump; a roll for wafer transport; a hose and a tube for a wafer cleaning solution; a sealing material for a clean facility, such as a sealant for a clean facility such as a clean room; a sealing material for a storage room for storing semiconductor manufacturing apparatuses and devices such as wafers; and a diaphragm for transferring a chemical solution used in a semiconductor manufacturing process.

In the automobile field, the molded article can be used in an engine body, a main motor system, a valve train system, a lubrication/cooling system, a fuel system, an intake/exhaust system, a transmission system of a drive system, a steering system of a chassis, a brake system, and an electrical component such as a basic electrical component, a control

system electrical component, and an equipment electrical component. The automobile field also includes motorcycles.

As for the engine body and its peripherals described above, the molded article of the present disclosure can be used for various sealing materials that are required to have heat resistance, oil resistance, fuel oil resistance, engine cooling antifreeze resistance, and steam resistance, and examples of such sealing materials include seals such as gaskets, shaft seals, and valve stem seals, non-contact or contact type packings such as self-seal packings, piston rings, split-ring packings, mechanical seals and oil seals, bellows, diaphragms, hoses, tubes, and various sealing materials used for electric wires, cushioning materials, anti-vibration materials, and belt AT apparatuses.

Specific examples of usage in the fuel system include an O-ring used for a fuel injector, a cold start injector, a fuel line quick connector, a sender flange quick connector, a fuel pump, a fuel tank quick connector, a gasoline mixing pump, a gasoline pump, a tube body of a fuel tube, a connector of a fuel tube, and an injector; a seal used for an intake manifold, a fuel filter, a pressure regulating valve, a canister, a fuel tank cap, a fuel pump, a fuel tank, a fuel tank sender unit, a fuel injection apparatus, a fuel high pressure pump, a fuel line connector system, a pump timing control valve, a suction control valve, a solenoid sub-assembly, and a fuel cut valve; a canister purge solenoid valve seal, an onboard refueling vapor recovery (ORVR) valve seal, a fuel pump oil seal, a fuel sender seal, a fuel tank rollover valve seal, a filler seal, an injector seal, a filler cap seal, and a filler cap valve seal; a hose such as a fuel hose, a fuel supply hose, a fuel return hose, a vapor (evaporation) hose, a vent (breather) hose, a filler hose, a filler neck hose, a hose in a fuel tank (in-tank hose), a carburetor control hose, a fuel inlet hose, and a fuel breather hose; a gasket used for a fuel filter, and a fuel line connector system, and a flange gasket used for a carburetor; a line material for a steam recovery line, a fuel feed line, and a vapor/ORVR line; a diaphragm used for a canister, an ORVR, a fuel pump, a fuel tank pressure sensor, a gasoline pump, a carburetor sensor, a composite air controller (CAC), a pulsation damper, a canister, and an autocock, and a pressure regulator diaphragm of a fuel injector; a fuel pump valve, a carburetor needle valve, a rollover check valve, and a check valve; a tube used in a vent (breather) and a fuel tank; a tank packing for a fuel tank, and a packing for a carburetor acceleration pump piston; a fuel sender anti-vibration component for a fuel tank; an O-ring and a diaphragm for controlling a fuel pressure; an accelerator pump cup; an in-tank fuel pump mount; an injector cushion ring of a fuel injector; an injector seal ring; a needle valve core valve of a carburetor; an acceleration pump piston of a carburetor; a valve seat of a compound air controller (CAC); a fuel tank body; and a seal component for a solenoid valve.

Specific examples of usage in the brake system include a diaphragm used for a master back, a hydraulic brake hose air brake, and a brake chamber of an air brake; a hose used for a brake hose, a brake oil hose, and a vacuum brake hose; various sealing materials such as an oil seal, an O-ring, a packing, and a brake piston seal; a breather valve and a vacuum valve for a master back and a check valve for a brake valve; a piston cup (rubber cup) for a master cylinder, and a brake cup; and a boot for a master cylinder and a vacuum booster of a hydraulic brake, and a wheel cylinder of a hydraulic brake, and an O-ring and a grommet for an anti-lock brake system (ABS).

Specific examples of usage in the basic electrical component include an insulator and a sheath of an electric wire (harness), a tube of a harness exterior component, and a grommet for a connector.

Specific examples of usage in the control system electrical component include a coating material of various sensor wires.

Specific examples of usage in the equipment electrical component include an O-ring and a packing for a car air conditioner, a gasket for a cooler hose, a high pressure air conditioner hose, and an air conditioner hose, a gasket for an electronic throttle unit, a plug boot for direct ignition, and a diaphragm for a distributor. The molded article can also be used to adhere an electrical component.

Specific examples of usage in the intake/exhaust system include a packing used for an intake manifold, and an exhaust manifold, and a throttle body packing for a throttle; a diaphragm used for EGR (exhaust gas recirculation), pressing control (BPT), a wastegate, a turbo wastegate, an actuator, an actuator for a variable turbine geometry (VTG) turbo, and an exhaust purification valve; a hose such as an EGR (exhaust gas recirculation) control hose, an emission control hose, a turbo oil hose (supply) and a turbo oil hose (return) of a turbocharger, a turbo air hose, an intercooler hose, a turbocharger hose, a hose connected to a compressor of a turbo engine equipped with an intercooler, an exhaust gas hose, an air intake hose, a turbo hose, and a DPF (diesel particulate filter) sensor hose; an air duct and a turbo air duct; an intake manifold gasket; and a sealing material EGR, a sealing material used for an afterburn prevention valve seat of an AB valve, a turbine shaft seal (of e.g. a turbocharger), and a groove component of a rocker cover and air suction manifold used as automobile engines.

In addition, in exhaust gas control components, the molded article can be used as a seal used for a steam recovery canister, a catalytic converter, an exhaust gas sensor, and an oxygen sensor, and a seal for a solenoid armature of steam recovery and steam canister; and an intake manifold gasket.

In addition, in components relating to diesel engines, the molded article can be used as an O-ring seal for a direct injection injector, a rotary pump seal, a control diaphragm, a fuel hose, a diaphragm for EGR, a priming pump, and a boost compensator. It can also be used as an O-ring, a sealing material, a hose, a tube, and a diaphragm used for a urea SCR system, a sealing material for a urea water tank body and a urea water tank of a urea SCR system.

Specific examples of usage in the transmission system include a transmission-related bearing seal, oil seal, O-ring, packing, and torque converter hose.

Examples also include a transmission oil seal, and a transmission oil hose, an ATF hose, an O-ring, and a packing of an AT.

The transmission includes e.g. an AT (automatic transmission), an MT (manual transmission), a CVT (continuously variable transmission), and a DCT (dual clutch transmission).

Examples also include an oil seal, a gasket, an O-ring, and a packing for a manual or automatic transmission, an oil seal, a gasket, an O-ring, and a packing for a continuously variable transmission (belt type or toroidal type), a packing for an ATF linear solenoid, an oil hose for a manual transmission, an ATF hose for an automatic transmission, and a CVTF hose for a continuously variable transmission (belt type or toroidal type).

Specific examples of usage in the steering system include a power steering oil hose and a high pressure power steering hose.

Examples of usage in the engine body of an automobile engine include gaskets such as a cylinder head gasket, a cylinder head cover gasket, an oil pan packing, and a general-purpose gasket, seals such as an O-ring, a packing, and a timing belt cover gasket, hoses such as a control hose, anti-vibration rubber of an engine mount, a control valve diaphragm, and a camshaft oil seal.

In the main motor system of an automobile engine, the molded article can be used for e.g. a shaft seal such as a crankshaft seal and a camshaft seal.

In the valve train system of an automobile engine, the molded article can be used as e.g. a valve stem oil seal of an engine valve, and a valve seat of a butterfly valve.

In the lubrication/cooling system of an automobile engine, the molded article can be used as e.g. an engine oil cooler hose, an oil return hose, and a seal gasket of an engine oil cooler, a water hose around a radiator, a radiator seal, a radiator gasket, a radiator O-ring, a vacuum pump oil hose of a vacuum pump, a radiator hose, a radiator tank, a diaphragm for oil pressure, and a fan coupling seal.

Thus, specific examples of usage in the automobile field include an engine head gasket, an oil pan gasket, a manifold packing, an oxygen sensor seal, an oxygen sensor bush, a nitrogen oxide (NOx) sensor seal, a nitrogen oxide (NOx) sensor bush, a sulfur oxide sensor seal, a temperature sensor seal, a temperature sensor bush, a diesel particle filter sensor seal, a diesel particle filter sensor bush, an injector O-ring, an injector packing, a fuel pump O-ring and diaphragm, a gearbox seal, a power piston packing, a cylinder liner seal, a valve stem seal, a static valve stem seal, a dynamic valve stem seal, an automatic transmission front pump seal, a rear axle pinion seal, a universal joint gasket, a speedometer pinion seal, a foot brake piston cup, a torque transmission apparatus O-ring and oil seal, a discharge gas afterburner seal and bearing seal, an afterburner hose, a carburetor sensor diaphragm, an anti-vibration rubber (such as an engine mount, an exhaust part, a muffler hanger, a suspension bush, a center bearing, and a strut bumper rubber), a suspension anti-vibration rubber (such as a a strut mount and a bush), a drive system anti-vibration rubber (such as a damper), a fuel hose, an EGR tube and hose, a twin cab tube, a carburetor needle valve core valve, a carburetor flange gasket, an oil hose, an oil cooler hose, an ATF hose, a cylinder head gasket, a water pump seal, a gearbox seal, a needle valve tip, a motorcycle reed valve reed, an automobile engine oil seal, a gasoline hose gun seal, a car air conditioner seal, an engine intercooler rubber hose, a seal of fuel line connector systems, a CAC valve, a needle tip, an electric wire around an engine, a filler hose, a car air conditioner O-ring, an intake gasket, a fuel tank material, a distributor diaphragm, a water hose, a clutch hose, a PS hose, an AT hose, a master back hose, a heater hose, an air conditioner hose, a ventilation hose, an oil filler cap, a PS rack seal, a rack & pinion boot, a CVJ boot, a ball joint dust cover, a strut dust cover, a weather strip, a glass run, a center unit packing, a body sight welt, a bumper rubber, a door latch, a dash insulator, a high tension cord, a flat belt, a poly V belt, a timing belt, a toothed belt, a V-ribbed belt, a tire, a wiper blade, a diaphragm and a plunger for an LPG vehicle regulator, a diaphragm and a valve for a CNG vehicle regulator, a DME compatible rubber component, an auto tensioner diaphragm and boot, an idle speed control diaphragm and valve, an auto speed control actuator, a negative pressure pump diaphragm, a check valve and plunger, an O.P.S. diaphragm and O-ring, a gasoline pressure relief valve, an engine cylinder sleeve O-ring and gasket, a wet cylinder sleeve O-ring and gasket, a differential gear seal and gasket (gear oil seal and gasket), a power steering apparatus seal and gasket (PSF seal and gasket), a shock absorber seal and gasket (SAF seal and gasket), a constant velocity joint seal and gasket, a wheel bearing seal and gasket, a metal gasket coating agent, a caliper seal, a boot, a wheel bearing seal, and a bladder used in vulcanization molding of a tire.

In the aircraft field, the space/rocket field, and the ship field, the molded article can be used especially in a fuel system and a lubricating oil system.

In the aircraft field, the molded article can be used as, for example, various aircraft sealing components, various aircraft components in aircraft engine oil applications, a jet engine valve stem seal, gasket, and O-ring, a rotating shaft seal, a hydraulic equipment gasket, a fire wall seal, a fuel supply hose, gasket, and O-ring, an aircraft cable, oil seal, and shaft seal.

In the space/rocket field, the molded article can be used as, for example, a lip seal, a diaphragm, and an O-ring for a spacecraft, a jet engine, and a missile, a gas turbine engine oil-resistant O-ring, a vibration isolation table pad for missile ground control, and the like.

In the ship field, the molded article can be used as, for example, a screw propeller shaft stern seal, a diesel engine intake/exhaust valve stem seal, a valve seal of a butterfly valve, a valve seat and a shaft seal of a butterfly valve, a shaft seal of a butterfly valve, a stern tube seal, a fuel hose, a gasket, an engine O-ring, a ship cable, a ship oil seal, and a ship shaft seal.

In the chemical product field such as chemical plants and the pharmaceutical field such as drugs, the molded article can be used in a process where a high level of chemical resistance is required, such as a process of producing chemical products such as drugs, agrochemicals, coating materials, and resins.

Specific examples of usage in the chemical product and pharmaceutical fields include seals used in a chemical apparatus, a pump and a flow meter for chemical reagents, piping for chemical reagents, a heat exchanger, an agrochemical sprayer, an agrochemical transfer pump, gas piping, a fuel cell, an analytical instrument and physicochemical instrument (such as column fitting for analytical instruments and measurement instruments), an expansion joint of a flue gas desulfurization apparatus, a nitric acid plant, and a power plant turbine, a seal used in a medical sterilization process, a seal for a plating solution, a belt roller seal for paper making, a wind tunnel joint seal; an O-ring used in a chemical apparatus such as a reactor and a stirrer, an analytical instrument and measurement instrument, a chemical pump, a pump housing, a valve, and a rotary meter, an O-ring for a mechanical seal, and an O-ring for compressor sealing; a packing used in a tube joint part of a high temperature vacuum dryer, a gas chromatography, and a pH meter, and a glass cooler packing for a sulfuric acid manufacturing apparatus; a diaphragm used in a diaphragm pump, an analytical instrument, and a physicochemical instrument; a gasket used in an analytical instrument and a measurement instrument; a fitting wheel (ferrule) used in an analytical instrument and a measurement instrument; a valve seat; a U cup; a lining used in a chemical apparatus, a gasoline tank, and a wind tunnel, and a corrosion-resistant lining for an anodized aluminum processing tank; a coating of a masking jig for plating; a valve component of an analytical instrument and a physicochemical instrument; an expansion joint of a flue gas desulfurization plant; an acid resistant hose against concentrated sulfuric acid, a chlorine gas transfer hose, an oil-resistant hose, a rainwater drain hose for benzene and toluene storage tanks; a chemical resistant tube and a medical tube used in an analytical instrument and a physicochemical instrument; a trichlorethylene-resistant roll for fiber dyeing and a dyeing roll; a medical plug for drug; a medical rubber plug; a chemical solution bottle, a chemical solution tank, a bag, a chemical container; and protective equipment such as a glove and a boot that are resistant to strong acids and solvents.

In the photography field such as a developing machine, the printing field such as a printing machine, and the painting field such as painting equipment, the molded article can be used as a roll, a belt, a seal, and a valve component of a dry copier.

Specific examples of usage in the photography field, the printing field, and the painting field include a surface layer of a transfer roll of a copier, a cleaning blade of a copier, and a copier belt; a roll (such as a fixing roll, a crimping roll, and a pressure roll) and a belt for OA equipment such as a copier, a printer, and a facsimile; a roll, a roll blade, and a belt of a PPC copier; a roll of a film developer and an X-ray film developer; a printing roll, a scraper, a tube, a valve component, and a belt for a printing machine; an ink tube, a roll, and a belt of a printer; a coating roll, a scraper, a tube, and a valve component of painting and coating equipment; and a development roll, a gravure roll, a guide roll, a guide roll for a magnetic tape manufacturing coating line, a gravure roll for a magnetic tape manufacturing coating line, and a coating roll.

In the food plant equipment and the food equipment field including household products, the molded article can be used in a food manufacturing process and for food transfer equipment or food storage equipment.

Specific examples of usage in the food equipment field include a seal for a plate-type heat exchanger, a solenoid valve seal for an automatic vending machine, a jar pot packing, a sanitary pipe packing, a pressure cooker packing, a water heater seal, a heat exchanger gasket, a diaphragm and a packing for a food processing treatment apparatus, a rubber material for a food processing treatment machine (e.g., various seals such as a heat exchanger gasket, a diaphragm, and an O-ring, piping, a hose, a sanitary packing, a valve packing, and a filling packing used as a joint between the mouth of a bottle and a filler during filling). Examples also include a packing, a gasket, a tube, a diaphragm, a hose, and a joint sleeve used for products such as alcoholic beverages and soft drinks, a filling apparatus, a food sterilizer, a brewing apparatus, a water heater, and various automatic food vending machines.

In the nuclear power plant equipment field, the molded article can be used for a check valve and a pressure reducing valve around a nuclear reactor, and a seal for a uranium hexafluoride enricher.

Specific examples of usage in the general industrial field include a sealing material for hydraulic equipment such as a machine tool, a construction machine, and a hydraulic machine; a seal and a bearing seal of a hydraulic and lubrication machine; a sealing material used for a mandrel; a seal used for a window of a dry cleaner; a seal and a (vacuum) valve seal for a cyclotron, a proton accelerator seal, a seal for an automatic packaging machine, a diaphragm of a pump for an analyzer of sulfur dioxide gas and chlorine gas in air (pollution measuring equipment), a snake pump lining, a roll and a belt for a printer, a transport belt (conveyor belt), a squeezing roll for acid-washing of an iron plate, a robot cable, a solvent squeezing roll for aluminum rolling line, a coupler O-ring, an acid resistant cushioning material, a dust seal and a lip rubber for a sliding part of a cutting machine, a gasket for garbage incinerator, a friction material, and a metal or rubber covering material. The molded article can also be used as a gasket and a sealing material for an apparatus used in a papermaking

process, a sealant for a clean room filter unit, an architectural sealant, a fuel container for a small generator and a lawnmower, and a pre-coated metal obtained by applying a primer treatment to a metal plate.

Specific examples of usage in the steel field include an iron plate processing roll for iron plate processing equipment.

Specific examples of usage in the electrical field include an insulating oil cap for the Shinkansen bullet train, a benching seal for a liquid-sealed transformer, a transformer seal, an oil well cable jacket, a seal for an oven such as an electric furnace, a window frame seal for a microwave oven, a sealing material used when bonding a wedge and a neck of CRT, a sealing material for a halogen lamp, a fixing agent for an electrical component, a sealing material for end treatment of a sheathed heater, and a sealing material used as an insulation and moisture proof treatment of a lead wire terminal of electrical equipment. The molded article can also be used as a covering material of an oil resistant/heat resistant electric wire, a highly heat resistant wire, a chemical resistant wire, a highly insulated wire, a high voltage transmission line, a cable, an electric wire used in a geothermal power generation apparatus, and an electric wire used around an automobile engine. The molded article can also be used as an oil seal and a shaft seal of a vehicle cable. Moreover, the molded article can also be used as an electrical insulation material (such as a material used as an insulation spacer of various electric apparatuses, an insulation tape used in a joint, and a terminal part of a cable, and a heat-shrinkable tube), and an electric and electronic apparatus materials used in a high temperature atmosphere (such as a lead wire material for a motor and a wire material around a high temperature furnace).

In the fuel cell field, the molded article can be used as a sealing material between electrodes or between an electrode and a separator, a seal, a packing, and a separator of a pipe for hydrogen, oxygen, generated water, and the like in solid polymer fuel cells, and phosphate fuel cells.

In the electronic component field, the molded article can be used as a heat dissipation material raw material, an electromagnetic wave shielding material raw material, and a gasket for a computer hard disk drive (magnetic recorder). Also, the molded article can also be used as a cushioning rubber (crash stopper) and a sealant for a hard disk drive, a film and a sheet for a coating material for quartz of optical fiber, and an optical fiber coating material, an anti-scattering material for an electronic component, and a light bulb, a gasket for a computer, a large-computer cooling hose, and a packing such as a gasket and an O-ring, a connector, and a damper for a secondary battery, especially a lithium secondary battery.

In the chemical reagent transport equipment field, the molded article can be used as a safety valve and a shipping valve for trucks, trailers, tank trucks, and ships.

In the energy resource searching and mining equipment component field for oil and gas, the molded article can be used as various sealing materials used when mining oil and natural gas, an electric connector boot used in oil wells.

Specific examples of usage in the energy resource search and mining equipment component field include a drill bit seal, a pressure regulating diaphragm, a horizontal drilling motor (stator) seal, a stator bearing (shaft) seal, a sealing material used in a blowout prevention apparatus (BOP), a sealing material used in a rotary blowout prevention apparatus (pipe wiper), a sealing material and a gas-liquid connector used in MWD (real-time drilling information detection system), a logging tool seal used in a logging apparatus (such as an O-ring, a seal, a packing, a gas-liquid connector, and a boot), an inflatable packer and a completion packer and a packer seal used therein, a seal and a packing used in a cementing apparatus, a seal used in a perforator, a seal and a packing and a motor lining used in a mud pump, an underground auditory detector cover, a U-cup, a composition seating cup, a rotating seal, a laminated elastomeric bearing, a flow control seal, a sand volume control seal, a safety valve seal, a seal of a hydraulic fracturing apparatus, a seal and a packing for a linear packer and a linear hanger, a wellhead seal and packing, a seal and a packing for a chalk and a valve, a sealing material for LWD (logging while excavation), a diaphragm used in oil exploration and oil drilling applications (such as a diaphragm for supplying lubricating oil to oil drilling bits), and a seal element for gate valves, electronic boots, and perforation guns.

In addition, the molded article can be used in a joint seal for a kitchen, a bathroom, and a washroom; a ground sheet of an outdoor tent; a seal for a stamp material; a rubber hose for a gas heat pump and a Freon-resistant rubber hose; an agricultural film, lining, and weather resistance cover; and a tank of a laminated steel sheet used in the fields of construction and household electric appliances.

Moreover, the molded article can also be used as an article combined with a metal such as aluminum. Examples of such usage include a door seal, a gate valve, a pendulum valve, a solenoid tip, and also a piston seal and a diaphragm combined with a metal, a metal rubber component combined with a metal, such as a metal gasket.

The molded article can also be used as a rubber component, a brake shoe, and a brake pad of bicycles.

One form of the molded article of the present disclosure is a belt. Such a belt is also one aspect of the present disclosure.

Examples of the belt include a power transmission belt (including a flat belt, a V-belt, a V-ribbed belt, and a toothed belt), a flat belt used as a transport belt (conveyor belt) at various high-temperature sites, e.g., around an engine of agricultural machinery, a machine tool, and industrial machinery; a conveyor belt for transporting bulk and particulate materials such as coal, crushed stone, earth and sand, ore, and wood chips in a high temperature environment; a conveyor belt used in a steel mill such as a blast furnace; a conveyor belt in applications exposed to a high temperature environment

in precision equipment assembly plants, and food factories; a V-belt and a V-ribbed belt for agricultural machinery, general equipment (such as OA equipment, printing machines, and commercial dryers), and automobiles; a transmission belt for a transfer robot; a toothed belt such as a transmission belt for food machines and machine tools; and a toothed belt used in an automobile, OA equipment, medical equipment, and a printing machine.

In particular, a timing belt is a representative example of a toothed belt for automobiles.

The belt may have a single-layer structure or a multi-layer structure.

In the case of a multi-layer structure, the belt may be composed of a layer made of the molded article and a layer made of another material.

In a belt having a multi-layer structure, examples of the layer made of another material include a layer made of another rubber, a layer made of a thermoplastic resin, various fiber-reinforced layers, canvas, and a metal foil layer.

The molded article of the present disclosure can also be used as an industrial anti-vibration pad, an anti-vibration mat, a railway slab mat, a pad, and an automobile anti-vibration rubber. Examples of the automobile anti-vibration rubber include anti-vibration rubbers for an engine mount, a motor mount, a member mount, a strut mount, a bush, a damper, a muffler hanger, and a center bearing.

Examples of another usage include a joint member for a flexible joint, and an expansion joint, a boot, and a grommet. In the ship field, examples include marine pumps.

The joint member refers to a joint used in piping and piping equipment, and used in applications for preventing vibration and noise generated from the piping system, absorbing expansion, contraction and displacement resulting from a temperature change and a pressure change, absorbing a dimensional change, and mitigating and preventing the influences of earthquakes and land subsidence.

The flexible joint and the expansion joint can be preferably used as complex-shape molded articles for, for example, shipbuilding piping, for mechanical piping of a pump, and a compressor, for chemical plant piping, for electrical piping, for civil engineering and water piping, and for automobiles.

The boot can be preferably used as a complex-shape molded article for various industrial boots, for example, a boot for an automobile such as a constant velocity joint boot, a dust cover, a rack and pinion steering boot, a pin boot, and a piston boot, a boot for agricultural machinery, a boot for an industrial vehicle, a boot for construction machinery, a boot for hydraulic machinery, a boot for pneumatic machinery, a boot for a centralized lubricator, a boot for liquid transfer, a boot for fire extinguishing, and a boot for transferring various types of liquefied gas.

The molded article of the present disclosure can also be used for a diaphragm for a filter press, a diaphragm for a blower diaphragm, a diaphragm for supplying water, a diaphragm for a liquid storage tank, a diaphragm for a pressure switch, a diaphragm for an accumulator, and a diaphragm for an air spring such as a suspension.

The molded article of the present disclosure can also be used as, for example, a cushioning material for hot press molding when producing decorative plywood, a printed circuit board, an electrical insulation board, and a rigid polyvinyl chloride laminate made of melamine resin, phenol resin, or epoxy resin.

In addition, the molded article of the present disclosure can also contribute to impermeability of various supports such as weapon-related sealing gaskets and protective clothes against contact with invasive chemicals.

The molded article can also be used as an O (square)-ring, a V-ring, an X-ring, a packing, a gasket, a diaphragm, an oil seal, a bearing seal, a lip seal, a plunger seal, a door seal, a lip and face seal, a gas delivery plate seal, a wafer support seal, a barrel seal, and other various sealing materials used for sealing lubricating oil (such as engine oil, transmission oil, and gear oil) containing amine-type additives (in particular, amine-type additives used as antioxidants and detergent dispersants) used in transportation systems such as automobiles and ships, and fuel oil and grease (in particular, urea-based grease), and can also be used as a tube, a hose, various rubber rolls, a coating, a belt, and a valve body of a valve. The molded article can also be used as a laminating material and a lining material.

The molded article can also be used for a coating material for a heat-resistant, oil-resistant electric wire used as a lead wire of a sensor that comes into contact with transmission oil and/or engine oil of an internal combustion engine of an automobile and that detects the oil temperature and/or the oil pressure, and in a high-temperature oil atmosphere inside an oil pan or the like of an automatic transmission or an engine.

In addition, the molded article of the present disclosure may be used after forming a vulcanized film thereon. Specific examples include applications such as a non-stick oil resistant roll for a copier, a weather strip for preventing weathering and freezing, an infusion rubber stopper, a vial rubber stopper, a mold release agent, a non-stick lightweight transport belt, an adhesion preventing coating on a play gasket of an automobile engine mount, a synthetic fiber coating processing, and a bolt member or a joint having thin packing-coated layer.

The automobile-related component applications of the molded article of the present disclosure also include an application as components of motorcycles having the same structure.

Examples of automobile-related fuel include light oil, gasoline, and fuel for diesel engines (including biodiesel fuel).

In particular, the molded article of the present disclosure is particularly suitable as a sealing material, a sliding member, or a non-stick member.

By the production method of the present disclosure, a composition comprising: a fluorine-containing elastomer containing a structural unit derived from (A) a fluorine-containing compound containing a functional group capable of reaction by radical polymerization and a hydrophilic group, and (B) a hydrocarbon surfactant can also be obtained. The present disclosure also relates to a composition comprising: a fluorine-containing elastomer containing a structural unit derived from (A) a fluorine-containing compound containing a functional group capable of reaction by radical polymerization and a hydrophilic group; and (B) a hydrocarbon surfactant.

The composition of the present disclosure preferably contains 1-1,000 ppm of the hydrocarbon surfactant (B) based on the fluorine-containing elastomer. The content of the hydrocarbon surfactant is more preferably 900 ppm or less, even more preferably 800 ppm or less, and particularly preferably 700 ppm or less based on the fluorine-containing elastomer. The content may be 5 ppm or more, and may be 10 ppm or more.

In the composition of the present disclosure, the content of the hydrocarbon surfactant (B) can be measured by liquid chromatography.

The fluorine-containing elastomer is not limited as long as it contains a structural unit derived from the fluorine-containing compound (A), and examples include a copolymer of two or more fluorine-containing monomers, and a copolymer of a fluorine-containing monomer and a fluorine-free monomer. The fluorine-containing compound (A), the fluorine-containing monomer, and the fluorine-free monomer constituting the fluorine-containing elastomer are the same as those described with respect to the production method of the present disclosure.

The fluorine-containing elastomer is preferably a fluorine-containing elastomer containing $-CH_2-$ in the main chain. The fluorine-containing elastomer containing $-CH_2-$ in the main chain may be a fluorine-containing elastomer described below. The fluorine-containing elastomer containing $-CH_2-$ in the main chain is not limited as long as it contains a chemical structure represented by $-CH_2-$, examples include elastomers containing structures such as $-CH_2-CF_2-$, $-CH_2-CH(CH_3)-$, and $-CH_2-CH_2-$, and these can be introduced into the main chain of the fluorine-containing elastomer by, for example, polymerizing vinylidene fluoride, propylene, or ethylene.

The fluorine-containing elastomer can contain a structural unit derived from a fluorine-containing monomer such as vinylidene fluoride (VdF), tetrafluoroethylene (TFE), hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing vinyl fluoride ether, or a fluorine-containing monomer (2) of formula (2):

$$CHX^1=CX^2Rf \qquad (2)$$

wherein one of $X^1$ and $X^2$ is H, the other is F, and Rf is a linear or branched fluoroalkyl group having 1-12 carbon atoms.

The fluorine-containing elastomer preferably contains, for example, a structural unit derived from at least one monomer selected from tetrafluoroethylene (TFE), vinylidene fluoride (VdF), and a perfluoroethylenically unsaturated compound (e.g., hexafluoropropylene (HFP) or perfluoro(alkyl vinyl ether) (PAVE)) of formula (1):

$$CF_2=CF-Rf^a \qquad (1)$$

wherein $Rf^a$ is $-CF_3$ or $-ORf^b$ ($Rf^b$ is a perfluoroalkyl group having 1-5 carbon atoms).

More specific examples of the fluorine-containing elastomer include a VdF-based fluorine-containing elastomer, a TFE/propylene (Pr)-based fluorine-containing elastomer, a TFE/Pr/VdF-based fluorine-containing elastomer, an ethylene (Et)/HFP-based fluorine-containing elastomer, an Et/HFP/VdF-based fluorine-containing elastomer, an Et/HFP/TFE-based fluorine-containing elastomer, and an Et/TFE/PAVE-based fluorine-containing elastomer. Among these, a VdF-based fluorine-containing elastomer, a TFE/Pr-based fluorine-containing elastomer, a TFE/Pr/VdF-based fluorine-containing elastomer, and an Et/TFE/PAVE-based fluorine-containing elastomer are more suitable in terms of good heat aging resistance and oil resistance.

The VdF-based fluorine-containing elastomer is a fluorine-containing elastomer having a VdF unit. The VdF-based fluorine-containing elastomer preferably has a VdF unit that accounts for 20 mol% or more and 90 mol% or less, more preferably 40 mol% or more and 85 mol% or less, even more preferably 45 mol% or more and 80 mol% or less, and particularly preferably 50 mol% or more and 80 mol% or less of the total number of moles of the VdF unit and the monomer unit derived from other monomers.

Other monomers in the VdF-based fluorine-containing elastomer are not limited as long as they are copolymerizable with VdF, and, for example, the above-described fluorine-containing monomers are usable.

The VdF-based fluorine-containing elastomer is preferably at least one copolymer selected from a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF/a fluorine-containing monomer of formula (2). Other monomers other than VdF more preferably have at least one monomer selected from TFE, HFP, and PAVE.

Among these, at least one copolymer selected from a VdF/HFP copolymer, a VdF/TFE/HFP copolymer, a copolymer of VdF/a fluorine-containing monomer of formula (2), a VdF/PAVE copolymer, a VdF/TFE/PAVE copolymer, a VdF/HFP/PAVE copolymer, and a VdF/HFP/TFE/PAVE copolymer is preferable, and at least one copolymer selected from a VdF/HFP copolymer, a VdF/HFP/TFE copolymer, a copolymer of VdF/a fluorine-containing monomer of formula (2), and a VdF/PAVE copolymer is more preferable.

The VdF/PAVE copolymer preferably has a VdF/PAVE composition of (65-90)/(35-10) (mol%).

In one preferable form, the VdF/PAVE composition is (50-78)/(50-22) (mol%).

The VdF/TFE/PAVE copolymer preferably has a VdF/TFE/PAVE composition of (40-80)/(3-40)/(15-35) (mol%).

The VdF/HFP/PAVE copolymer preferably has a VdF/HFP/PAVE composition of (65-90)/(3-25)/(3-25) (mol%).

The VdF/HFP/TFE/PAVE copolymer preferably has a VdF/HFP/TFE/PAVE composition of (40-90)/(0-25)/(0-40)/(3-35) (mol%), and more preferably (40-80)/(3-25)/(3-40)/(3-25) (mol%).

The copolymer of VdF/a fluorine-containing monomer (2) of formula (2) preferably has a VdF/fluorine-containing monomer (2) unit of (85-20)/(15-80) (mol%) and an other-monomer unit other than VdF and the fluorine-containing monomer (2) accounting for 0-50 mol% of all monomer units, and the mol% ratio of the VdF/fluorine-containing monomer (2) unit is more preferably (80-20)/(20-80). It is also one of the preferable forms that the composition of the VdF/fluorine-containing monomer (2) unit is (78-50)/(22-50) (mol%).

A copolymer is also preferable in which the VdF/fluorine-containing monomer (2) unit is (85-50)/(15-50) (mol%), and the unit of other monomers other than VdF and the fluorine-containing monomer (2) is 1-50 mol% of all monomer units. Other monomers other than VdF and the fluorine-containing monomer (2) are preferably monomers exemplified as other monomers in the VdF-based fluorine-containing elastomer, such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, and a monomer that gives a crosslinkable group, and, in particular, PMVE, CTFE, HFP, and TFE are more preferable.

The TFE/Pr-based fluorine-containing elastomer refers to a fluorine-containing copolymer composed of 45-70 mol% TEF and 55-30 mol% Pr. In addition to these two components, a specific third component may be contained.

The specific third component contained may be, for example, a fluorine-containing monomer such as fluorine-containing olefin other than TFE (such as VdF, HFP, CTFE, or perfluoro(butylethylene)), fluorine-containing vinyl ether (perfluoro(propyl vinyl ether), or perfluoro(methyl vinyl ether); or a hydrocarbon-based monomer such as $\alpha$-olefin (such as ethylene or 1-butene), vinyl ether (such as ethyl vinyl ether, butyl vinyl ether, or hydroxybutyl vinyl ether), or vinyl ester (such as vinyl acetate, vinyl benzoate, vinyl crotonate, or vinyl methacrylate). As for the specific third component, one or a combination of two or more may be used.

The TFE/Pr-based fluorine-containing elastomer preferably contains VdF, and as for the TFE/Pr-based fluorine-containing elastomer, an elastomer composed of TFE, Pr, and VdF is referred to as a TFE/Pr/VdF-based fluorine-containing elastomer.

The TFE/Pr/VdF-based fluorine-containing elastomer may further contain the above specific third component other than VdF. As for the specific third component, one or a combination of two or more may be used.

The total content of the third component in the TFE/Pr-based fluorine-containing elastomer is preferably 35 mol% or less, more preferably 33 mol% or less, and even more preferably 31 mol% or less.

The Et/HFP copolymer preferably has an Et/HFP composition of (35-80)/(65-20) (mol%), and more preferably (40-75)/(60-25) (mol%).

The Et/HFP/TFE copolymer preferably has an Et/HFP/TFE composition of (35-75)/(25-50)/(0-15) (mol%), and more preferably (45-75)/(25-45)/(0-10) (mol%).

The Et/TFE/PAVE copolymer preferably has an Et/TFE/PAVE composition of (10-40)/(32-60)/(20-40) (mol%), and more preferably (20-40)/(40-50)/(20-30) (mol%). PAVE is preferably PMVE.

The fluorine-containing elastomer preferably contains a VdF unit, a VdF/HFP copolymer and a VdF/HFP/TFE copolymer are particularly preferable, and a fluorine-containing elastomer having, for example, a VdF/HFP/TFE composition of (32-85)/(10-34)/(0-34) (mol%) is particularly preferable. The VdF/HFP/TFE composition is more preferably (32-85)/(15-34)/ (0-34) (mol%), and even more preferably (47-81)/(17-29)/(0-26) (mol%).

For example, the VdF/HFP copolymer preferably has a VdF/HFP composition of (45-85)/(15-55) (mol%), more preferably (50-83)/(17-50) (mol%), even more preferably (55-81)/(19-45) (mol%), and yet more preferably (60-80)/ (20-40) (mol%).

The VdF/HFP/TFE copolymer preferably has a VdF/HFP/TFE composition of (32-80)/(10-34)/(4-34) (mol%).

In the fluorine-containing elastomer, the structural unit derived from the fluorine-containing compound (A) is preferably 0.001-1.000 mol%, more preferably 0.001-0.700 mol%, and even more preferably 0.001-0.500 mol% of all monomer units.

The content of the structural unit derived from the fluorine-containing compound (A) can be measured by e.g. NMR, IR, or elemental analysis.

What is exemplified with respect to the fluorine-containing elastomer is the configuration of main monomers, and a copolymer with a monomer that gives a crosslinkable group may be used as well. The monomer that gives a crosslinkable

group is the same as that described with respect to the production method of the present disclosure.

The fluorine-containing elastomer preferably contains a $-CH_2I$ structure. Whether the $-CH_2I$ structure is contained can be verified by a $^1H$-NMR spectrum. The fluorine-containing elastomer containing a $-CH_2I$ structure can be obtained by iodine transfer polymerization.

In the fluorine-containing elastomer, the amount of the $-CH_2I$ structure is preferably 0.05-1.50 mol% based on 100 mol% of the $-CH_2$-structure. The amount of the $-CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CH_2I$ structure can be determined by a $^1H$-NMR spectrum.

The fluorine-containing elastomer more preferably contains a - $CF_2CH_2I$ structure. The fluorine-containing elastomer containing the - $CF_2CH_2I$ structure can be obtained by producing a VdF-based fluorine-containing elastomer by iodine transfer polymerization.

In the fluorine-containing elastomer, the amount of the $-CF_2CH_2I$ structure is preferably 0.05-1.50 mol% based on 100 mol% of the $-CH_2$-structure. The amount of the $-CF_2CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CF_2CH_2I$ structure is calculated by A/B*100 from integrated value A of all peak intensities observed in a chemical shift region of 3.75-4.05 ppm derived from $-CH_2I$ and integrated value B of all peak intensities observed in chemical shift regions of 2.3-2.7 ppm and 2.9-3.75 ppm derived from $-CH_2$-in a $^1H$-NMR spectrum.

Preferably, the composition of the present disclosure is substantially free from a fluorine-containing surfactant. Herein, the expression "substantially free from a fluorine-containing surfactant" means that the amount of the fluorine-containing surfactant is 10 ppm or less based on the fluorine-containing elastomer. The content of the fluorine-containing surfactant is preferably 1 ppm or less, more preferably 100 ppb or less, even more preferably 10 ppb or less, yet more preferably 1 ppb or less, and particularly preferably the content is below the detection limit of measurement by liquid chromatography-mass spectrometry (LC/MS/MS).

The amount of the fluorine-containing surfactant can be quantified by a known method. For example, it can be quantified by LC/MS/MS analysis. First, methanol is added to the composition, molecular weight information is acquired from the LC/ MS/MS spectrum of the resulting extract, and a match with the structural formula of a candidate surfactant is checked.

Then, aqueous solutions having 5 or more concentration levels of the checked surfactant are prepared, an LC/MS/MS analysis of each concentration is performed, and a calibration curve based on the areal size is constructed.

The composition is subjected to Soxhlet extraction with methanol, and the extract is subjected to LC/MS/MS analysis, thus enabling quantitative measurement.

That is to say, the content of the fluorine-containing surfactant can be quantified by, for example, LC/MS/MS analysis. First, methanol is added to an aqueous dispersion, extraction is performed, and the resulting extract is subjected to LC/MS/MS analysis. To further increase extraction efficiency, treatment by Soxhlet extraction, or ultrasonic treatment may be performed. From the resulting LC/ MS/MS spectrum, a match with the structural formula of a candidate fluorine-containing surfactant is checked. Then, aqueous solutions having 5 or more content levels of the checked fluorine-containing surfactant are prepared, an LC/MS/MS analysis of an aqueous solution of each content is performed, and a relationship between a content and an areal size that is based on the content is plotted to draw a calibration curve. Then, using the calibration curve, the areal size of the LC/MS/MS chromatogram of the fluorine-containing surfactant in the extract can be converted into the content of the fluorine-containing surfactant.

The fluorine-containing surfactant may be an anionic fluorine-containing surfactant.

The anionic fluorine-containing surfactant may be, for example, a surfactant containing a fluorine atom, in which the total number of carbon atoms in the portion excluding the anionic group is 20 or less.

The fluorine-containing surfactant may also be a fluorine-containing surfactant having an anionic moiety having a molecular weight of 800 or less.

The "anionic moiety" means a portion of the fluorine-containing surfactant excluding the cation. For example, in the case of $F(CF_2)_{n1}COOM$ of formula (I) described below, the anionic moiety is the "$F(CF_2)_{n1}COO$" moiety.

The fluorine-containing surfactant may also be a fluorine-containing surfactant having a LogPOW of 3.5 or less. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6 mass% HClO4 solution = 1/1 (vol/vol%), flow rate: 1.0 ml/min, sample volume: 300 μL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in US-A-2007/0015864, US-A-2007/0015865, US-A-2007/0015866, US-A-2007/0276103, US-A-2007/0117914, US-A-2007/142541, US-A-2008/0015319,US 3,250,808, UUS 3,271,341, JP-A-2003-119204, WO 2005/042593, WO 2008/060461, WO 2007/046377, JP-A-2007-119526, WO 2007/046482, WO 2007/046345, US-A-2014/0228531, WO 2013/189824, and WO 2013/189826.

The anionic fluorine-containing surfactant may be a compound of formula ($N^0$) :

$$X^{n0}\text{-}Rf^{n0}\text{-}Y^0 \qquad (N^0)$$

wherein $X^{n0}$ is H, Cl, or F, $Rf^{n0}$ is an alkylene group that has 3-20 carbon atoms, that is linear, branched, or cyclic, and H of which is partially or entirely replaced with F, the alkylene group may contain one or more ether bonds, H may be partially replaced with Cl, and $Y^0$ is an anionic group.

The anionic group $Y^0$ may be $-COOM$, $-SO_2M$, or $-SO_3M$, and may be $-COCM$ or $-SO_3M$.

M is H, a metal atom, $NR^7_4$, imidazolium optionally having a substituent, pyridinium optionally having a substituent, or phosphonium optionally having a substituent, and $R^7$ is H or an organic group.

The metal atom may be e.g. an alkali metal (Group 1) or an alkaline earth metal (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In $Rf^{n0}$, 50% or more of H may be replaced with fluorine.

Examples of the compound of formula ($N^0$) may be a compound of formula ($N^1$) :

$$X^{n0}\text{-}(CF_2)_{m1}\text{-}Y^0 \qquad (N^1)$$

(wherein $X^{n0}$ is H, Cl, or F, m1 is an integer of 3-15, and $Y^0$ is as defined above); a compound of formula ($N^2$):

$$Rf^{n1}\text{-}O\text{-}(CF(CF_3)CF_2O)_{m2}CFX^{n1}\text{-}Y^0 \qquad (N^2)$$

(wherein $Rf^{n1}$ is a perfluoroalkyl group having 1-5 carbon atoms, m2 is an integer of 0-3, $X^{n1}$ is F or $CF_3$, and $Y^0$ is as defined above); a compound of formula ($N^3$):

$$Rf^{n2}(CH_2)_{m3}(Rf^{n3})_q\text{-}Y^0 \qquad (N^3)$$

(wherein $Rf^{n2}$ is a partially or completely fluorinated alkyl group having 1-13 carbon atoms and optionally containing an ether bond, m3 is an integer of 1-3, $Rf^{n3}$ is a linear or branched perfluoroalkylene group having 1-3 carbon atoms, q is 0 or 1, and $Y^0$ is as defined above) ; a compound of formula ($N^4$):

$$Rf^{n4}\text{-}O\text{-}(CY^{n1}Y^{n2})_pCF_2\text{-}Y^0 \qquad (N^4)$$

(wherein $Rf^{n4}$ is a linear or branched partially or completely fluorinated alkyl group having 1-12 carbon atoms and optionally containing an ether bond, $Y^{n1}$ and $Y^{n2}$ are the same or different and are each independently H or F, p is 0 or 1, and $Y^0$ is as defined above); and
a compound of formula ($N^5$):

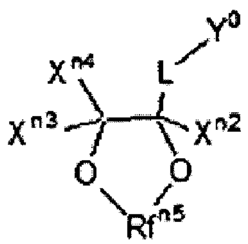

($N^5$)

(wherein $X^{n2}$, $X^{n3}$, and $X^{n4}$ are the same or different and are each independently H, F, or a linear or branched, partially or completely fluorinated alkyl group having 1-6 carbon atoms and optionally containing an ether bond, $Rf^{n5}$ is a linear or branched, partially or completely fluorinated alkylene group having 1-3 carbon atoms and optionally containing an ether bond, L is a linking group, and $Y^0$ is as defined above, provided that the total number of carbon atoms of $X^{n2}$, $X^{n3}$, $X^{n4}$, and $Rf^{n5}$ is 18 or less).

Specific examples of the compound of formula ($N^0$) include perfluorocarboxylic acid (I) of formula (I), ω-H perfluorocarboxylic acid (II) of formula (II), perfluoropolyether carboxylic acid (III) of formula (III), perfluoroalkylalkylenecarboxylic acid (IV) of formula (IV), perfluoroalkoxyfluorocarboxylic acid (V) of formula (V), perfluoroalkylsulfonic acid (VI) of formula (VI), ω-H perfluorosulfonic acid (VII) of formula (VII), perfluoroalkylalkylene sulfonic acid (VIII) of formula (VIII), alkylalkylenecarboxylic acid (IX) of formula (IX), fluorocarboxylic acid (X) of formula (X), alkoxyfluorosulfonic acid (XI) of formula (XI), compound (XII) of formula (XII), and compound (XIII) of formula (XIII).

Perfluorocarboxylic acid (I) is of the formula (I):

$$F(CF_2)_{n1}COOM \qquad (I)$$

wherein n1 is an integer of 3-14, M is H, a metal atom, $NR^7_4$, an imidazolium optionally having a substituent, pyridinium optionally having a substituent, or phosphonium optionally having a substituent, and $R^7$ is H or an organic group.

ω-H Perfluorocarboxylic acid (II) is of the formula (II):

$$H(CF_2)_{n2}COOM \qquad (II)$$

wherein n2 is an integer of 4-15, and M is as defined above.

Perfluoropolyethercarboxylic acid (III) is of the formula (III):

$$Rf^1\text{-}O\text{-}(CF(CF_3)CF_2O)_{n3}CF(CF_3)COOM \qquad (III)$$

wherein $Rf^1$ is a perfluoroalkyl group having 1-5 carbon atoms, n3 is an integer of 0-3, and M is as defined above.

Perfluoroalkylalkylenecarboxylic acid (IV) is of the formula (IV):

$$Rf^2(CH_2)_{n4}Rf^3COOM \qquad (IV)$$

(wherein $Rf^2$ is a perfluoroalkyl group having 1-5 carbon atoms, $Rf^3$ is a linear or branched perfluoroalkylene group having 1-3 carbon atoms, n4 is an integer of 1-3, and M is as defined above.

Alkoxyfluorocarboxylic acid (V) is of the formula (V):

$$Rf^4\text{-}O\text{-}CY^1Y^2CF_2\text{-}COOM \qquad (V)$$

wherein $Rf^4$ is a linear or branched, partially or completely fluorinated alkyl group having 1-12 carbon atoms and optionally containing an ether bond, $Y^1$ and $Y^2$ are the same or different and are H or F, and M is as defined above.

Perfluoroalkylsulfonic acid (VI) is of the formula (VI):

$$F(CF_2)_{n5}SO_3M \qquad (VI)$$

wherein n5 is an integer of 3-14, and M is as defined above.

ω-H Perfluorosulfonic acid (VII) is of the formula (VII):

$$H(CF_2)_{n6}SO_3M \qquad (VII)$$

wherein n6 is an integer of 4-14, and M is as defined above.

Perfluoroalkylalkylenesulfonic acid (VIII) is of the formula (VIII):

$$Rf^5(CH_2)_{n7}SO_3M \qquad (VIII)$$

wherein $Rf^5$ is a perfluoroalkyl group having 1-13 carbon atoms, n7 is an integer of 0-3, and M is as defined above.

Alkylalkylenecarboxylic acid (IX) is of the formula (IX):

$$Rf^6(CH_2)_{n8}COOM \qquad (IX)$$

wherein $R^{f6}$ is a linear or branched, partially or completely fluorinated alkyl group having 1-13 carbon atoms and optionally containing an ether bond, n8 is an integer of 1-3, and M is as defined above.

Fluorocarboxylic acid (X) is of the formula (X):

$$Rf^7\text{-}O\text{-}Rf^8\text{-}O\text{-}CF_2\text{-}COOM \qquad (X)$$

wherein $Rf^7$ is a linear or branched, partially or fully fluorinated alkyl group having 1-6 carbon atoms and optionally containing an ether bond, $Rf^8$ is a linear or branched, partially or fully fluorinated alkyl group having 1-6 carbon atoms, and M is as defined above.

Alkoxyfluorosulfonic acid (XI) is of the formula (XI):

$$Rf^9\text{-O-}CY^1Y^2CF_2\text{-}SO_3M \qquad (XI)$$

wherein $Rf^9$ is a linear or branched, partially or completely fluorinated alkyl group having 1-12 carbon atoms, optionally containing chlorine, and optionally containing an ether bond, $Y^1$ and $Y^2$ are the same or different and are H or F, and M is as defined above.

Compound (XII) has the following general formula (XII):

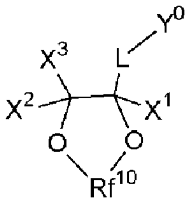

(X I I)

wherein $X^1$, $X^2$, and $X^3$ are the same or different, and each independently are H, F, or a linear or branched, partially or completely fluorinated alkyl group having 1-6 carbon atoms and optionally containing an ether bond, $Rf^{10}$ is a perfluoroalkylene group having 1-3 carbon atoms, L is a linking group, and $Y^0$ is an anionic group. $Y^0$ may be -COOM, $-SO_2M$, or $-SO_3M$, and may be $-SO_3M$ or COOM wherein M is defined above.

Examples of L include a single bond and a partially or completely fluorinated alkylene group having 1-10 carbon atoms and optionally containing an ether bond.

Compound (XIII) is of the formula (XIII):

$$Rf^{11}\text{-O-}(CF_2CF(CF_3)O)_{n9}(CF_2O)_{n10}CF_2COOM \qquad (XIII)$$

wherein $Rf^{11}$ is a fluoroalkyl group having 1-5 carbon atoms and containing chlorine, n9 is an integer of 0-3, n10 is an integer of 0-3, and M is as defined above. Compound (XIII) may be $CF_2ClO(CF_2CF(CF_3)O)_{n9}(CF_2O)_{n10}CF_2COONH_4$ (a mixture having an average molecular weight of 750, wherein n9 and n10 are as defined above).

The number average molecular weight Mn of the fluorine-containing elastomer is preferably 1,000-1,000,000, more preferably 10,000-500,000, and particularly preferably 20,000-300,000.

The fluorine content of the fluorine-containing elastomer is preferably 50 mass% or more, more preferably 55 mass% or more, and even more preferably 60 mass% or more. The upper limit of the fluorine content is preferably 75 mass% or less, and more preferably 73 mass% or less.

The fluorine content is calculated based on a measured value obtained by e.g. $^{19}F$-NMR, $^1H$-NMR, or elemental analysis.

The fluorine-containing elastomer preferably has a Mooney viscosity at 100°C of 130 or less. The Mooney viscosity is more preferably 110 or less, and even more preferably 90 or less. The Mooney viscosity is more preferably 10 or more, and even more preferably 20 or more. Here, the Mooney viscosity is a value measured in accordance with JIS K 6300-1.2013.

The fluorine-containing elastomer preferably has a glass transition temperature of -50 to 0°C. The glass transition temperature is more preferably -2°C or lower, and even more preferably -3°C or lower. The glass transition temperature is more preferably -45°C or higher, and even more preferably -40°C or higher. The glass transition temperature may be - 10°C or higher, and may be -9°C or higher. Here, the glass transition temperature can be determined by heating 10 mg of a sample at 20°C/min to give a DSC curve using a differential scanning calorimeter (e.g., X-DSC 7000 manufactured by Hitachi High-Tech Science Corporation) and calculating a glass transition temperature from a DSC differential curve in accordance with JIS K 6240:2011.

The fluorine-containing elastomer preferably has an iodine content of 0.05-1.0 mass%. The iodine content is more preferably 0.08 mass% or more, and even more preferably 0.10 mass% or more, and is more preferably 0.8 mass% or less, and even more preferably 0.60 mass% or less.

The iodine content can be determined by elemental analysis.

Specifically, the iodine content can be measured by mixing 5 mg of $Na_2SO_3$ with 12 mg of a fluorine-containing elastomer, combusting the mixture in oxygen in a quartz flask using an absorbent obtained by dissolving 30 mg of a 1:1

(mass ratio) mixture of $Na_2CO_3$ and $K_2CO_3$ in 20 ml of pure water, leaving the combusted mixture to stand for 30 minutes, and then measuring the iodine content using a Shimadzu 20A ion chromatograph. A calibration curve of a KI standard solution, a solution containing 0.5 ppm, and a solution containing 1.0 ppm of iodine ions can be used.

The composition of the present disclosure may contain a crosslinking agent. The composition of the present disclosure may contain an ordinary additive that is added to an elastomer as necessary, such as a filler, a processing aid, a plasticizer, a colorant, a stabilizer, an adhesive aid, a mold release agent, an electroconductivity imparting agent, a thermal conductivity imparting agent, a surface non-sticking agent, a flexibility imparting agent, a heat resistance improving agent, a flame retarder, and such various additives, and these additives are used as long as the effects of the present disclosure are not impaired.

A molded article can be obtained from the composition of the present disclosure.

The molded article can be obtained by molding and crosslinking the composition of the present disclosure. The composition can be molded by a conventionally known method. The molding and crosslinking methods and conditions are within the scope of known methods and conditions of the adopted molding and crosslinking. The order of molding and crosslinking is not limited, and the composition may be molded and then crosslinked, may be crosslinked and then molded, or simultaneously molded and crosslinked.

Examples of the molding method include a pressure molding method and an injection molding method involving a metal mold. The crosslinking method adopted may be e.g. a steam crosslinking method, an ordinary method in which the crosslinking reaction is started by heating, or a radiation crosslinking method, and, in particular, the crosslinking reaction by heating is preferable. Non-limiting specific crosslinking conditions are suitably determined according to the type of a crosslinking agent to be used, usually within a temperature range of 140-250°C and a crosslinking time of 1 min to 24 hr.

The molded article can be used in the same applications as those described with respect to the molded article obtained from the fluorine-containing elastomer composition.

## Examples

Next, the present disclosure will now be described by way of Examples.

Various numerical values in the Examples were measured by the following methods.

### Mooney viscosity

The Mooney viscosity can be measured at 100°C in accordance with JIS K 6300-1.2013 using a Mooney viscometer MV 2000E manufactured by ALPHA TECHNOLOGIES.

### Glass transition temperature

The glass transition temperature is determined by heating 10 mg of a sample at 20°C/min to give a DSC curve using a differential scanning calorimeter (X-DSC 7000 manufactured by Hitachi High-Tech Science Corporation) and calculating a glass transition temperature from a DSC differential curve in accordance with JIS K 6240:2011.

### Copolymerization composition

Herein, the content of each monomer constituting the fluorine-containing elastomer can be calculated by e.g. NMR, or elemental analysis.

### Solid concentration of aqueous dispersion

One gram of an aqueous dispersion was dried in an air dryer under 150°C and 60-minute conditions, and a value expressed in percentage that is the proportion of the mass of the heating residue relative to the mass (1 g) of the aqueous dispersion was used.

### Adhesion rate

The ratio (adhesion rate to a polymerization tank) of the mass of polymer deposits adhering to the polymerization tank after completion of polymerization to the total amount of a polymer (fluorine-containing elastomer) after completion of polymerization was determined by the following method.

Polymer deposits include a polymer adhering to the inside of the polymerization tank such as the inner wall of the polymerization tank and a stirring blade after an aqueous dispersion is removed from the polymerization tank after completion of polymerization, and a polymer that is freed from the aqueous dispersion due to aggregation and is floating or

precipitated. The mass of polymer deposits is the mass after water contained in the polymer deposits is dried and removed at 120°C.

Adhesion rate (mass%) = Mass of polymer deposits / Mass of resulting polymer (including deposits) × 100

Mass of resulting polymer = Mass of aqueous dispersion × Solid concentration (mass%) of aqueous dispersion/100 + Mass of deposits

Average particle size

As for the average particle size of fluorine-containing elastomer particles in an aqueous dispersion, measurement was carried out by dynamic light scattering using ELSZ-1000S (manufactured by Otsuka Electronics Co., Ltd.), and the average particle size (cumulant average diameter) was calculated by a cumulant method.

Number of particles (number of fluorine-containing elastomer particles in aqueous dispersion)

The number of particles was calculated by the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} / \left\{\frac{4}{3} \times 3.14 \times \left(\frac{\text{Average particle size (nm)}}{2} \times 10^{-9}\right)^3 \times \text{Specific gravity} \times 10^6\right\}$$

wherein the average particle size is a cumulant average size as calculated by the method described above, the number of polymer particles (number of fluorine-containing elastomer particles) is the number per 1 cc of water, and the specific density was all 1.8.

Iodine content

Herein, the iodine content of the fluorine-containing elastomer was calculated by the following elemental analysis.

The iodine content was measured by mixing 5 mg of $Na_2SO_3$ with 12 mg of a fluorine-containing elastomer, combusting the mixture in oxygen in a quartz flask using an absorbent obtained by dissolving 30 mg of a 1:1 (mass ratio) mixture of $Na_2CO_3$ and $K_2CO_3$ in 20 ml of pure water, leaving the combusted mixture to stand for 30 minutes, and then measuring the iodine content using a Shimadzu 20A ion chromatograph. A calibration curve of a KI standard solution, a solution containing 0.5 ppm, and a solution containing 1.0 ppm of iodine ions was used.

Amount of $-CH_2I$ structure based on 100 mol% of $-CH_2-$ structure of fluorine-containing elastomer

The amount was determined by the $^1H$-NMR spectrum of a fluorine-containing elastomer.

Vulcanization conditions

The rubber-like fluorine-containing copolymers (fluorine-containing elastomers) obtained in Examples 2 and 4-12 were kneaded in the compound shown in Tables 4 and 7 to give fluorine-containing elastomer compositions. Concerning the resulting fluorine-containing elastomer compositions, a vulcanization curve was determined using a rubber vulcanization tester MDRH2030 (manufactured by M&K Co., Ltd.) at the time of primary press vulcanization, and the minimum viscosity (ML), the maximum torque level (MH), the induction time (T10), and the optimum vulcanization time (T90) were determined.

Kneading method: Roll kneading
Press vulcanization: 160°C for 10 minutes
Oven vulcanization: 180°C for 4 hours

Materials shown in Tables 4 and 7 are as follows.

MT carbon: Thermax N-990 manufactured by Cancarb Limited
TAIC: Triallyl isocyanurate, TAIC, manufactured by Nihon Kasei CO., LTD Perhexa 25B: 2,5-Dimethyl-2,5-di(t-butylperoxy)hexane, manufactured by NOF CORPORATION

Ordinary-state properties

The 100% modulus (M100), the tensile strength at break (TB), and the elongation at break (EB) of a crosslinked molded article sheet (a test piece having a dumbbell No. 6 shape) prepared in accordance with JIS K 6251 in ordinary state were measured.

Hardness

The hardness (Shore A) of a crosslinked molded article (a test piece having a dumbbell No. 6 shape) was measured in accordance with JIS K 6253 (a peak value, 1 sec, 3 sec).

Compression set

Concerning a P-24 O ring prepared in accordance with JIS K 6262, the compression set at 200°C for 72 hours at 25% compression was measured.

Compound a used in the Examples is a compound of the formula: $CH_2=CF-CF_2OCF(CF_3)CF_2OCF(CF_3)COONH_4$

In each Example, a 50 mass% aqueous solution of the compound a was used. The amount of the compound a added in each Example is the amount of a 50 mass% aqueous solution of compound a.

Hydrocarbon surfactant b used in the Examples is a compound of the formula:

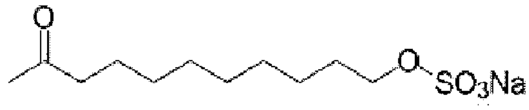

Example 1

First, 1,500 g of deionized water, 23.19 g of disodium hydrogen phosphate, 0.7 g of sodium hydroxide, 0.278 g of sodium lauryl sulfate, 0.077 g of compound a, and, moreover, a solution of 0.4 g of disodium ethylenediaminetetraacetate dihydrate and 0.3 g of ferrous sulfate heptahydrate dissolved in 100 g of deionized water were added to an SUS polymerization tank having an internal volume of 3 L, the polymerization tank was hermetically closed, and the system was purged with nitrogen to remove oxygen. The polymerization tank was heated to 25°C, and monomers (initial monomers) were introduced under pressure so as to attain vinylidene fluoride [VDF]/tetrafluoroethylene [TFE]/hexafluoropropylene [HFP] (= 19/11/70 mol%) and 0.83 MPaG while being stirred. Then, an aqueous polymerization initiator solution obtained by dissolving 6.000 g of ammonium persulfate (APS) in deionized water was introduced under pressure of nitrogen gas. Then, a 2.5 mass% aqueous solution of sodium hydroxymethanesulfinate dihydrate (hereinafter referred to as rongalite) was added to the polymerization tank to start the reaction. Subsequently, a 2.5 mass% aqueous rongalite solution was continuously added to the polymerization tank with a plunger pump. When the internal pressure dropped to 0.80 MPaG as the polymerization progressed, a mixed monomer of VDF/TFE/HFP (= 50/20/30 mol%) was introduced such that the internal pressure was constant at 0.83 MPaG. When 12 g of the mixed monomer was added, 2.91 g of diiodine compound $I(CF_2)_4I$ was introduced under pressure of nitrogen gas. When 598 g of the mixed monomer was added, stirring was stopped, and depressurization was carried out until the polymerization tank reached atmospheric pressure. The polymerization tank was cooled to give an aqueous dispersion having a solid concentration of 24.3 mass%. The total amount of the aqueous rongalite solution added was 73.0 g. Table 1 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 85.8, and the glass transition temperature was -5.4°C. The copolymer composition examined by NMR analysis was VDF/TFE/HFP = 53/21/26 (mol%). Table 1 shows the iodine content, and the amount of the $-CH_2I$ structure based on 100 mol% of the $-CH_2-$ structure, of the fluorine-containing copolymer.

Example 2

An experiment was carried out under the same conditions as Example 1 except that the diiodine compound $I(CF_2)_4I$ was 3.20 g.

The polymerization tank was cooled to give an aqueous dispersion having a solid concentration of 23.1 mass%. The total amount of the aqueous rongalite solution added was 74.7 g. Table 1 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 50.2, and the glass transition temperature was -5.9°C. The copolymer composition examined by NMR analysis was VDF/TFE/HFP = 53/21/26 (mol%). Table 1 shows the iodine content, and the amount of the $-CH_2I$ structure based on 100 mol% of the $-CH_2-$ structure, of the fluorine-containing copolymer.

Example 3

First, 1,500 g of deionized water, 23.19 g of disodium hydrogen phosphate, 0.7 g of sodium hydroxide, 0.278 g of hydrocarbon surfactant b, 0.077 g of compound a, and, moreover, a solution of 0.4 g of disodium ethylenediaminetetraacetate dihydrate and 0.3 g of ferrous sulfate heptahydrate dissolved in 100 g of deionized water were added to an SUS polymerization tank having an internal volume of 3 L, the polymerization tank was hermetically closed, and the system was purged with nitrogen to remove oxygen. The polymerization tank was heated to 25°C, and monomers (initial monomers) were introduced under pressure so as to attain vinylidene fluoride [VDF]/tetrafluoroethylene [TFE]/hexafluoropropylene [HFP] (= 19/11/70 mol%) and 0.83 MPaG while being stirred. Then, an aqueous polymerization initiator solution obtained by dissolving 6.000 g of ammonium persulfate (APS) in deionized water was introduced under pressure of nitrogen gas. Then, a 2.5 mass% aqueous rongalite solution was added to the polymerization tank to start the reaction. Subsequently, a 2.5 mass% aqueous rongalite solution was continuously added to the polymerization tank with a plunger pump. When the internal pressure dropped to 0.80 MPaG as the polymerization progressed, a mixed monomer of VDF/TFE/HFP (= 50/20/30 mol%) was introduced such that the internal pressure was constant at 0.83 MPaG. When 12 g of the mixed monomer was added, 2.91 g of diiodine compound $I(CF_2)_4I$ was introduced under pressure of nitrogen gas. When 594 g of the mixed monomer was added, stirring was stopped, and depressurization was carried out until the polymerization tank reached atmospheric pressure. The polymerization tank was cooled to give an aqueous dispersion having a solid concentration of 24.2 mass%. The total amount of the aqueous rongalite solution added was 68.0 g. Table 1 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 93.9, and the glass transition temperature was -4.7°C. The copolymer composition examined by NMR analysis was VDF/TFE/HFP = 53/21/26 (mol%). Table 1 shows the iodine content, and the amount of the $-CH_2I$ structure based on 100 mol% of the $-CH_2-$ structure, of the fluorine-containing copolymer.

Example 4

An experiment was carried out under the same conditions as Example 3 except that the diiodine compound $I(CF_2)_4I$ was 3.20 g.

The polymerization tank was cooled to give an aqueous dispersion having a solid concentration of 24.1 mass%. The total amount of the aqueous rongalite solution added was 75.9 g. Table 1 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 53.9, and the glass transition temperature was -6.7°C. The copolymer composition examined by NMR analysis was VDF/TFE/HFP = 53/21/26 (mol%). Table 1 shows the iodine content, and the amount of the $-CH_2I$ structure based on 100 mol% of the $-CH_2-$ structure, of the fluorine-containing copolymer.

Comparative Example 1

First, 1,500 g of deionized water, 23.19 g of disodium hydrogen phosphate, 0.7 g of sodium hydroxide, 0.077 g of

compound a, and, moreover, a solution of 0.4 g of disodium ethylenediaminetetraacetate dihydrate and 0.3 g of ferrous sulfate heptahydrate dissolved in 100 g of deionized water were added to an SUS polymerization tank having an internal volume of 3 L, the polymerization tank was hermetically closed, and the system was purged with nitrogen to remove oxygen. The polymerization tank was heated to 25°C, and monomers (initial monomers) were introduced under pressure so as to attain vinylidene fluoride [VDF]/tetrafluoroethylene [TFE]/hexafluoropropylene [HFP] (= 19/11/70 mol%) and 0.83 MPaG while being stirred. Then, an aqueous polymerization initiator solution obtained by dissolving 6.000 g of ammonium persulfate (APS) in deionized water was introduced under pressure of nitrogen gas. Then, a 2.5 mass% aqueous rongalite solution was added to the polymerization tank to start the reaction. Subsequently, a 2.5 mass% aqueous rongalite solution was continuously added to the polymerization tank with a plunger pump. When the internal pressure dropped to 0.80 MPaG as the polymerization progressed, a mixed monomer of VDF/TFE/HFP (= 50/20/30 mol%) was introduced such that the internal pressure was constant at 0.83 MPaG. When 12 g of the mixed monomer was added, 2.91 g of diiodine compound $I(CF_2)_4I$ was introduced under pressure of nitrogen gas. When 554 g of the mixed monomer was added, precipitation of the polymer in the tank was increased, and thus the process was suspended. Stirring was stopped, and depressurization was performed until the polymerization tank reached atmospheric pressure. The polymerization tank was cooled to give an aqueous dispersion having a solid concentration of 21.2 mass%. The total amount of the aqueous rongalite solution added was 62.1 g. Table 2 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 107.6, and the glass transition temperature was -4.5°C. The copolymer composition examined by NMR analysis was VDF/TFE/HFP = 52/21/27 (mol%). Table 2 shows the iodine content, and the amount of the $-CH_2I$ structure based on 100 mol% of the $-CH_2-$ structure, of the fluorine-containing copolymer.

Comparative Example 2

First, 1,500 g of deionized water, 23.19 g of disodium hydrogen phosphate, 0.7 g of sodium hydroxide, 0.278 g of sodium lauryl sulfate, and, moreover, a solution of 0.4 g of disodium ethylenediaminetetraacetate dihydrate and 0.3 g of ferrous sulfate heptahydrate dissolved in 100 g of deionized water were added to an SUS polymerization tank having an internal volume of 3 L, the polymerization tank was hermetically closed, and the system was purged with nitrogen to remove oxygen. The polymerization tank was heated to 25°C, and monomers (initial monomers) were introduced under pressure so as to attain vinylidene fluoride [VDF]/tetrafluoroethylene [TFE]/hexafluoropropylene [HFP] (= 19/11/70 mol%) and 0.83 MPaG while being stirred. Then, an aqueous polymerization initiator solution obtained by dissolving 6.000 g of ammonium persulfate (APS) in deionized water was introduced under pressure of nitrogen gas. Then, a 2.5 mass% aqueous rongalite solution was added to the polymerization tank to start the reaction. Subsequently, a 2.5 mass% aqueous rongalite solution was continuously added to the polymerization tank with a plunger pump. When the internal pressure dropped to 0.80 MPaG as the polymerization progressed, a mixed monomer of VDF/TFE/HFP (= 50/20/30 mol%) was introduced such that the internal pressure was constant at 0.83 MPaG. When 12 g of the mixed monomer was added, 2.91 g of diiodine compound $I(CF_2)_4I$ was introduced under pressure of nitrogen gas. When 594 g of the mixed monomer was added, stirring was stopped, and depressurization was carried out until the polymerization tank reached atmospheric pressure. The polymerization tank was cooled to give an aqueous dispersion having a solid concentration of 22.7 mass%. The total amount of the aqueous rongalite solution added was 83.4 g. Table 2 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 61, and the glass transition temperature was -4.9°C. The copolymer composition examined by NMR analysis was VDF/TFE/HFP = 53/21/26 (mol%). Table 2 shows the iodine content, and the amount of the $-CH_2I$ structure based on 100 mol% of the $-CH_2-$ structure, of the fluorine-containing copolymer.

Comparative Example 3

First, 1,500 g of deionized water, 23.19 g of disodium hydrogen phosphate, 0.7 g of sodium hydroxide, 0.278 g of hydrocarbon surfactant b, and, moreover, a solution of 0.4 g of disodium ethylenediaminetetraacetate dihydrate and 0.3 g of ferrous sulfate heptahydrate dissolved in 100 g of deionized water were added to an SUS polymerization tank having an internal volume of 3 L, the polymerization tank was hermetically sealed, and the system was purged with nitrogen to remove oxygen. The polymerization tank was heated to 25°C, and monomers (initial monomers) were introduced under pressure so as to attain vinylidene fluoride [VDF]/tetrafluoroethylene [TFE]/hexafluoropropylene [HFP] (= 19/11/70 mol%)

and 0.83 MPaG while being stirred. Then, an aqueous polymerization initiator solution obtained by dissolving 6.000 g of ammonium persulfate (APS) in deionized water was introduced under pressure of nitrogen gas. Then, a 2.5 mass% aqueous rongalite solution was added to the polymerization tank to start the reaction. Subsequently, a 2.5 mass% aqueous rongalite solution was continuously added to the polymerization tank with a plunger pump. When the internal pressure dropped to 0.80 MPaG as the polymerization progressed, a mixed monomer of VDF/TFE/HFP (= 50/20/30 mol%) was introduced such that the internal pressure was constant at 0.83 MPaG. When 12 g of the mixed monomer was added, 2.91 g of diiodine compound I $(CF_2)_4I$ was introduced under pressure of nitrogen gas. When 595 g of the mixed monomer was added, stirring was stopped, and depressurization was carried out until the polymerization tank reached atmospheric pressure. The polymerization tank was cooled to give an aqueous dispersion having a solid concentration of 23.9 mass%. The total amount of the aqueous rongalite solution added was 90.1 g. Table 2 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 84.8, and the glass transition temperature was -4.4°C. The copolymer composition examined by NMR analysis was VDF/TFE/HFP = 53/21/26 (mol%). Table 2 shows the iodine content, and the amount of the $-CH_2I$ structure based on 100 mol% of the $-CH_2-$ structure, of the fluorine-containing copolymer.

Example 5

First, 1,500 g of deionized water, 0.150 g of sodium lauryl sulfate, and 0.077 g of compound a were added to an SUS polymerization tank having an internal volume of 3 L, the polymerization tank was hermetically sealed, and the system was purged with nitrogen to remove oxygen. The polymerization tank was heated to 50°C, and monomers (initial monomers) were introduced under pressure so as to attain vinylidene fluoride [VDF]/tetrafluoroethylene [TFE]/hexafluoropropylene [HFP] (= 19/11/70 mol%) and 1.45 MPaG while being stirred. Then, an aqueous polymerization initiator solution obtained by dissolving 5.320 g of ammonium persulfate (APS) in deionized water was introduced under pressure of nitrogen gas. Then, the reaction was started. When the internal pressure dropped to 1.42 MPaG as the polymerization progressed, a mixed monomer of VDF/TFE/HFP (= 50/20/30 mol%) was introduced such that the internal pressure was constant at 1.45 MPaG. When 12 g of the mixed monomer was added, 3.202 g of diiodine compound $I(CF_2)_4I$ was introduced under pressure of nitrogen gas. Seven hours after the initiation of polymerization, 2.66 g of an aqueous polymerization initiator solution of APS was introduced under pressure. When 597 g of the mixed monomer was added, stirring was stopped, and depressurization was carried out until the polymerization tank reached atmospheric pressure. The polymerization tank was cooled to give an aqueous dispersion having a solid concentration of 24.6 mass%. Table 3 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 48.1, and the glass transition temperature was -6.9°C. The copolymer composition examined by NMR analysis was VDF/TFE/HFP = 54/22/24 (mol%). Table 3 shows the iodine content, and the amount of the $-CH_2I$ structure based on 100 mol% of the $-CH_2-$ structure, of the fluorine-containing copolymer.

Example 6

First, 1,500 g of deionized water, 0.075 g of sodium lauryl sulfate, and 0.077 g of compound a were added to an SUS polymerization tank having an internal volume of 3 L, the polymerization tank was hermetically sealed, and the system was purged with nitrogen to remove oxygen. The polymerization tank was heated to 50°C, and monomers (initial monomers) were introduced under pressure so as to attain vinylidene fluoride [VDF]/tetrafluoroethylene [TFE]/hexafluoropropylene [HFP] (= 19/11/70 mol%) and 1.45 MPaG while being stirred. Then, an aqueous polymerization initiator solution obtained by dissolving 5.320 g of ammonium persulfate (APS) in deionized water was introduced under pressure of nitrogen gas. Then, the reaction was started. When the internal pressure dropped to 1.42 MPaG as the polymerization progressed, a mixed monomer of VDF/TFE/HFP (= 50/20/30 mol%) was introduced such that the internal pressure was constant at 1.45 MPaG. When 12 g of the mixed monomer was added, 3.202 g of diiodine compound $I(CF_2)_4I$ was introduced under pressure of nitrogen gas. When 597 g of the mixed monomer was added, stirring was stopped, and depressurization was carried out until the polymerization tank reached atmospheric pressure. The polymerization tank was cooled to give an aqueous dispersion having a solid concentration of 25.4 mass%. Table 3 shows the adhesion rate to the polymerization tank, the mass of the aqueous dispersion, the average particle size, and the number of particles.

An aqueous aluminum sulfate solution was added to the aqueous dispersion to carry out coagulation. The

resulting coagulated product was washed with water and dried to give a rubber-like fluorine-containing copolymer. The Mooney viscosity of the rubber-like fluorine-containing copolymer was ML1+10 (100°C) = 44.8, and the glass transition temperature was -6.8°C. The copolymer composition examined by NMR analysis was VDF/TFE/HFP = 53/22/25 (mol%). Table 3 shows the iodine content, and the amount of the $-CH_2I$ structure based on 100 mol% of the $-CH_2-$ structure, of the fluorine-containing copolymer.

Comparative Example 4

First, 1,500 g of deionized water and 0.077 g of compound a were added to an SUS polymerization tank having an internal volume of 3 L, the polymerization tank was hermetically sealed, and the system was purged with nitrogen to remove oxygen. The polymerization tank was heated to 50°C, and monomers (initial monomers) were introduced under pressure so as to attain vinylidene fluoride [VDF]/tetrafluoroethylene [TFE]/hexafluoropropylene [HFP] (= 19/11/70 mol%) and 1.45 MPaG while being stirred. Then, an aqueous polymerization initiator solution obtained by dissolving 5.320 g of ammonium persulfate (APS) in deionized water was introduced under pressure of nitrogen gas. Then, the reaction was started. When the internal pressure dropped to 1.42 MPaG as the polymerization progressed, a mixed monomer of VDF/TFE/HFP (= 50/20/30 mol%) was introduced such that the internal pressure was constant at 1.45 MPaG. When 12 g of the mixed monomer was added, 3.202 g of diiodine compound $I(CF_2)_4I$ was introduced under pressure of nitrogen gas. When 594 g of the mixed monomer was added, stirring was stopped, and depressurization was carried out until the polymerization tank reached atmospheric pressure. The polymerization tank was cooled to give an aqueous dispersion having a solid concentration of 24.4 mass%. Table 3 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 103, and the glass transition temperature was -5.6°C. The copolymer composition examined by NMR analysis was VDF/TFE/HFP = 53/21/26 (mol%). Table 3 shows the iodine content, and the amount of the $-CH_2I$ structure based on 100 mol% of the $-CH_2-$ structure, of the fluorine-containing copolymer.

[Table 1]

**Table 1**

| | | Example 1 | Example 2 | Example 3 | Example 4 |
|---|---|---|---|---|---|
| Hydrocarbon surfactant | | Sodium lauryl sulfate | Sodium lauryl sulfate | Hydrocarbon surfactant b | Hydrocarbon surfactant b |
| Reaction time | (min.) | 386 | 392 | 361 | 339 |
| Adhesion rate | (mass%) | 1.5 | 2.4 | 0.4 | 0.1 |
| Solid concentration | (mass%) | 24.3 | 23.1 | 24.2 | 24.1 |
| Mass of aqueous dispersion | (g) | 2259 | 2291 | 2264 | 2306 |
| Average particle size | (nm) | 290 | 262 | 386 | 425 |
| Number of particles | (particle/cc) | $1.39\times10^{13}$ | $1.76\times10^{13}$ | $5.90\times10^{12}$ | $4.39\times10^{12}$ |
| Iodine content | (mass%) | 0.17 | 0.23 | 0.15 | 0.23 |
| Amount of $-CH_2I$ structure | (mol%) | 0.24 | 0.27 | 0.18 | 0.25 |

[Table 2]

Table 2

| | Comparative Example 1 | Comparative Example 2 | Comparative Example 3 |
|---|---|---|---|
| Hydrocarbon surfactant | - | Sodium lauryl sulfate | Hydrocarbon surfactant b |
| Reaction time (min.) | 326 | 448 | 480 |
| Adhesion rate (mass%) | 12.4 | 8.4 | 0.1 |
| Solid concentration (mass%) | 21.2 | 22.7 | 23.9 |
| Mass of aqueous dispersion (g) | 2152 | 2252 | 2266 |
| Average particle size (nm) | 1028 | 226 | 875 |
| Number of particles (particle/cc) | $2.63\times10^{11}$ | $2.70\times10^{13}$ | $4.98\times10^{11}$ |
| Iodine content (mass%) | 0.14 | 0.2 | 0.17 |
| Amount of $-CH_2I$ structure (mol%) | 0.13 | 0.21 | 0.19 |

[Table 3]

Table 3

| | Example 5 | Example 6 | Comparative Example 4 |
|---|---|---|---|
| Hydrocarbon surfactant | Sodium lauryl sulfate | Sodium lauryl sulfate | - |
| Reaction time (min.) | 732 | 556 | 510 |
| Adhesion rate (mass%) | 1.8 | 1.5 | 9.6 |
| Solid concentration (mass%) | 24.6 | 25.4 | 24.4 |
| Mass of aqueous dispersion (g) | 2037 | 2029 | 1883 |
| Average particle size (nm) | 306 | 321 | 754 |
| Number of particles (particle/cc) | $1.20\times10^{13}$ | $1.09\times10^{13}$ | $7.98\times10^{11}$ |
| Iodine content (mass%) | 0.23 | 0.24 | 0.16 |
| Amount of $-CH_2I$ structure (mol%) | 0.34 | 0.32 | 0.20 |

[Table 4]

Table 4

| | Example 2 | Example 4 | Example 5 | Example 6 |
|---|---|---|---|---|
| Formulation | | | | |
| Fluorine-containing elastomer (phr) | 100 | 100 | 100 | 100 |
| MT carbon (phr) | 20 | 20 | 20 | 20 |
| TAIC (phr) | 4 | 4 | 4 | 4 |
| Perhexa 25B (phr) | 1.5 | 1.5 | 1.5 | 1.5 |
| Vulcanization characteristics (160°C) | | | | |
| ML (dNm) | 0.7 | 0.8 | 0.7 | 0.7 |
| MH (dNm) | 14.4 | 16.8 | 22.5 | 24.0 |

(continued)

| | | | | | |
|---|---|---|---|---|---|
| Vulcanization characteristics (160°C) | | | | | |
| T10 | (min.) | 1.4 | 1.3 | 1.2 | 1.2 |
| T90 | (min.) | 6.8 | 6.3 | 4.0 | 4.0 |
| Vulcanization conditions | | | | | |
| Press vulcanization | | 160°C×10min | | | |
| Oven vulcanization | | 180°C×4h | | | |
| Ordinary-state properties | | | | | |
| M100 | (MPa) | 2.9 | 3.0 | 3.0 | 3.2 |
| TB | (MPa) | 17.7 | 21.4 | 25.4 | 21.7 |
| EB | (%) | 460 | 430 | 350 | 310 |
| ShoreA peak | (point) | 72 | 71 | 69 | 69 |
| ShoreA 1sec | (point) | 69 | 69 | 67 | 67 |
| ShoreA 3sec | (point) | 67 | 67 | 65 | 66 |
| Properties of crosslinked molded article | | | | | |
| Compression set | (%) | - | | 31 | 28 |

Example 7

An aqueous dispersion was obtained in the same manner as Example 6 except that 0.075 g of sodium octyl sulfate was used in place of 0.075 g of sodium lauryl sulfate. Table 5 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 46.5. The copolymer composition of the fluorine-containing copolymer was VDF/TFE/HFP = 53/22/25 (mol%). Table 5 shows the iodine content, and the amount of the $-CH_2I$ structure based on 100 mol% of the $-CH_2-$ structure, of the fluorine-containing copolymer.

Example 8

An aqueous dispersion was obtained in the same manner as Example 6 except that the amount of compound a added was 0.105 g. Table 5 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 54.5. The copolymer composition of the fluorine-containing copolymer was VDF/TFE/HFP = 54/22/24 (mol%). Table 5 shows the iodine content, and the amount of the $-CH_2I$ structure based on 100 mol% of the $-CH_2-$ structure, of the fluorine-containing copolymer.

Example 9

An aqueous dispersion was obtained in the same manner as Example 6 except that the amount of compound a added was 0.154 g. Table 5 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 51.2. The copolymer composition of the fluorine-containing copolymer was VDF/TFE/HFP = 54/22/24 (mol%). Table 5 shows the iodine content, and the amount of the $-CH_2I$ structure based on 100 mol% of the $-CH_2-$ structure, of the fluorine-containing copolymer.

Example 10

An aqueous dispersion was obtained in the same manner as Example 6 except that 0.075 g of hydrocarbon surfactant b was used in place of 0.075 g of sodium lauryl sulfate. Table 6 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 49.3. The copolymer composition of the fluorine-containing copolymer was VDF/TFE/HFP = 53/22/25 (mol%). Table 6 shows the iodine content, and the amount of the $-CH_2I$ structure based on 100 mol% of the $-CH_2-$ structure, of the fluorine-containing copolymer.

Example 11

First, 1,500 g of deionized water, 0.075 g of sodium lauryl sulfate, and 0.095 g of a 50 mass% aqueous solution of $CH_2=CF-CF_2OCF(CF_3)COONH_4$ were added to an SUS polymerization tank having an internal volume of 3 L, the polymerization tank was hermetically sealed, and the system was purged with nitrogen to remove oxygen. The polymerization tank was heated to 50°C, and monomers (initial monomers) were introduced under pressure so as to attain vinylidene fluoride [VDF]/tetrafluoroethylene [TFE]/hexafluoropropylene [HFP] (= 19/11/70 mol%) and 1.45 MPaG while being stirred. Then, an aqueous polymerization initiator solution obtained by dissolving 5.320 g of ammonium persulfate (APS) in deionized water was introduced under pressure of nitrogen gas. Then, the reaction was started. When the internal pressure dropped to 1.42 MPaG as the polymerization progressed, a mixed monomer of VDF/TFE/HFP (= 50/20/30 mol%) was introduced such that the internal pressure was constant at 1.45 MPaG. When 12 g of the mixed monomer was added, 3.202 g of diiodine compound $I(CF_2)_4I$ was introduced under pressure of nitrogen gas. When 598 g of the mixed monomer was added, stirring was stopped, and depressurization was carried out until the polymerization tank reached atmospheric pressure. The polymerization tank was cooled to give an aqueous dispersion. Table 6 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 43.6. The copolymer composition of the fluorine-containing copolymer was VDF/TFE/HFP = 53/22/25 (mol%). Table 6 shows the iodine content, and the amount of the $-CH_2I$ structure based on 100 mol% of the $-CH_2-$ structure, of the fluorine-containing copolymer.

Example 12

An aqueous dispersion was obtained in the same manner as Example 6 except that the amount of compound a added was 0.030 g. Table 6 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 40.3. The copolymer composition of the fluorine-containing copolymer was VDF/TFE/HFP = 55/20/25 (mol%). Table 6 shows the amount of the $-CH_2I$ structure based on 100 mol% of the $-CH_2$-structure of the fluorine-containing copolymer.

[Table 5]

**Table 5**

| | | Example 7 | Example 8 | Example 9 |
|---|---|---|---|---|
| Hydrocarbon surfactant | | Sodium octyl sulfate | Sodium lauryl sulfate | Sodium lauryl sulfate |
| Reaction time | (min.) | 504 | 622 | 693 |
| Adhesion rate | (mass%) | 3.4 | 1.9 | 1.5 |
| Solid concentration | (mass%) | 25.1 | 25.1 | 24.2 |

(continued)

| | | Example 7 | Example 8 | Example 9 |
|---|---|---|---|---|
| Mass of aqueous dispersion | (g) | 2008 | 2017 | 2022 |
| Average particle size | (nm) | 241 | 254 | 254 |
| Number of particles | (particle/cc) | $2.53\times10^{13}$ | $2.47\times10^{13}$ | $2.06\times10^{13}$ |
| Iodine content | (mass%) | 0.24 | 0.23 | 0.26 |
| Amount of $-CH_2I$ structure | (mol%) | 0.33 | 0.32 | 0.32 |

[Table 6]

**Table 6**

| | | Example 10 | Example 11 | Example 12 |
|---|---|---|---|---|
| Hydrocarbon surfactant | | Hydrocarbon surfactant b | Sodium lauryl sulfate | Sodium lauryl sulfate |
| Reaction time | (min.) | 554 | 628 | 567 |
| Adhesion rate | (mass%) | 2.4 | 1.1 | 1.0 |
| Solid concentration | (mass%) | 245 | 25.1 | 24.7 |
| Mass of aqueous dispersion | (g) | 1994 | 2016 | 2020 |
| Average particle size | (nm) | 262 | 289 | 245 |
| Number of particles | (particle/cc) | $1.93\times10^{13}$ | $1.47\times10^{13}$ | $2.36\times10^{13}$ |
| Iodine content | (mass%) | 0.23 | 0.23 | - |
| Amount of $-CH_2I$ structure | (mol%) | 0.34 | 0.35 | 0.34 |

[Table 7]

**Table 7**

| | | Example 7 | Example 8 | Example 9 | Example | 10 Example 1 | 1 Example 12 |
|---|---|---|---|---|---|---|---|
| Formulation | | | | | | | |
| Fluorine-containing elasto | (phr) | 100 | 100 | 100 | 100 | 100 | 100 |
| MT carbon | (phr) | 20 | 20 | 20 | 20 | 20 | 20 |
| TAIC | (phr) | 4 | 4 | 4 | 4 | 4 | 4 |
| Perhexa 25B | (phr) | 1.5 | 1.5 | 1.5 | 1.5 | 1.5 | 1.5 |
| Vulcanization characteristics (160°C) | | | | | | | |
| ML | (dNm) | 0.6 | 0.8 | 0.8 | 0.7 | 0.6 | 0.6 |
| MH | (dNm) | 24.1 | 24.5 | 24.0 | 24.8 | 24.8 | 24.3 |
| T10 | (min.) | 1.2 | 1.2 | 1.2 | 1.2 | 1.3 | 1.2 |
| T90 | (min.) | 4.0 | 4.1 | 4.1 | 4.3 | 4.3 | 4.0 |

(continued)

| | | | | | | | |
|---|---|---|---|---|---|---|---|
| Vulcanization conditions | | | | | | | |
| Press vulcanization | | 160°C×10min | | | | | |
| Oven vulcanization | | 180°C×4h | | | | | |
| Ordinary-state properties | | | | | | | |
| M100 | (MPa) | 3.0 | 3.3 | 3.4 | 3.7 | 3.6 | 3.3 |
| TB | (MPa) | 22.3 | 19.6 | 19.6 | 20.8 | 23.8 | 22.8 |
| EB | (%) | 340 | 302 | 305 | 310 | 320 | 316 |
| ShoreA peak | (point) | 69 | 71 | 72 | 72 | 71 | 71 |
| ShoreA 1sec | (point) | 67 | 69 | 69 | 70 | 69 | 69 |
| ShoreA 3sec | (point) | 66 | 68 | 68 | 69 | 68 | 68 |
| Properties of crosslinked molded article | | | | | | | |
| Compression set | (%) | 27 | 26 | 28 | 27 | 26 | 25 |

Example 13

First, 1,500 g of deionized water, 0.075 g of sodium laurate, and 0.090 g of compound a were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/hexafluoropropylene [HFP] (= 50/50 mol%) and 2.00 MPaG while being stirred. Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG. When 10 g of the mixed monomer was added, 2.16 g of diiodine compound $I(CF_2)_4I$ was introduced under pressure of nitrogen gas. Then, 3.0 hours, 3.6 hours, 4.6 hours, and 7.6 hours after the initiation of polymerization, 0.072 g of an aqueous polymerization initiator solution of APS was introduced under pressure. When 500 g of the mixed monomer was added, stirring was stopped, and depressurization was carried out until the polymerization tank reached atmospheric pressure. The polymerization tank was cooled to give an aqueous dispersion. Table 8 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 42.8. The copolymer composition of the fluorine-containing copolymer was VDF/HFP = 78/22 (mol%). Table 8 shows the amount of the $-CH_2I$ structure based on 100 mol% of the $-CH_2-$ structure of the fluorine-containing copolymer.

Example 14

First, 1,500 g of deionized water, 0.0525 g of sodium laurate, and 0.090 g of a 50 mass% aqueous solution of $CF_2=CFOCF_2CF(CF_3)OCF_2CF_2COONH_4$ were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/hexafluoropropylene [HFP] (= 50/50 mol%) and 2.00 MPaG while being stirred. Then, an aqueous polymerization initiator solution obtained by dissolving 0.072 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG. When 10 g of the mixed monomer was added, 2.16 g of diiodine compound $I(CF_2)_4I$ was introduced under pressure of nitrogen gas. Then, 3.0 hours, 6.0 hours, 8.5 hours, and 9.0 hours after the initiation of polymerization, 0.072 g of an aqueous polymerization initiator solution of APS was introduced under pressure. When 500 g of the mixed monomer was added, stirring was stopped, and depressurization was carried out until the polymerization tank reached atmospheric

pressure. The polymerization tank was cooled to give an aqueous dispersion. Table 8 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 40.9. The copolymer composition of the fluorine-containing copolymer was VDF/HFP = 78/22 (mol%). Table 8 shows the amount of the $-CH_2I$ structure based on 100 mol% of the $-CH_2-$ structure of the fluorine-containing copolymer.

Example 15

First, 1,500 g of deionized water, 0.075 g of sodium laurate, and 0.090 g of compound a were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/hexafluoropropylene [HFP] (= 50/50 mol%) and 2.00 MPaG while being stirred. Then, an aqueous polymerization initiator solution obtained by dissolving 0.216 g of ammonium persulfate (APS) in deionized water was introduced under pressure of nitrogen gas. When the internal pressure dropped to 1.98 MPaG as the polymerization progressed, a mixed monomer of VDF/HFP (= 78/22 mol%) was introduced such that the internal pressure was constant at 2.00 MPaG. When 10 g of the mixed monomer was added, 2.16 g of diiodine compound $I(CF_2)_4I$ was introduced under pressure of nitrogen gas. Then, 4.17 hours after the initiation of polymerization, 0.072 g of an aqueous polymerization initiator solution of APS was introduced under pressure. When 500 g of the mixed monomer was added, stirring was stopped, and depressurization was carried out until the polymerization tank reached atmospheric pressure. The polymerization tank was cooled to give an aqueous dispersion. Table 8 shows the adhesion rate to the polymerization tank, the solid concentration of the aqueous dispersion, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 46.5. The copolymer composition of the fluorine-containing copolymer was VDF/HFP = 78/22 (mol%). Table 8 shows the amount of the $-CH_2I$ structure based on 100 mol% of the $-CH_2-$ structure of the fluorine-containing copolymer.

[Table 8]

Table 8

| | | Example 13 | Example 14 | Example 15 |
|---|---|---|---|---|
| Hydrocarbon surfactant | | Sodium laurate | Sodium laurate | Sodium laurate |
| Reaction time | (min.) | 524 | 652 | 435 |
| Adhesion rate | (mass%) | 0.6 | 0.6 | 0.7 |
| Solid concentration | (mass%) | 24.9 | 24.7 | 24.7 |
| Mass of aqueous dispersion | (g) | 1957 | 1995 | 1953 |
| Average particle size | (nm) | 79 | 90 | 80 |
| Number of particles | (particle/cc) | $7.08\times10^{14}$ | $4.76\times10^{14}$ | $6.87\times10^{14}$ |
| Amount of $-CH_2I$ structure | (mol%) | 0.15 | 0.15 | 0.15 |

Example 16

An aqueous dispersion and a rubber-like fluorine-containing copolymer were obtained by performing the same experimental operation as Example 13 except that unlike Example 13 sodium lauryl sulfate was used in place of sodium laurate, the amount of compound a was changed to 0.30 g, and introduction of an aqueous APS initiator solution under pressure after the initiation of polymerization was carried out after 3.0 hours, 6.0 hours, and 9.0 hours. The Mooney viscosity was ML1+10 (100°C) = 39.3. The copolymer composition of the fluorine-containing copolymer was VDF/HFP = 78/22 (mol%).

Example 17

An aqueous dispersion and a rubber-like fluorine-containing copolymer were obtained by performing the same experimental operation as Example 16 except that unlike Example 16 sodium dodecyl sulfonate was used in place of sodium laurate. The Mooney viscosity was ML1+10 (100°C) = 47.9. The copolymer composition of the fluorine-containing copolymer was VDF/HFP = 78/22 (mol%).

Example 18

An aqueous dispersion and a rubber-like fluorine-containing copolymer were obtained by performing the same experimental operation as Example 17 except that unlike Example 17 ammonium lauryl sulfate was used in place of sodium dodecyl sulfonate. The Mooney viscosity was ML1+10 (100°C) = 47.0. The copolymer composition of the fluorine-containing copolymer was VDF/HFP = 78/22 (mol%).

Example 19

An aqueous dispersion and a rubber-like fluorine-containing copolymer were obtained by performing the same experimental operation as Example 16 except that unlike Example 16, 0.30 g of a 50 mass% aqueous solution of $CF_2=CFOCF_2CF(CF_3)OCF_2CF_2COONH_4$ was added in place of 0.30 g of compound a. The Mooney viscosity was ML1+10 (100°C) = 45.3. The copolymer composition of the fluorine-containing copolymer was VDF/HFP = 78/22 (mol%).

Example 20

An aqueous dispersion and a rubber-like fluorine-containing copolymer were obtained by performing the same experimental operation as Example 15 except that unlike Example 15, the amount of compound a was changed to 0.30 g, and introduction of the aqueous APS initiator solution under pressure after the initiation of polymerization was carried out after 4.32 hours. The Mooney viscosity was ML1+10 (100°C) = 47.6. The copolymer composition of the fluorine-containing copolymer was VDF/HFP = 78/22 (mol%).

Table 9 shows the reaction time of Examples 16-20, the adhesion rate to the polymerization tank, the solid concentration of the aqueous dispersion, the mass of the aqueous dispersion, the average particle size, the number of particles, and the amount of the $-CH_2I$ structure based on 100 mol% of the $-CH_2-$ structure of the fluorine-containing copolymer.

[Table 9]

Table 9

| | | Example 16 | Example 17 | Example 18 | Example 19 | Example 20 |
|---|---|---|---|---|---|---|
| Hydrocarbon surfactant | | Sodium lauryl sulfate | Sodium dodecyl sulfonate | Ammonium lauryl sulfate | Sodium lauryl sulfate | Sodium laurate |
| Reaction time | (min.) | 593 | 603 | 579 | 652 | 467 |
| Adhesion rate | (mass%) | 0.5 | 0.9 | 0.8 | 1.0 | 0.7 |
| Solid concentration | (mass%) | 25.1 | 24.7 | 24.8 | 24.8 | 24.8 |
| Mass of aqueous dispersion | (g) | 1973.6 | 1979.4 | 1951.9 | 1969.5 | 1951.7 |
| Average particle size | (nm) | 99.8 | 106.2 | 100.5 | 203.8 | 65.8 |
| Number of particles | (particle/cc) | $3.55\times10^{14}$ | $2.89\times10^{14}$ | $3.44\times10^{14}$ | $4.11\times10^{13}$ | $1.22\times10^{15}$ |
| Amount of $-CH_2I$ structure | (mol%) | 0.15 | 0.14 | 0.16 | 0.16 | 0.16 |

Fluorine-containing copolymer compositions were obtained by the same operation as Example 2 using the fluorine-containing copolymers obtained in Examples 13-20, and vulcanization properties, ordinary-state properties, hardness, and compression set were measured. The results are shown in Table 10.

[Table 10]

Table 10

| | | Example 13 | Example 14 | Example 15 | Example 16 | Example 17 | Example 18 | Example 19 | Example 20 |
|---|---|---|---|---|---|---|---|---|---|
| Formulation | | | | | | | | | |
| Fluorine-containing elastort | (phr) | 100 | 100 | 100 | 100 | 100 | 100 | 100 | 100 |
| MT carbon | (phr) | 20 | 20 | 20 | 20 | 20 | 20 | 20 | 20 |
| TAIC | (phr) | 4 | 4 | 4 | 4 | 4 | 4 | 4 | 4 |
| Perhexa 258 | (phr) | 1.5 | 1.5 | 1.5 | 1.5 | 1.5 | 1.5 | 1.5 | 1.5 |
| Vulcanization characteristics (160°C) | | | | | | | | | |
| ML | (dNm) | 0.6 | 0.6 | 0.7 | 0.5 | 0.7 | 0.7 | 0.6 | 0.7 |
| MH | (dNm) | 15.1 | 16.2 | 16.1 | 15.7 | 15.3 | 16.2 | 16.2 | 16.2 |
| T10 | (min.) | 1.2 | 1.2 | 1.2 | 1.2 | 1.2 | 1.2 | 1.2 | 1.3 |
| T90 | (min.) | 5.4 | 4.7 | 4.8 | 4.8 | 5.1 | 4.8 | 4.8 | 5.4 |
| Vulcanization conditions | | | | | | | | | |
| Press vulcanization | | 160°C×10min | | | | | | | |
| Oven vulcanization | | 180°C×46 | | | | | | | |
| Ordinary-state properties | | | | | | | | | |
| M100 | (MPa) | 2.0 | 2.0 | 2.1 | 1.9 | 1.8 | 1.8 | 1.9 | 2.0 |
| TB | (MPa) | 22.0 | 22.7 | 23.6 | 23.5 | 20.6 | 21.6 | 22.4 | 24.7 |
| EB | (%) | 455 | 448 | 485 | 460 | 460 | 450 | 440 | 499 |
| ShoreA peak | (point) | 65 | 65 | 65 | 65 | 65 | 65 | 66 | 65 |
| ShoreA 1sec | (point) | 62 | 62 | 63 | 62 | 62 | 63 | 63 | 63 |
| ShoreA 3sec | (point) | 61 | 61 | 61 | 60 | 61 | 61 | 62 | 61 |
| Properties of crosslinked molded article | | | | | | | | | |
| Compression set | (%) | 30 | 31 | 31 | 32 | 34 | 34 | 34 | 29 |

Example 21

An aqueous dispersion was obtained in the same manner as Example 12 except that the amount of ammonium persulfate (APS) added was 4.000 g. Table 11 shows the adhesion rate to the polymerization tank, the solid concentration of the aqueous dispersion, the mass of the aqueous dispersion, the average particle size, and the number of particles.
An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 40.4. The copolymer composition of the fluorine-containing copolymer was VDF/TFE/HFP = 54/20/26 (mol%). Table 11 shows the amount of the -$CH_2I$ structure based on 100 mol% of the -$CH_2$-structure of the fluorine-containing copolymer.

Example 22

First, 1,500 g of deionized water and 0.105 g of compound a were added to an SUS polymerization tank having an internal volume of 3 L, the polymerization tank was hermetically sealed, and the system was purged with nitrogen to remove oxygen. The polymerization tank was heated to 50°C, and monomers (initial monomers) were introduced under pressure so as to attain vinylidene fluoride [VDF]/tetrafluoroethylene [TFE]/hexafluoropropylene [HFP] (= 19/11/70 mol%) and 1.45 MPaG while being stirred. Then, an aqueous polymerization initiator solution obtained by dissolving 5.320 g of ammonium persulfate (APS) in deionized water was introduced under pressure of nitrogen gas. Then, the reaction was started. When the internal pressure dropped to 1.42 MPaG as the polymerization progressed, a mixed monomer of VDF/TFE/HFP (= 50/20/30 mol%) was introduced such that the internal pressure was constant at 1.45 MPaG. When 8 g of the mixed monomer was further added, 7.5 g of a 1% by mass aqueous sodium lauryl sulfate solution (content 0.075 g) was introduced by nitrogen gas pressure, and when 18 g was added, 3.202 g of a diiodine compound $I(CF_2)_4I$ was similarly introduced under pressure of nitrogen gas. When 597 g of the mixed monomer was added, stirring was stopped, and depressurization was carried out until the polymerization tank reached atmospheric pressure. The polymerization tank was cooled to give an aqueous dispersion having a solid concentration of 26.0 mass%. Table 11 shows the adhesion rate to the polymerization tank, the mass of the aqueous dispersion, the average particle size, and the number of particles.
An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 43.6. The copolymer composition examined by NMR analysis was VDF/TFE/HFP = 54/20/26 (mol%). Table 11 shows the iodine content, and the amount of the -$CH_2I$ structure based on 100 mol% of the - $CH_2$- structure, of the fluorine-containing copolymer.

[Table 11]

**Table 11**

| | | Example 21 | Example 22 |
|---|---|---|---|
| Hydrocarbon surfactant | | Sodium lauryl sulfate | Sodium lauryl sulfate |
| Reaction time | (min.) | 720 | 573 |
| Adhesion rate | (mass%) | 0.31 | 1.1 |
| Solid concentration | (mass%) | 25.6 | 26.0 |
| Mass of aqueous dispersion | (g) | 2069 | 2089 |
| Average particle size | (nm) | 350 | 270 |
| Number of particles | (particle/cc) | $8.51\times10^{12}$ | $1.90\times10^{13}$ |
| Iodine content | (mass%) | 0.28 | 0.26 |
| Amount of -$CH_2I$ structure | (mol%) | 0.37 | 0.33 |

Example 23

First, 1,500 g of deionized water, 0.075 g of sodium laurate, and 0.090 g of compound a were added to an SUS polymerization tank having an internal volume of 3 L, the polymerization tank was hermetically sealed, and the system was

purged with nitrogen to remove oxygen. The polymerization tank was heated to 80°C, and monomers (initial monomers) were introduced under pressure so as to attain vinylidene fluoride [VDF]/tetrafluoroethylene [TFE]/hexafluoropropylene [HFP] (= 19/11/70 mol%) and 2.03 MPaG while being stirred. Then, an aqueous polymerization initiator solution obtained by dissolving 0.060 g of ammonium persulfate (APS) in deionized water was introduced under pressure of nitrogen gas. Then, the reaction was started. When the internal pressure dropped to 2.00 MPaG as the polymerization progressed, a mixed monomer of VDF/TFE/HFP (= 50/20/30 mol%) was introduced such that the internal pressure was constant at 2.03 MPaG. When 13 g of the mixed monomer was added, 2.907 g of diiodine compound $I(CF_2)_4I$ was introduced under pressure of nitrogen gas. Then, 3 hours after the initiation of polymerization, 0.030 g of an aqueous APS polymerization initiator solution was introduced under pressure, and after 5 and 10.5 hours, 0.060 g of an aqueous APS polymerization initiator solution was introduced under pressure. When 594 g of the mixed monomer was added, stirring was stopped, and depressurization was carried out until the polymerization tank reached atmospheric pressure. The polymerization tank was cooled to give an aqueous dispersion having a solid concentration of 26.7 mass%. Table 12 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 41.7. The copolymer composition examined by NMR analysis was VDF/TFE/HFP = 53/20/27 (mol%). Table 12 shows the iodine content, and the amount of the $-CH_2I$ structure based on 100 mol% of the $-CH_2-$ structure, of the fluorine-containing copolymer.

Example 24

First, 1,500 g of deionized water, 0.075 g of sodium lauryl sulfate, and 0.090 g of compound a were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/tetrafluoroethylene [TFE]/hexafluoropropylene [HFP] (= 19/11/70 mol%) and 2.03 MPaG while being stirred. Then, an aqueous polymerization initiator solution obtained by dissolving 0.100 g of ammonium persulfate (APS) in deionized water was introduced under pressure of nitrogen gas. Then, the reaction was started. When the internal pressure dropped to 2.00 MPaG as the polymerization progressed, a mixed monomer of VDF/TFE/HFP (= 50/20/30 mol%) was introduced such that the internal pressure was constant at 2.03 MPaG. When 12 g of the mixed monomer was added, 2.448 g of diiodine compound $I(CF_2)_4I$ was introduced under pressure of nitrogen gas. Then, 4.5 hours after the initiation of polymerization, 0.030 g of an aqueous APS polymerization initiator solution was introduced under pressure, and after 7.3 hours, 0.015 g of an aqueous APS polymerization initiator solution was introduced under pressure. When 503 g of the mixed monomer was added, stirring was stopped, and depressurization was carried out until the polymerization tank reached atmospheric pressure. The polymerization tank was cooled to give an aqueous dispersion having a solid concentration of 23.4 mass%. Table 12 shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 45.0. The copolymer composition examined by NMR analysis was VDF/TFE/HFP = 54/22/24 (mol%). Table 12 shows the iodine content, and the amount of the $-CH_2I$ structure based on 100 mol% of the $-CH_2-$ structure, of the fluorine-containing copolymer.

Example 25

First, 1,500 g of deionized water, 0.075 g of sodium laurate, and 0.090 g of compound a were added to an SUS polymerization tank having an internal volume of 3 L, the polymerization tank was hermetically sealed, and the system was purged with nitrogen to remove oxygen. The polymerization tank was heated to 80°C, and monomers (initial monomers) were introduced under pressure so as to attain vinylidene fluoride [VDF]/tetrafluoroethylene [TFE]/hexafluoropropylene [HFP] (= 19/11/70 mol%) and 2.03 MPaG while being stirred. Then, an aqueous polymerization initiator solution obtained by dissolving 0.200 g of ammonium persulfate (APS) in deionized water was introduced under pressure of nitrogen gas. Then, the reaction was started. When the internal pressure dropped to 2.00 MPaG as the polymerization progressed, a mixed monomer of VDF/TFE/HFP (= 50/20/30 mol%) was introduced such that the internal pressure was constant at 2.03 MPaG. When 12 g of the mixed monomer was added, 2.448 g of diiodine compound $I(CF_2)_4I$ was introduced under pressure of nitrogen gas. Then, 3, 5.5, 6.8, and 8.2 hours after the initiation of polymerization, 0.050 g of an aqueous APS polymerization initiator solution was introduced under pressure. When 500 g of the mixed monomer was added, stirring was stopped, and depressurization was carried out until the polymerization tank reached atmospheric pressure. The polymerization tank was cooled to give an aqueous dispersion having a solid concentration of 23.5 mass%. Table 12

shows the adhesion rate to the polymerization tank, the mass of the aqueous dispersion, the average particle size, and the number of particles.

An aqueous aluminum sulfate solution was added to the aqueous dispersion to carry out coagulation. The resulting coagulated product was washed with water and dried to give a rubber-like fluorine-containing copolymer. The Mooney viscosity of the rubber-like fluorine-containing copolymer was ML1+10 (100°C) = 36.5. The copolymer composition examined by NMR analysis was VDF/TFE/HFP = 55/21/24 (mol%). Table 12 shows the iodine content, and the amount of the -$CH_2$I structure based on 100 mol% of the - $CH_2$- structure, of the fluorine-containing copolymer.

[Table 12]

Table 12

| | | Example 23 | Example 24 | Example 25 |
|---|---|---|---|---|
| Hydrocarbon surfactant | | Sodium laurate | Sodium lauryl sulfate | Sodium laurate |
| Reaction time | (min.) | 801 | 586 | 637 |
| Adhesion rate | (mass%) | 0.7 | 0.2 | 0 |
| Solid concentration | (mass%) | 26.7 | 23.4 | 23.5 |
| Mass of aqueous dispersion | (g) | 2079 | 1980 | 1936 |
| Average particle size | (nm) | 110 | 122 | 99 |
| Number of particles | (particle/cc) | $2.94\times10^{14}$ | $1.78\times10^{14}$ | $3.38\times10^{14}$ |
| Iodine content | (mass%) | 0.24 | 0.23 | 0.23 |
| Amount of -$CH_2$I structure | (mol%) | 0.28 | 0.30 | 0.29 |

Fluorine-containing copolymer compositions were obtained by the same operation as Example 2 using the fluorine-containing copolymers obtained in Examples 21-25, and vulcanization properties, ordinary-state properties, hardness, and compression set were measured. The results are shown in Table 13.

Heat aging test

Test pieces having a dumbbell No. 6 shape were prepared using the crosslinked molded article sheets obtained in Examples 24 and 25. After the test pieces were heat-treated at 250°C for 72 hours, the 100% modulus (M100), the tensile strength at break (TB), the elongation at break (EB), and the hardness of the heat-treated test pieces were measured by the methods described above. Table 13 shows the rate of change in M100, TB, and EB of the heat-treated test pieces relative to the measured values of ordinary-state properties. Table 13 also shows the difference between the hardnesses (Shore A change) of the test pieces before and after the heat treatment.

[Table 13]

Table 13

| | | Example 21 | Example 22 | Example 23 | Example 24 | Example 25 |
|---|---|---|---|---|---|---|
| Formulation | | | | | | |
| Fluorine-containing elastomer | (phr) | 100 | 100 | 100 | 100 | 100 |
| MT carbon | (phr) | 20 | 20 | 20 | 20 | 20 |
| TAIC | (phr) | 4 | 4 | 4 | 4 | 4 |
| Perhexa 25B | (phr) | 1.5 | 1.5 | 1.5 | 1.5 | 1.5 |
| Vulcanization characteristics (160°C) | | | | | | |
| ML | (dNm) | 0.5 | 0.6 | 0.6 | 0.6 | 0.5 |

(continued)

| | | | | | | |
|---|---|---|---|---|---|---|
| Vulcanization characteristics (160°C) | | | | | | |
| MH | (dNm) | 24.0 | 24.2 | 25.0 | 23.9 | 22.0 |
| T10 | (min.) | 1.2 | 1.3 | 1.2 | 1.1 | 1.2 |
| T90 | (min.) | 3.9 | 4.3 | 3.2 | 3.2 | 3.9 |
| Vulcanization conditions | | | | | | |
| Press vulcanization | | 160°C×10min | | | | |
| Oven vulcanization | | 180°C×4h | | | | |
| Ordinary-state properties | | | | | | |
| M100 | (MPa) | 3.6 | 3.0 | 3.2 | 3.0 | 2.8 |
| TB | (MPa) | 24.9 | 20.2 | 20.3 | 24.9 | 24.1 |
| EB | (%) | 338 | 302 | 294 | 339 | 342 |
| ShoreA peak | (point) | 71 | 69 | 68 | 68 | 68 |
| ShoreA 1sec | (point) | 69 | 66 | 65 | 66 | 65 |
| ShoreA 3sec | (point) | 68 | 65 | 64 | 65 | 64 |
| Properties of crosslinked molded article | | | | | | |
| Compression set | (%) | 24 | 27 | 20 | 22 | 28 |
| Heat aging test (250°C×72h) | | | | | | |
| M100 Rate of change in | % | - | - | - | -32 | -32 |
| TB Rate of change in | % | | | | -71 | -70 |
| EB Rate of change in | % | | | | 85 | 86 I |
| ShoreA change peak | point | | | | 0.7 | 0.2 |
| ShoreA change 1sec | point | | | | -0.1 | -0.7 |
| ShoreA change 3sec | point | | | | -1 | -1.7 |

**Claims**

1. A method for producing a fluorine-containing elastomer, comprising emulsion polymerizing a fluorine-containing monomer in an aqueous medium in the presence of

   - a fluorine-containing compound (A) containing (i) a functional group capable of reaction by radical polymerization, preferably a group containing a radically polymerizable unsaturated bond, and (ii) a hydrophilic group, and
   - 3-200 ppm, based on the aqueous medium, of a hydrocarbon surfactant (B),

   and in the absence of a fluorine-containing surfactant.

2. The method of claim 1, wherein the compound (A) and the surfactant (B) are each a compound containing an anionic and/or nonionic hydrophilic group.

3. The method of claim 1 or 2, wherein the hydrophilic group of the compound (A) is $-NH_2$, $-PO_3M$, $-OPO_3M$, $-SO_3M$, $-OSO_3M$, -COOM, $-B(OM)_2$, or $-OB(CM)_2$, wherein M is H, a metal atom, $NR^7_4$, or imidazolium, pyridinium or phosphonium each optionally having a substituent; and $R^7$ each independently is H or an organic group, and any two of them are optionally bonded to each other to form a ring.

4. The method of any of claims 1-3, wherein the compound (A) is a compound of formula (A):

$CX^iX^k{-}{-}CX^jR^a{-}(CZ^1Z^2)_k{-}Y^3$ (A)

wherein $X^i$, $X^j$, and $X^k$ are each independently H, F, Cl or $CF_3$; $Y^3$ is a hydrophilic group; $R^a$ is a linking group; $Z^1$ and $Z^2$ are each independently H, F or $CF_3$; and k is 0 or 1, provided that at least one of $X^i$, $X^k$, $X^j$, $R^a$, $Z^1$, and $Z^2$ contains a fluorine atom, and when k is 0, $R^a$ is a linking group other than a single bond.

**5.** The method of any of claims 1-4, wherein the compound (A) is at least one monomer of any of the formulae (5)-(7):

$CX_2{=}CY{-}CZ_2{-}O{-}Rf{-}Y^3$ (5)

$CX_2{=}CY{-}O{-}Rf{-}Y^3$ (6)

$CX_2{=}CY{-}Rf{-}Y^3$ (7)

wherein

X each independently is H or F,
Y is -H, -F, alkyl or fluoroalkyl,
Z each independently is H, F, alkyl or fluoroalkyl,
Rf is $C_{1-40}$-fluoroalkylene or $C_{2-100}$-fluoroalkylene having an ether bond, and
$Y^3$ is a hydrophilic group.

**6.** The method of any of claims 1-5, wherein the compound (A) is at least one monomer of any of the formulae (5b)-(5d):

$CH_2{=}CF{-}CF_2{-}O{-}Rf{-}Y^3$ (5b)

$CX^2_2{=}CFCF_2{-}O{-}(CF(CF_3)CF_2O)_{n5}{-}CF(CF_3){-}Y^3$ (5c)

$CF_2{=}CFCF_2{-}O{-}Rf{-}Y^3$ (5d)

wherein

Rf is $C_{1-40}$-fluoroalkylene or $C_{2-100}$-fluoroalkylene having an ether bond;
$X^2$ are the same and are F or H,
$Y^3$ is a hydrophilic group; and
n5 is an integer of 0-10.

**7.** The method of any of claims 1-6, wherein the surfactant (B)

- is of the formula $R^{14}{-}Y^3$ (γ) wherein $R^{14}$ is an aliphatic hydrocarbon group not containing a carbonyl group, or an aliphatic hydrocarbon group containing one or more carbonyl groups, and $Y^3$ is a hydrophilic group, and preferably is $-NH_2$, $-PO_3M$, $-OPO_3M$, $-SO_3M$, $-OSO_3M$, -COOM, $-B(OM)_2$, or $-OB(OM)_2$, wherein M is H, a metal atom, $NR^7_4$, or imidazolium, pyridinium or phosphonium each optionally having a substituent; and $R^7$ is H or an organic group and are the same as or different from one another, and any two are optionally bonded to each other to form a ring, or
- is of the formula $CH_3(CH_2)_n{-}Y^5$, wherein n is an integer of 1-2,000, and $Y^5$ is as defined for $Y^3$ above.

**8.** The method of any of claims 1-7, wherein the amount of the compound (A) is 5-5,000 ppm, relative to the aqueous medium.

**9.** The method of any of claims 1-8, wherein, in the polymerization,

- the compound (A) and the surfactant (B) are present in the aqueous medium before the entire polymerization initiator used in the polymerization is present; or
- the surfactant (B) is present in the aqueous medium when the solid concentration of the fluorine-containing elastomer in the aqueous medium is ≤ 1.0 mass%; or
- the hydrocarbon surfactant (B) is present in the aqueous medium before the entire polymerization initiator used in the polymerization is present; or

- the fluorine-containing compound (A) is present in the aqueous medium when the solid concentration of the fluorine-containing elastomer in the aqueous medium is ≤ 1.0 mass%; or
- the fluorine-containing compound (A) is present in the aqueous medium before the entire polymerization initiator used in the polymerization is present.

**10.** The method of any of claims 1-9, wherein the emulsion polymerization is carried out in the presence of a polymerization initiator, and the polymerization initiator is a water-soluble initiator.

**11.** The method of any of claims 1-10, wherein the fluorine-containing elastomer contains $-CH_2-$ in a main chain.

**12.** The method of any of claims 1-11, wherein the fluorine-containing elastomer contains a VdF unit.

**13.** The method of any of claims 1-12, wherein the fluorine-containing elastomer has a VdF/HFP/TFE composition of (32-85)/(10-34)/(0-34) mol%.

**14.** The method of any of claims 1-13, wherein the emulsion polymerization is carried out in the presence of a redox initiator.

**15.** The method of any of claims 1-14, wherein the temperature of the emulsion polymerization is 10-120°C.

**16.** The method of any of claims 1-15, wherein the emulsion polymerization is iodine transfer polymerization or bromine transfer polymerization.

**17.** A composition comprising

- a fluorine-containing elastomer containing a structural unit derived from a fluorine-containing compound (A) containing a functional group capable of reaction by radical polymerization and a hydrophilic group, wherein the fluorine-containing elastomer contains a $-CH_2I$ structure, preferably a $-CF_2CH_2I$ structure, and more preferably a $-CF_2CH_2I$ structure in an amount of 0.05-1.50 mol% based on 100 mol% of the $-CH_2-$ structure; and
- 1-700 ppm, based on the fluorine-containing elastomer, of a hydrocarbon surfactant (B),

and which contains ≤ 10 ppm, based on the fluorine-containing elastomer, of a fluorine-containing surfactant, measured by the method defined in the description.

## Patentansprüche

**1.** Verfahren zur Herstellung eines fluorhaltigen Elastomers, umfassend die Emulsionspolymerisation eines fluorhaltigen Monomers in einem wässrigen Medium in Gegenwart von

- einer fluorhaltigen Verbindung (A), die (i) eine funktionelle Gruppe, die zur Radikalpolymerisation fähig ist, vorzugsweise eine Gruppe, die eine radikalisch polymerisierbare ungesättigte Bindung enthält, und (ii) eine hydrophile Gruppe enthält, und
- 3 bis 200 ppm, bezogen auf das wässrige Medium, eines Kohlenwasserstoff-Tensids (B),

und in Abwesenheit eines fluorhaltigen Tensids.

**2.** Verfahren nach Anspruch 1, bei dem die Verbindung (A) und das Tensid (B) jeweils eine Verbindung sind, die eine anionische und/oder nichtionische hydrophile Gruppe enthält.

**3.** Verfahren nach Anspruch 1 oder 2, wobei die hydrophile Gruppe der Verbindung (A) $-NH_2$, $-PO_3M$, $-OPO_3M$, $-SO_3M$, $-OSO_3M$, -COOM, $-B(OM)_2$ oder $-OB(OM)_2$, ist, wobei M H, ein Metallatom, $NR^7_4$ oder Imidazolium, Pyridinium oder Phosphonium ist, die jeweils optional einen Substituenten aufweisen; und $R^7$ jeweils unabhängig H oder eine organische Gruppe ist und zwei beliebige davon optional miteinander verbunden sind und so einen Ring bilden.

**4.** Verfahren nach mindestens einem der Ansprüche 1-3, bei dem die Verbindung (A) eine Verbindung der Formel (A) ist:

$$CX^iX^k=CX^jR^a-(CZ^1Z^2)_k-Y^3 \quad (A)$$

worin $X^i$, $X^j$ und $X^k$ jeweils unabhängig H, F, Cl oder $CF_3$ bedeuten; $Y^3$ eine hydrophile Gruppe ist; $R^a$ eine Verbindungsgruppe ist; $Z^1$ und $Z^2$ jeweils unabhängig H, F oder $CF_3$ bedeuten; und k 0 oder 1 ist, mit der Maßgabe, dass mindestens eines aus $X^i$, $X^k$, $X^j$, $R^a$, $Z^1$ und $Z^2$ ein Fluoratom enthält, und wenn k 0 ist, $R^a$ eine andere Verbindungsgruppe als eine Einfachbindung ist.

**5.** Verfahren nach mindestens einem der Ansprüche 1-4, bei dem die Verbindung (A) mindestens ein Monomer einer beliebigen der Formeln (5) bis (7) ist:

$CX_2$=CY-$CZ_2$-O-Rf-$Y^3$ (5)

$CX_2$=CY-O-Rf -$Y^3$ (6)

$CX_2$=CY-Rf-$Y^3$ (7)

worin

X jeweils unabhängig H oder F ist,
Y -H, -F, Alkyl oder Fluoralkyl ist,
Z jeweils unabhängig H, F, Alkyl oder Fluoralkyl ist,
Rf $C_{1-40}$-Fluoralkylen oder $C_{2-100}$-Fluoralkylen mit einer Etherbindung ist und
$Y^3$ eine hydrophile Gruppe ist.

**6.** Verfahren nach mindestens einem der Ansprüche 1-5, bei dem die Verbindung (A) mindestens ein Monomer einer beliebigen der Formeln (5b) bis (5d) ist:

$CH_2$=CF-$CF_2$-O-Rf-$Y^3$ (5b)

$CX^2_2$=$CFCF_2$-O-($CF(CF_3)CF_2O)_{n5}$-$CF(CF_3)$-$Y^3$ (5c)

$CF_2$=$CFCF_2$-O-Rf-$Y^3$ (5d)

worin

Rf $C_{1-40}$-Fluoralkylen oder $C_{2-100}$-Fluoralkylen mit einer Etherbindung ist;
$X^2$ gleich sind und F oder H sind,
$Y^3$ eine hydrophile Gruppe ist; und
n5 eine ganze Zahl von 0 bis 10 ist.

**7.** Verfahren nach mindestens einem der Ansprüche 1-6, bei dem das Tensid (B)

- die Formel $R^{14}$-$Y^3$ ($\gamma$) aufweist, worin $R^{14}$ eine aliphatische Kohlenwasserstoffgruppe ohne Carbonylgruppe oder eine aliphatische Kohlenwasserstoffgruppe mit einer oder mehreren Carbonylgruppen ist, und $Y^3$ eine hydrophile Gruppe ist, und vorzugsweise -$NH_2$, -$PO_3M$, -$OPO_3M$, -$SO_3M$, -$OSO_3M$, -COOM,
- $B(OM)_2$ oder -$OB(OM)_2$ ist, worin M H, ein Metallatom, $NR^7_4$ oder Imidazolium, Pyridinium oder Phosphonium ist, die jeweils optional einen Substituenten aufweisen; und $R^7$ H oder eine organische Gruppe ist und gleich oder verschieden ist, und zwei beliebige optional miteinander verbunden sind und so einen Ring bilden, oder
- die Formel $CH_3$-$(CH_2)_n$-$Y^5$ aufweist, worin n eine ganze Zahl von 1 bis 2000 ist und $Y^5$ wie oben für $Y^3$ definiert ist.

**8.** Verfahren nach mindestens einem der Ansprüche 1-7, bei dem die Menge der Verbindung (A) 5 bis 5000 ppm, bezogen auf das wässrige Medium, beträgt.

**9.** Verfahren nach mindestens einem der Ansprüche 1-8, bei dem bei der Polymerisation

- die Verbindung (A) und das Tensid (B) in dem wässrigen Medium vorhanden sind, bevor der gesamte bei der Polymerisation verwendete Polymerisationsinitiator vorhanden ist; oder
- das Tensid (B) in dem wässrigen Medium vorhanden ist, wenn die Feststoffkonzentration des fluorhaltigen

Elastomers in dem wässrigen Medium ≤ 1,0 Massen-% beträgt; oder
- das Kohlenwasserstoff-Tensid (B) in dem wässrigen Medium vorhanden ist, bevor der gesamte bei der Polymerisation verwendete Polymerisationsinitiator vorhanden ist; oder
- die fluorhaltige Verbindung (A) in dem wässrigen Medium vorhanden ist, wenn die Feststoffkonzentration des fluorhaltigen Elastomers in dem wässrigen Medium ≤ 1,0 Massen-% beträgt; oder
- die fluorhaltige Verbindung (A) in dem wässrigen Medium vorhanden ist, bevor der gesamte bei der Polymerisation verwendete Polymerisationsinitiator vorhanden ist.

**10.** Verfahren nach mindestens einem der Ansprüche 1-9, bei dem die Emulsionspolymerisation in Gegenwart eines Polymerisationsinitiators durchgeführt wird und der Polymerisationsinitiator ein wasserlöslicher Initiator ist.

**11.** Verfahren nach mindestens einem der Ansprüche 1-10, bei dem das fluorhaltige Elastomer $-CH_2-$ in einer Hauptkette enthält.

**12.** Verfahren nach mindestens einem der Ansprüche 1-11, bei dem das fluorhaltige Elastomer eine VdF-Einheit enthält.

**13.** Verfahren nach mindestens einem der Ansprüche 1-12, bei dem das fluorhaltige Elastomer eine VdF/HFP/TFE-Zusammensetzung von (32-85)/(10-34)/(0-34) Mol-% aufweist.

**14.** Verfahren nach mindestens einem der Ansprüche 1-13, bei dem die Emulsionspolymerisation in Gegenwart eines Redoxinitiators durchgeführt wird.

**15.** Verfahren nach mindestens einem der Ansprüche 1-14, bei dem die Temperatur der Emulsionspolymerisation 10 bis 120°C beträgt.

**16.** Verfahren nach mindestens einem der Ansprüche 1-15, bei dem die Emulsionspolymerisation eine Iodtransferpolymerisation oder eine Bromtransferpolymerisation ist.

**17.** Zusammensetzung, umfassend

- ein fluorhaltiges Elastomer, das eine Struktureinheit enthält, die von einer fluorhaltigen Verbindung (A) abgeleitet ist, die eine funktionelle Gruppe, die zur Radikalpolymerisation fähig ist, und eine hydrophile Gruppe enthält, wobei das fluorhaltige Elastomer eine $-CH_2I$-Struktur, vorzugsweise eine $-CF_2CH_2I$-Struktur und noch bevorzugter eine $-CF_2CH_2I$-Struktur in einer Menge von 0,05 bis 1,50 Mol-%, bezogen auf 100 Mol-% der $-CH_2$-Struktur, enthält; und
- 1-700 ppm, bezogen auf das fluorhaltige Elastomer, eines Kohlenwasserstoff-Tensids (B),

und die ≤ 10 ppm, bezogen auf das fluorhaltige Elastomer, eines fluorhaltigen Tensids enthält, gemessen nach dem in der Beschreibung definierten Verfahren.

## Revendications

**1.** Procédé de production d’un élastomère contenant du fluor, comprenant la polymérisation en émulsion d’un monomère contenant du fluor dans un milieu aqueux en présence de

- un composé contenant du fluor (A) contenant (i) un groupe fonctionnel capable de réagir par polymérisation radicalaire, de préférence un groupe contenant une liaison insaturée polymérisable par voie radicalaire, et (ii) un groupe hydrophile, et
- 3 à 200 ppm, sur la base du milieu aqueux, d’un tensioactif hydrocarboné (B),

et en l’absence d’un tensioactif contenant du fluor.

**2.** Le procédé selon la revendication 1, dans lequel le composé (A) et l’agent tensioactif (B) sont chacun un composé contenant un groupe hydrophile anionique et/ou non ionique.

**3.** Le procédé selon la revendication 1 ou 2, dans lequel le groupe hydrophile du compose (A) est $-NH_2$, $-PO_3M$, $-OPO_3M$, $-SO_3M$, $-OSO_3M$, - COOM, $-B(OM)_2$, ou $-OB(OM)_2$, dans lequel M est H, un atome métallique, $NR^7_4$, ou

imidazolium, pyridinium ou phosphonium chacun ayant optionnellement un substituant ; et $R^7$ est chacun indépendamment H ou un groupe organique, et deux quelconque de ceux-ci sont optionnellement liés l'un à l'autre pour former un cycle.

**4.** Le procédé selon l'une quelconque des revendications 1 à 3, dans lequel le composé (A) est un composé de formule (A) :

$$CX^iX^k=CX^jR^a-(CZ^1Z^2)_kY^3 \qquad (A)$$

dans laquelle $X^i$, $X^j$, et $X^k$ sont chacun indépendamment H, F, Cl ou $CF_3$ ; $Y^3$ est un groupe hydrophile ; $R^a$ est un groupe de liaison ;
$Z^1$ et $Z^2$ sont chacun indépendamment H, F ou $CF_3$ ; et k est 0 ou 1, à condition que au moins l'un de $X^i$, $X^k$, $X^j$, $R^a$, $Z^1$, et $Z^2$ contienne un atome de fluor, et lorsque k est 0, $R^a$ est un groupe de liaison autre qu'une liaison simple.

**5.** Le procédé selon l'une quelconque des revendications 1 à 4, dans lequel le composé (A) est au moins un monomère de l'une quelconque des formules (5)-(7) :

$$CX_2=CY-CZ_2-O-Rf-Y^3 \qquad (5)$$

$$CX_2=CY-O-Rf-Y^3 \qquad (6)$$

$$CX_2=CY-Rf-Y^3 \qquad (7)$$

dans lesquelles

X est chacun indépendamment H ou F,
Y est -H, -F, alkyle ou fluoroalkyle,
Z est chacun indépendamment H, F, alkyle ou fluoroalkyle,
Rf est un groupe $C_{1-40}$-fluoroalkyle ou $C_{2-100}$-fluoroalkylène ayant une liaison éther, et
$Y^3$ est un groupe hydrophile.

**6.** Le procédé selon l'une quelconque des revendications 1 à 5, dans lequel le composé (A) est au moins un monomère de l'une quelconque des formules (5b)-(5d) :

$$CH_2=CF-CF_2-O-Rf-Y^3 \qquad (5b)$$

$$CX^2_2=CFCF_2-O-(CF(CF_3)CF_{20})_{n5}-CF(CF_3)-Y^3 \qquad (5c)$$

$$CF_2=CFCF_2-O-Rf-Y^3 \qquad (5d)$$

dans lesquelles

Rf est un groupe $C_{1-40}$-fluoroalkyle ou $C_{2-100}$-fluoroalkylène ayant une liaison éther, et
$X^2$ sont identiques et sont F ou H,
$Y^3$ est un groupe hydrophile ; et
n5 est un entier de 0 à 10.

**7.** Le procédé selon l'une quelconque des revendications 1 à 6, dans lequel le tensioactif (B)

- est de la formule $R^{14}-Y^3$ ($\gamma$) dans laquelle $R^{14}$ est un groupe hydrocarboné aliphatique ne contenant pas de groupe carbonyle, ou un groupe hydrocarboné aliphatique contenant un ou plusieurs groupes carbonyles, et $Y^3$ est un groupe hydrophile, et est de préférence $-NH_2$, $-PO_3M$, $-OPO_3M$, $-SO_3M$, $-OSO_3M$, -COOM, $-B(OM)_2$, ou $-OB(OM)_2$, où M est H, un atome métallique, NR74, ou un groupe imidazolium, pyridinium ou phosphonium ayant chacun éventuellement un substituant ; et R7 est H ou un groupe organique et sont identiques ou différents les uns des autres, et deux d'entre eux sont éventuellement liés l'un à l'autre pour former un cycle, ou
- est de la formule $CH_3(CH_2)_n-Y^5$, dans laquelle n est un entier de 1 à 2000, et $Y^5$ est tel que défini pour $Y^3$ ci-

dessus.

**8.** Le procédé selon l'une quelconque des revendications 1 à 7, dans lequel la quantité du composé (A) est de 5 à 5000 ppm, par rapport au milieu aqueux.

**9.** Le procédé selon l'une quelconque des revendications 1 à 8, dans lequel, dans la polymérisation,

- le composé (A) et le tensioactif (B) sont présents dans le milieu aqueux avant que l'initiateur de polymérisation utilisé dans la polymérisation ne soit entièrement présent ; ou
- le tensioactif (B) est présent dans le milieu aqueux lorsque la concentration solide de l'élastomère fluoré dans le milieu aqueux est ≤ 1,0 % en masse ; ou
- le tensioactif hydrocarboné (B) est présent dans le milieu aqueux avant que l'initiateur de polymérisation utilisé dans la polymérisation ne soit présent dans son intégralité ; ou
- le composé fluoré (A) est présent dans le milieu aqueux lorsque la concentration en solides de l'élastomère fluoré dans le milieu aqueux est ≤ 1,0 % en masse ; ou
- le composé fluoré (A) est présent dans le milieu aqueux avant que la totalité de l'initiateur de polymérisation utilisé dans la polymérisation ne soit présente.

**10.** Le procédé selon l'une quelconque des revendications 1 à 9, dans lequel la polymérisation en émulsion est effectuée en présence d'un initiateur de polymérisation, et l'initiateur de polymérisation est un initiateur soluble dans l'eau.

**11.** Le procédé selon l'une quelconque des revendications 1 à 10, dans lequel l'élastomère fluoré contient $-CH_2-$ dans une chaîne principale.

**12.** Le procédé selon l'une quelconque des revendications 1 à 11, dans lequel l'élastomère fluoré contient un motif VdF.

**13.** Le procédé selon l'une quelconque des revendications 1 à 12, dans lequel l'élastomère contenant du fluor a une composition VdF/HFP/TFE de (32-85)/(10-34)/(0-34) % en moles.

**14.** Le procédé selon l'une quelconque des revendications 1 à 13, dans lequel la polymérisation en émulsion est effectuée en présence d'un initiateur redox.

**15.** Le procédé selon l'une quelconque des revendications 1 à 14, dans lequel la température de la polymérisation en émulsion est de 10 à 120 °C.

**16.** Le procédé selon l'une quelconque des revendications 1 à 15, dans lequel la polymérisation en émulsion est une polymérisation par transfert d'iode ou une polymérisation par transfert de brome.

**17.** Composition comprenant

- un élastomère contenant du fluor contenant une unité structurale dérivée d'un composé contenant du fluor (A) contenant un groupe fonctionnel capable de réagir par polymérisation radicalaire et un groupe hydrophile, dans lequel l'élastomère contenant du fluor contient une structure $-CH_2I$, de préférence une structure $-CF_2CH_2I$, et de préférence encore une structure $-CF_2CH_2I$ en une quantité de 0,05 à 1,50 % en moles par rapport à 100 % en moles de la structure $-CH_2-$ ; et
- 1 à 700 ppm, par rapport à l'élastomère contenant du fluor, d'un tensioactif hydrocarboné (B),

et qui contient ≤ 10 ppm, par rapport à l'élastomère contenant du fluor, d'un tensioactif contenant du fluor, mesuré par la méthode définie dans la description.

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- WO 2008001895 A
- JP 2005320499 A
- JP 2005320500 A
- WO 2012111770 A
- EP 3031856 A
- WO 2013542308 A
- WO 2013542309 A
- WO 2013542310 A
- US 6841616 B
- WO 2018062448 A
- WO 2018062449 A
- WO 201818906 A
- WO 201818907 A
- JP 53003495 A
- JP 11147891 A
- US 20070015864 A
- US 20070015865 A
- US 20070015866 A
- US 20070276103 A
- US 20070117914 A
- US 2007142541 A
- US 20080015319 A
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531 A
- WO 2013189824 A
- WO 2013189826 A


### Non-patent literature cited in the description


- *KOBUNSHI RONBUNSHU (Japanese Journal of Polymer Science and Technology)*, October 1992, vol. 49 (10), 765-783